# EUROPÄISCHE PATENTANMELDUNG

(11) **EP 3 290 663 A1**
(43) Veröffentlichungstag der Anmeldung: **07.03.2018**
(21) Anmeldenummer: 17185120.7
(22) Anmeldetag: 07.08.2017
(51) Int. Cl.: F01L 1/344, B01D 35/06, B01D 35/153, B01D 36/04, B01D 29/21, B01D 29/90

(54) **PARTIKELABSCHEIDESYSTEM**

(30) Priorität: 10.08.2016 DE 102016214914
(71) Anmelder: Schwäbische Hüttenwerke Automotive GmbH, 73433 Aalen-Wasseralfingen (DE)
(72) Erfinder: Uwe, Meinig, 88348 Bad Saulgau (DE); Bohner, Jürgen, 88339 Bad Waldsee (DE)
(74) Vertreter: Schwabe - Sandmair - Marx

(57) **Zusammenfassung**

Nockenwellenphasenverstellers mit gereinigtem Motorschmieröl als Druckmedium, wobei der Nockenwellenphasenversteller (10) einen drehantreibbaren Stator (11), einen mit einer Nockenwelle (6) verbundenen oder verbindbaren Rotor (12) und ein Steuerventil (13-19) zur hydraulischen Verstellung der Drehwinkelposition des Rotors (12) relativ zum Stator (11) aufweist, das Partikelabscheidesystem umfassend:
1.1 einen Hauptölabscheider (3), der im Strom des Motorschmieröls stromauf einer Schmierölgalerie (5) eines mit dem Motorschmieröl zu versorgenden Verbrennungsmotors angeordnet ist und für Partikel mit einer Partikelgröße P1 einen Abscheidegrad von wenigstens 50% und bei einer Partikelgröße P2 > P1 einen Abscheidegrad von wenigstens 90% aufweist,
1.2 und einen Partikelabscheider (20; 30; 40; 50; 80), der stromab des Hauptölabscheiders (3) und stromauf des Nockenwellenphasenverstellers (10) oder des Steuerventils (13-19) angeordnet ist, um das Motorschmieröl für den Nockenwellenphasenversteller (10) zu reinigen,
1.3 wobei der Partikelabscheider (20; 30; 40; 50; 80) bei einer Partikelgröße P3, mit P1 < P3 < 100 µm, einen Abscheidegrad von 50% aufweist.

## Beschreibung

Die Erfindung betrifft ein Partikelabscheidesystem zur Versorgung eines hydraulischen Nockenwellenphasenverstellers mit Motorschmieröl als Druckmedium. Das Partikelabscheidesystem ist in einen Schmierölkreis eines Verbrennungsmotors integriert oder für den Einbau in den Schmierölkreis vorgesehen.

Hydraulische Nockenwellenphasenversteller werden typischerweise mit Motorschmieröl versorgt, das im Phasenversteller als Druckmedium zur Verstellung der Phasenlage einer Nockenwelle relativ zu einer antreibenden Kurbelwelle eines Verbrennungsmotors dient. Der Phasenversteller ist an den Schmierölkreis des Motors angeschlossen und wird daher über den sogenannten Hauptölabscheider des Schmierölkreises mit dem Schmieröl versorgt. Trotz der Reinigung im Hauptölabscheider ist es üblich, ein Filtersieb im Phasenversteller anzuordnen, um vor allem Urschmutz vom Phasenversteller fernzuhalten.

Die EP 2 578 818 B1 offenbart die Anordnung eines Filtersiebs im Bereich des Druckanschlusses eines Steuerventils des Phasenverstellers. Bekannt ist auch die Anordnung von Filtermanschetten um die Arbeitsanschlüsse des Steuerventils. Wegen der kleinen Einbauräume und der gleichzeitig bestehenden Forderung nach möglichst geringen Druckverlusten, aber auch wegen der Forderung nach einer ausreichenden mechanischen Festigkeit des Filtersiebs kommen als Filtermedien Metallgewebe, Kunststoffgewebe oder dünne, perforierte Bleche zum Einsatz. Die mittlere Maschenweite oder Öffnungsweite der Sieböffnungen liegt deutlich oberhalb von 100 µm, typischerweise bei etwa 200 µm und mehr. Trotz der Reinigung im Hauptölabscheider und der Reinigung im Phasenversteller sind Funktionsstörungen des Phasenverstellers und Reibverschleiß der relativ zueinander beweglichen Teile des Phasenverstellers ein Problem.

Durch systematische Versuche mit unterschiedlichen Schmutzmischungen, sogenannte Missbrauchsversuche, haben die Erfinder herausgefunden, dass bereits Feststoffpartikel mit Partikelabmessungen von unter 100 µm Reibverschleiß vor allem an den hydraulischen Funktionskomponenten der Steuerventile und der Lagerung der Magnetanker der elektromagnetischen Ventilaktuatoren und auch unmittelbar Funktionsstörungen dieser Komponenten von Phasenverstellern verursachen. So besteht beispielsweise die Gefahr, dass derartige Partikel in einem Steuerventil eines Phasenverstellers zum Blockieren des Ventilkolbens führen. Als problematisch haben sich insbesondere auch Sand- und Korundpartikel erwiesen. Derartige Partikel können in der Produktion der Motoren als Gusssand und Strahlgut in die Ölkanäle der Zylinderkurbelgehäuse gelangen und trotz der Reinigung des Schmieröls im Hauptölabscheider und der zusätzlich in den Phasenverstellern angeordneten Filtersiebe mit einer gewissen statistischen Wahrscheinlichkeit zu Funktionsstörungen des Phasenverstellers führen.

Es ist eine Aufgabe der Erfindung, ein Partikelabscheidesystem für im Motorschmieröl enthaltene Feststoffpartikel zu schaffen, das Partikel, die einen Nockenwellenphasenversteller schädigen können, wirksam abscheidet, um Funktionsstörungen des Phasenverstellers und grundsätzlich auch den Reibverschleiß beweglicher Teile des Phasenverstellers zu verringern. Trotz des wirksamen Schutzes gegen Schmutzpartikeleintrag und damit verbundene Funktionsstörungen soll das Partikelabscheidesystem über einen langen Zeitraum wartungsfrei arbeiten. Für die Anwendung im Kraftfahrzeugbau wird angestrebt, dass das Partikelabscheidesystem wartungsfrei oder zumindest wartungsarm über die Lebensdauer des Verbrennungsmotors des jeweiligen Fahrzeugs arbeitet und den zugeordneten oder die mehreren zugeordneten Nockenwellenphasenversteller über die Lebensdauer des Verbrennungsmotors wirksam schützt. Insbesondere im Nutzfahrzeugbau ist dies ein anspruchsvolles Ziel. Bei Einsatz des Partikelabscheidesystems in Lastkraftwagen werden beispielsweise Betriebsdauern von 15 000 bis 30 000, zum Teil bis zu 50 000 Stunden gefordert.

Die Erfindung geht von einem Partikelabscheidesystem zur Versorgung eines hydraulischen Nockenwellenphasenverstellers mit Motorschmieröl als Druckmedium aus, das einen Hauptölabscheider und zusätzlich einen Partikelabscheider umfasst, der stromab des Hauptölabscheiders und stromauf des Nockenwellenphasenverstellers, das heißt zwischen dem Hauptölabscheider und dem Nockenwellenphasenversteller oder einem Steuerventil des Phasenverstellers, optional teilweise im Nockenwellenphasenversteller, angeordnet ist. Bei dem Hauptölabscheider handelt es sich um den Hauptölabscheider des Schmierölkreises des jeweiligen Verbrennungsmotors. Der Hauptölabscheider ist demgemäß im Strom des Motorschmieröls stromauf einer Schmierölgalerie des mit dem Motorschmieröl zu versorgenden Verbrennungsmotors angeordnet und dient somit der Reinigung des gesamten Motorschmieröls, das dem Verbrennungsmotor über die Schmierölgalerie zuführbar ist. Für derartige Abscheider ist auch die Bezeichnung 'Hauptstromölabscheider' oder 'Motorschmierölfilter' gebräuchlich.

Wenn es heißt, dass der Partikelabscheider stromauf des Nockenwellenphasenverstellers angeordnet ist, wird eine Anordnung des Partikelabscheiders im strömungstechnischen Sinne stromauf des Phasenverstellers verstanden. So kann der Partikelabscheider oder eine Abscheidestufe des Partikelabscheiders in einem Stator des Phasenverstellers angeordnet sein. Das Schmieröl durchströmt den im Stator vorgesehenen Partikelabscheider oder die im Stator vorgesehene Abscheidestufe eines mehrstufigen Partikelabscheiders, bevor es zum Druckanschluss des Steuerventils des Phasenverstellers gelangt. Das Steuerventil wird als Bestandteil des Phasenverstellers verstanden. Der Partikelabscheider oder eine Abscheidestufe eines mehrstufigen Partikelabscheiders ist in derartigen Ausführungen stromauf des Steuerventils, d. h. stromauf eines Druckanschlusses des Steuerventils, angeordnet. Das Steuerventil wird somit wirksam geschützt, der Partikelabscheider oder die Abscheidestufe kann aber dennoch frei von Einbaubegrenzungen, die das Steuerventil vorgeben würde, verwirklicht werden. Das Steuerventil, insbesondere ein beweglicher Ventilkolben des Steuerventils, ist eine hinsichtlich der Gefahr des Blockierens durch Schmutzpartikel besonders kritische Komponente von Phasenverstellern.

Die Wirksamkeit in Bezug auf die Abscheidung von Feststoffpartikeln kann für Abscheider im Allgemeinen und Abscheider im Motorschmierölkreis im Speziellen durch einen oder mehrere Abscheidegrade oder eine vollständige Abscheidekurve beschrieben werden. Unterschiedlichste Abscheider können durch einen oder mehrere Abscheidegrade oder ihre vollständigen Abscheidekurven voneinander unterschieden werden. Der Abscheidegrad ist definiert als das Verhältnis der vom jeweiligen Abscheider oder Abscheidesystem abgeschiedenen zu der in den Abscheider oder das Abscheidesystem eingetragenen Menge des abzutrennenden Stoffes, bei dem es sich vorliegend um Feststoffpartikel ab einer Partikelmindestgröße handelt. Anstelle der Menge kann ebenso die Konzentration der abzuscheidenden Partikel verwendet werden. Beträgt die eingetragene Konzentration c₀ und die erzielte Konzentration c₁, so ist der Abscheidegrad η definiert als η = (c₀ - c₁) / c₀.

Wenn im Folgenden von einem Abscheidegrad die Rede ist, so ist stets der Abscheidegrad in Abhängigkeit von einem gemittelten Partikeldurchmesser der abzutrennenden Feststoffpartikel gemeint. Der gemittelte Partikeldurchmesser wird im Folgenden einfach als Partikelgröße bezeichnet. So bedeutet beispielsweise die Angabe "Abscheidegrad von 50 % bei einer Partikelgröße von 50 µm", dass der betreffende Abscheider 50 % der im Motorschmieröl enthaltenen Feststoffpartikel, die eine Partikelgröße von 50 µm aufweisen, abscheidet und 50 % der Feststoffpartikel mit einer Partikelgröße von 50 µm passieren lässt. Die Partikelgröße der im Allgemeinen unregelmäßig geformte Partikel wird aus der bekannten Dichte und dem durch Messung ermittelten Volumen oder der durch Messung ermittelten Masse der Feststoffpartikel als Durchmesser einer dem Volumen oder der Masse der Partikel äquivalenten Kugel bestimmt. Es handelt sich um die Partikelgröße mit dem Index 3. Die Angabe 'Partikelgröße P von x µm' bedeutet somit, dass die Partikel mit der Partikelgröße P ein Volumen oder eine Masse haben, das oder die dem Volumen oder der Masse einer Kugel mit dem Durchmesser x äquivalent ist. In der Filtrationstechnik bezeichnet man diesen Abscheidegrad als η₃.

Der Hauptölabscheider weist bei einer Partikelgröße P1, das heißt für Partikel der Partikelgröße P1, einen Abscheidegrad von 50 % und bei einer Partikelgröße P2, das heißt für Partikel der Partikelgröße P2, wobei die Partikelgröße P2 größer als die Partikelgröße P1 ist, einen Abscheidegrad von wenigstens 90 % auf. Die Partikelgröße P1 kann beispielsweise zwischen 10 µm und 20 µm und insbesondere zwischen 12 und 15 µm liegen, wobei die unteren und oberen Grenzen der Partikelgröße jeweils eingeschlossen sind. Die Partikelgröße P2 kann beispielsweise zwischen 30 µm und 50 µm, insbesondere zwischen 30 und 40 µm liegen, wobei die unteren und die oberen Grenzen wiederum eingeschlossen sind. Die Abscheidegrade können den Abscheidegraden der im Kraftfahrzeugbau üblichen Hauptölabscheider entsprechen. Beim Hauptölabscheider kann es sich um einen in Kraftfahrzeugen üblichen Hauptstromölabscheider handeln.

Nach der Erfindung weist der stromab des Hauptölabscheiders angeordnete Partikelabscheider bei einer Partikelgröße P3, die größer als P1, aber kleiner als 100 µm ist, einen Abscheidegrad von 50 % η_{3,50} auf. In einem Diagramm, das Abscheidegrade des jeweiligen Abscheiders in Abhängigkeit von der Partikelgröße darstellt, ist die Abscheidekurve des Partikelabscheiders daher auf der Abszisse gegenüber der Abscheidekurve des Hauptölabscheiders nach rechts, in Richtung zunehmender Partikelgröße, versetzt.

Der stromab des Hauptölabscheiders angeordnete, erfindungsgemäße Partikelabscheider weist in bevorzugten Ausführungen bis zur Partikelgröße P2, das heißt für Partikel der Partikelgröße P2 und kleiner, einen Abscheidegrad von höchstens 50 % auf, erreicht den Abscheidegrad von 50 % somit erst bei einer Partikelgröße P3 > P2.

Aufgrund der erfindungsgemäßen Abstimmung des Partikelabscheiders in Bezug auf den Hauptölabscheider werden die von den Erfindern als besonders schädigend und/oder die Funktion akut gefährdend identifizierten Feststoffpartikel, deren Partikelgröße kleiner als 100 µm, aber größer als P1 oder, in bevorzugten Ausführungen, größer als P2 ist, wirksam abgeschieden. Für Partikel im oberen Größenbereich des abscheidbaren Spektrums, beispielsweise für Partikel mit Partikelgrößen zwischen 70 µm und 90 µm, liegt der Abscheidegrad in vorteilhaften Ausführungen über 50 %. Der Partikelabscheider scheidet einen überwiegenden Teil der von den Erfindern als kritisch identifizierten Partikel ab, was die bekannten Filtersiebe nicht leisten können. Der Partikelabscheider reinigt das Motorschmieröl von Partikeln, die den Hauptölabscheider eigentlich nicht hätten passieren dürfen, den Hauptölabscheider umgangen haben, beispielsweise während des Kaltstarts, oder erst stromab des Hauptölabscheiders in den Schmierölkreis eingetragen oder losgerissen wurden. Da der Partikelabscheider gröber als der Hauptölabscheider ist, wird einem vorzeitigen Verbrauch und der Gefahr der Verstopfung durch abgeschiedene Feststoffpartikel entgegengewirkt. Auf diese Weise wird eine wirksame Abscheidung speziell der als kritisch identifizierten Feststoffpartikel mit einer zugleich langen wartungsfreien Betriebszeit erzielt.

Für einen wartungsfreien Betrieb und/oder eine lange Lebensdauer ist günstig, wenn der Abscheidegrad des Partikelabscheiders für Partikel bis zur Partikelgröße P2 höchstens 30 % oder, wie bevorzugt, höchstens 10 % ist. Eine besonders günstige Abstimmung auf die Abscheideeigenschaften des Hauptölabscheiders kann dadurch erreicht werden, dass die Abscheidekurve des Partikelabscheiders mit der Abscheidekurve des Hauptölabscheiders nicht mehr überlappt, sondern erst oberhalb oder idealerweise bei der Partikelgröße P2 einsetzt.

In vorteilhaften Ausführungen weist der Partikelabscheider bei einer Partikelgröße P4 von weniger als 100 µm einen gravimetrischen Abscheidegrad von wenigstens 90 % auf. Von Vorteil ist, wenn die Partikelgröße P4 höchstens 90 µm oder höchstens 80 µm ist. Der Partikelabscheider weist in derartigen Ausführungen für Partikel ab einer Partikelgröße von 90 µm oder, wie bevorzugt, für Partikel ab einer Partikelgröße von 80 µm einen Abscheidegrad von wenigstens 90 % auf. Ebenso ist von Vorteil, wenn der Partikelabscheider für Feststoffpartikel der Partikelgröße P4 und größer einen Abscheidegrad von wenigstens 95 % oder von 100 % aufweist.

Im Motorschmieröl sind Schmutzpartikel aus unterschiedlichen Materialien enthalten. Typischerweise enthält Motorschmieröl Sandpartikel, Korundpartikel, Metallpartikel und/oder Rußpartikel. Die Abscheideeigenschaften von Abscheidern sind nicht nur von der Partikelgröße, sondern auch vom Material der Partikel abhängig. Die spezifizierten Abscheidegrade gelten zumindest für Partikel aus einem Material aus der Gruppe von Materialien bestehend aus Sand, Korund, Metall und Metalllegierungen, wobei das Metall und die Metalllegierungen insbesondere Eisen, Eisenbasislegierungen, Aluminium und Aluminiumbasislegierungen sein können. Vorteilhafterweise gelten die Abscheidegrade zumindest für Korundpartikel und/oder Sandpartikel der jeweiligen Partikelgröße. Zur Ermittlung der Abscheidegrade werden in bevorzugten Prüfverfahren einem Reinöl daher Sandpartikel und/oder Korundpartikel der jeweiligen Partikelgröße zugesetzt. Sandpartikel und Korundpartikel tragen zum einen in besonderem Maße zur Schädigung beweglicher Teile von Nockenwellenphasenverstellern bei und sind zum anderen aufgrund der Kompaktheit der Partikel für Prüf- und Vergleichszwecke gut geeignet. Sie kommen der Kugelform näher als beispielsweise Metallspäne.

Die Abscheidegrade können unter Verwendung eines Teststaubs aus Partikeln der jeweiligen Partikelgröße in einem Singlepass- oder Multipass-Prüfverfahren mittels optischer Auswertung mit Partikelzählung oder gravimetrischer Auswertung mittels Gewichtsanalyse ermittelt werden. So können die Abscheidegrade beispielsweise in einem Multipass-Prüfverfahren nach ISO 4548-12 ermittelt werden, um nur ein Beispiel zu nennen.

Hinsichtlich der Partikelgröße sei noch angemerkt, dass einer angegebenen Partikelgröße diejenigen Partikel zugerechnet werden, deren Partikelgröße um höchstens 5 % vom angegebenen Zahlenwert abweicht. Wird als Partikelgröße beispielsweise 100 µm angegeben, so werden zu dieser Partikelgröße alle Partikel mit einer Partikelgröße zwischen 95 und 105 µm gerechnet. Wird für die Partikelgröße ein Größenbereich angegeben, beispielsweise 10 µm bis 20 µm, sind besagte 5 % bereits in den Zahlenwerten für die Bereichsgrenzen einbezogen.

Der Partikelabscheider kann in der Zuführung des Motorschmieröls nur für einen einzigen Nockenwellenphasenversteller oder für mehrere Nockenwellenphasenversteller gemeinsam vorgesehen sein. Entsprechend kann der Partikelabscheider in ersten Ausführungen dafür ausgelegt sein, nur einen einzigen Nockenwellenphasenversteller vor Schmutzpartikeln zu schützen und in zweiten Ausführungen dafür ausgelegt sein, ein System von mehreren Nockenwellenphasenverstellern vor Schmutzpartikeln zu schützen. Der Partikelabscheider kann in einem Schmierölstrom angeordnet sein, der nach Reinigung mittels des Partikelabscheiders nicht nur einem oder mehreren Nockenwellenphasenversteller(n) zugeführt, sondern in zwei oder mehr Teilströme aufgefächert wird, wobei einer oder mehrere der Teilströme einem oder mehreren anderen Verbraucher(n), beispielsweise einem Turbolader und/oder einem hydraulischen Ventiltriebsausgleichselement, zugeführt wird oder werden. In vorteilhaften Ausführungen wird das vom Partikelabscheider gereinigte Schmieröl aber direkt nur einem oder mehreren Phasenversteller(n) zugeführt.

Der Partikelabscheider wird derart ausgelegt, dass bei Berücksichtigung üblicher Schmutzgrößenverteilungsspektren im Motorschmieröl kleine, die Funktion des einzelnen Nockenwellenphasenverstellers oder das Verstellersystem gefährdende Partikel abgeschieden werden, die die aus dem Stand der Technik bekannten, im Nockenwellenphasenversteller angeordneten Filtersiebe bislang passieren. Andererseits ist die Auslegung so, dass eine Überladung und damit eine Funktionsstörung des in seinen konstruktiv verwirklichbaren Bauabmessungen begrenzten Partikelabscheiders über möglichst lange Betriebsdauern, bevorzugt über die gesamte Lebensdauer des Verbrennungsmotors, vermieden wird. Eine erfindungsgemäße Maßnahme besteht daher darin, den Partikelabscheider insgesamt oder wenigstens eine Abscheidestufe des Partikelabscheiders stromauf des Phasenverstellers oder Phasenverstellersystems anzuordnen.

In ersten Ausführungen umfasst der Partikelabscheider nur eine einzige Abscheidestufe, ist also einstufig.

In zweiten Ausführungen erfolgt die Abscheidung durch den Partikelabscheider in mehreren Abscheidestufen. Der Partikelabscheider setzt sich in den zweiten Ausführungen daher aus mehreren Abscheidestufen, nämlich einer ersten Abscheidestufe und wenigstens einer weiteren, zweiten Abscheidestufe, zusammen. Die zweite Abscheidestufe ist in Strömungsrichtung des Motorschmieröls stromab der ersten Abscheidestufe angeordnet. Die Abscheidestufen können sich in der Art und/oder in der Feinheit der Abscheidung voneinander unterscheiden. So kann die zweite Abscheidestufe insbesondere für die Abscheidung von Partikeln kleinerer Partikelgröße als die erste Abscheidestufe ausgelegt sein. Ausgedrückt in Abscheidegraden kann dies beispielsweise bedeuten, dass die erste Abscheidestufe einen Abscheidegrad von 50 % für alle Partikel einer ersten Partikelgröße und die zweite Abscheidestufe einen Abscheidegrad von 50 % für alle Partikel einer zweiten Partikelgröße, die kleiner als die erste Partikelgröße ist, aufweisen. In derartigen Ausführungen findet in der ersten Abscheidestufe eine Vorreinigung des Schmieröls für die zweite Abscheidestufe statt. Die erste Abscheidestufe bildet für die zweite Abscheidestufe einen Vorabscheider. Sie entlastet die feinere Partikel abscheidende zweite Abscheidestufe. Eine Entlastung der zweiten Abscheidestufe ist aber auch in Ausführungen von Vorteil, in denen die zweite Abscheidestufe hinsichtlich der Feinheit der Abscheidung der ersten Abscheidestufe entspricht oder bereichsweise sogar gröber als diese ist oder nach einem Abscheideprinzip arbeitet, das dem Abscheideprinzip der ersten Abscheidestufe nicht oder nur schwer vergleichbar ist. Umfasst die erste Abscheidestufe beispielsweise einen Fliehkraftabscheider und umfasst die zweite Abscheidestufe beispielsweise eine Filterstruktur mit einem vom Schmieröl durchströmbaren Filtermedium, sind diese beiden Abscheidestufen zumindest dann vergleichbar, wenn der Fliehkraftabscheider ein Aufnahmemedium für die Aufnahme und Rückhaltung von Partikeln umfasst. In derartigen Ausführungen kann das Aufnahmemedium hinsichtlich der Feinheit ohne Weiteres mit dem Filtermedium verglichen werden, beispielsweise durch einen oder mehrere kennzeichnende(n) Abscheidegrad(e).

Weist der Partikelabscheider die erste und die zweite Abscheidestufe auf, ist zumindest die erste Abscheidestufe stromauf des Nockenwellenphasenverstellers angeordnet. Von Vorteil ist, wenn auch die zweite Abscheidestufe stromauf des Phasenverstellers angeordnet ist. Umfasst der Partikelabscheider die erste und die zweite Abscheidestufe und optional eine oder mehrere in Strömungsrichtung seriell angeordnete weitere Abscheidestufen, ist in bevorzugten Ausführungen auch jede dieser weiteren Abscheidestufen stromauf des Phasenverstellers angeordnet.

Die Abscheidestufen können in Strömungsrichtung des Motorschmieröls insbesondere unmittelbar hintereinander angeordnet sein, so dass in Strömungsrichtung auf eine Abscheidestufe jeweils eine nächste Abscheidestufe folgt und zwischen jeweils zwei Abscheidestufen kein Funktionsbauteil angeordnet ist, das nicht der Abscheidefunktion des Partikelabscheiders dient, aber Schmutzpartikel in das Schmieröl eintragen könnte. Die Abscheidestufen sind vorteilhafterweise nur über Leitungswege miteinander verbunden. In der jeweiligen Verbindungsleitung kann oder können allerdings eine oder mehrere Strukturen angeordnet sein, die der Unterstützung der Abscheidefunktion dienen.

Umfasst der Partikelabscheider mehrere Abscheidestufen, einschließlich der vorstehend genannten ersten Abscheidestufe und zweiten Abscheidestufe, können sich die Abscheidestufen der Bauart nach voneinander unterscheiden. So kann die zweite Abscheidestufe oder eine der zweiten Abscheidestufe optional nachgeordnete weitere, dritte Abscheidestufe insbesondere eine Filterstruktur mit einem vom Motorschmieröl durchströmbaren Filtermedium sein. Zweckmäßigerweise ist zumindest eine stromabwärtigste Abscheidestufe eine Filterstruktur mit einem vom Motorschmieröl durchströmbaren Filtermedium. Das Filtermedium der jeweiligen Filterstruktur ist vorteilhafterweise plissiert, das heißt, um eine Filterachse zumindest teilweise, bevorzugt vollständig umlaufend in Falten gelegt.

Umfasst der Partikelabscheider mehrere Abscheidestufen, beispielweise die genannten erste Abscheidestufe und zweite Abscheidestufe, kann die erste Abscheidestufe oder eine optional weitere Abscheidestufe, die in Strömungsrichtung des Motorschmieröls stromauf der ersten Abscheidestufe angeordnet ist, ein Fliehkraft- oder Zentrifugalabscheider oder beides in Kombination sein. Als Fliehkraftabscheider bezeichnet die Erfindung einen Abscheider oder eine Abscheidestufe, in dem oder der das Motorschmieröl eine Drehbewegung um eine Längsachse des betreffenden Abscheiders oder der betreffenden Abscheidestufe ausführt, wobei eine das Motorschmieröl bei der Drehbewegung umgebende Umfangswand des Abscheiders oder der Abscheidestufe um die Längsachse drehen oder stillstehen kann. Als Zentrifugalabscheider versteht die Erfindung einen Abscheider oder eine Abscheidestufe, bei dem oder der die Umfangswand des Zentrifugalabscheiders im Betrieb des Partikelabscheiders um die Längsachse dreht. Ein Zentrifugalabscheider umfasst daher einen Rotationskörper mit einem Hohlraum, in dem der betreffende Rotationskörper dem Motorschmieröl durch seine eigene Rotation eine Drehbewegung aufprägt. Ein Zentrifugalabscheider kann auch eine oder mehrere Strömungsleitstrukturen umfassen, die die Drehbewegung unterstützen, indem dem Motorschmieröl beim Einströmen oder beim Durchströmen des Zentrifugalabscheiders zusätzlich ein Drehimpuls verliehen wird, der den durch die Rotation des Rotationskörpers des Zentrifugalabscheiders erzeugten Drehimpuls unterstützt, also in die gleiche Drehrichtung wirkt. Wenn im Folgenden von einem Fliehkraftabscheider die Rede ist, soll sowohl ein nichtdrehender Fliehkraftabscheider als auch ein Zentrifugalabscheider umfasst sein. Die erste Abscheidestufe oder eine optionale weitere Abscheidestufe, die stromauf der ersten Abscheidestufe angeordnet ist, kann auch als Zyklonabscheider gebildet sein.

Ein Fliehkraftabscheider kann in vorteilhaften Ausführungen in einem Hohlraum eines drehantreibbaren Rotationskörpers gebildet sein, also in einem im Betrieb des Verbrennungsmotors drehenden Körper. Der Rotationskörper kann insbesondere eine Nockenwelle, grundsätzlich aber auch ein anderer Rotationskörper sein, durch dessen Hohlraum das Schmieröl dem Phasenversteller zuführbar ist. Die Bildung eines Fliehkraftabscheiders in der Nockenwelle hat den besonderen Vorteil, dass solch ein Fliehkraftabscheider in großer Nähe zum Phasenversteller angeordnet sein kann. So kann der Fliehkraftabscheider in einem axialen Endabschnitt der Nockenwelle, an dem der Rotor des Phasenverstellers montiert oder montierbar ist, verwirklicht sein.

Ein Stator des Phasenverstellers kann zur Bildung eines Fliehkraftabscheiders den Hohlraum aufweisen. Der Fliehkraftabscheider ist auch in solchen Ausführungen stromauf eines Druckanschlusses des Steuerventils des Phasenverstellers und daher strömungstechnisch stromauf des Phasenverstellers angeordnet. Vorteil eines im Stator gebildeten Fliehkraftabscheiders ist, dass ein Stator-Hohlraum einen vergleichsweise großen radialen Abstand von der Drehachse des Stators haben kann, so dass dem radialen Abstand entsprechend eine große Zentrifugalkraft auf das im Hohlraum befindliche Schmieröl wirkt. Umgibt der Stator den Rotor und weisen der Stator nach innen und der Rotor nach außen abragende Flügel auf, zwischen denen zur Verstellung der Drehwinkelposition des Rotors relativ zum Stator Druckkammern gebildet sind, erstreckt sich der Hohlraum radial außen von den Druckkammern. Das Schmieröl wird dem Phasenversteller zweckmäßigerweise der Drehachse nah zugeführt und im Längsschnitt des Phasenverstellers gesehen radial außen von den Druckkammern um die Druckkammern durch den Hohlraum und anschließend wieder in Richtung auf die Drehachse zum Druckanschluss des Steuerventils geführt. Der Hohlraum kann sich als Hohlraumring um die Drehachse des Stators über 360° erstrecken. Der Hohlraum kann sich stattdessen auch nur über ein Winkelsegment erstrecken und dementsprechend nur ein Hohlraumringsegment sein. Erstreckt sich der Hohlraum nur über ein Winkelsegment, sind um die Drehachse verteilt in vorteilhaften Ausführungen zwei oder mehr Hohlraumringsegmente in Umfangsrichtung nebeneinander angeordnet, um einen Stator mit einer um die Drehachse möglichst gleichmäßigen Massenverteilung und somit möglichst geringer Unwucht zu erhalten. Die Drehachse des Stators ist die zentrale Längsachse des Hohlraumrings, des Hohlraumringsegments oder der mehreren Hohlraumringsegmente, um die das im jeweiligen Hohlraum befindliche Schmieröl eine Drehbewegung gemeinsam mit dem Stator ausführt und relativ zu der es eine Zentrifugalkraft erfährt.

Im jeweiligen Hohlraum kann der Fliehkraftabscheider in einfachen Ausführungen durch eine radiale, axial lokale Aufweitung des Hohlraums gebildet werden, derart, dass sich Schmutzpartikel unter Einwirkung der Fliehkraft in der Aufweitung sammeln. In bevorzugten Ausführungen umfasst der Fliehkraftabscheider ein offenporiges Aufnahmemedium oder eine Aufnahmestruktur, das oder die um die Drehachse des Rotationskörpers an oder nahe einer Umfangswand des Hohlraums erstreckt ist. Das poröse Aufnahmemedium kann die Umfangswand über 360° vollständig umlaufend oder zumindest über einen überwiegenden Teil des Umfangs auskleiden. Eine Aufnahmestruktur kann Aufnahmetaschen für Schmutzpartikel aufweisen. Die Aufnahmetaschen können in der Umfangswand des Hohlraums geformt oder durch nach innen vorragende Strukturen, beispielsweise Schaufeln, im Zusammenwirken mit der Umfangswand gebildet sein. Alternativ kann eine Umfangswand des jeweiligen Hohlraums mit einer Oberflächenstrukturierung versehen sein, um Schmutzpartikel zurückzuhalten.

Das Aufnahmemedium kann insbesondere Fasermaterial, Gewebematerial, eine Maschenware oder ein offenporiges Schaummaterial sein oder enthalten. Es kann auch mehrere dieser Materialien, auch alle der genannten Materialien, in Kombination umfassen, beispielsweise in radialer Schichtung. Der Fliehkraftabscheider kann im Hohlraum auch durch eine Kombination der genannten Bauarten, nämlich einer einfachen Aufweitung und/oder eines Aufnahmemediums und/oder einer geformten Aufnahmestruktur und/oder einer eingearbeiteten Oberflächenstrukturierung, gebildet sein. So kann ein Aufnahmemedium axial neben einer Aufnahmestruktur oder ein Aufnahmemedium in einer radialen Aufweitung oder eine Aufweitung axial neben einem Aufnahmemedium und/oder einer Aufnahmestruktur angeordnet sein. Das Aufnahmemedium nimmt Schmutzpartikel auf und hält sie dauerhaft zurück, so dass sie bei Wegfall der Fliehkraft nicht wieder entweichen. Das Gleiche gilt in Bezug auf die Aufnahmestruktur. Umfasst der Fliehkraftabscheider nur eine radiale Aufweitung mit glatter Umfangswand, kann der Hohlraum zur Rückhaltung der Schmutzpartikel stromauf von einem Ringspalt begrenzt sein, der verhindert, dass die unter Fliehkraft in die Aufweitung abgeschiedenen Partikel bei Nachlassen oder Wegfall der Fliehkraft ungehindert aus dem Hohlraum in Richtung auf den Phasenversteller abströmen können.

Der Fliehkraftabscheider kann sich vorteilhafterweise über eine beachtliche axiale Länge erstrecken. Als axiale Länge des Fliehkraftabscheiders wird die axiale Länge der radialen Aufweitung und/oder des Aufnahmematerials und/oder der Aufnahmestruktur verstanden. Die axiale Länge des so verstandenen Fliehkraftabscheiders beträgt in vorteilhaften Ausführungen wenigstens 10 cm, bevorzugter wenigstens 20 cm und kann mit Vorteil mehr als 30 cm oder mehr als 40 cm betragen. Zum Fliehkraftabscheider gilt, je länger, desto besser. In Nutzfahrzeugen kann der Fliehkraftabscheider auch eine Länge von 50 cm und mehr aufweisen. Nimmt der Phasenversteller Schmieröl ab, nämlich zum Ändern der relativen Drehwinkelposition der Nockenwelle zur antreibenden Kurbelwelle, wird der Fliehkraftabscheider axial durchströmt. Mit zunehmender Länge des Fliehkraftabscheiders erhöht sich die Verweilzeit des Schmieröls im Fliehkraftabscheider und somit die für die Abscheidung in die Aufweitung und/oder das Aufnahmemedium und/oder die Aufnahmestruktur zur Verfügung stehende Zeitdauer. Je größer die Verweilzeit ist, desto effektiver werden Schmutzpartikel im Fliehkraftabscheider abgeschieden. Für die Abscheidung begünstigend kommt noch hinzu, dass die in einem Aufnahmemedium und/oder einer Aufnahmestruktur bereits befindlichen Schmutzpartikel über einen längeren Zeitraum und somit weiter nach radial außen gedrückt und daher sicherer in dem Aufnahmemedium oder der Aufnahmestruktur zurückgehalten werden. Bei einem Aufnahmemedium kann der radial innere, der Drehachse des Rotationskörpers oder der Schmieröl-Drehströmung nahe Tiefenbereich aufgrund der Bewegung der Schmutzpartikel nach radial außen für die Aufnahme weiterer Schmutzpartikel länger offengehalten werden. Im Hinblick auf eine möglichst lange wartungsfreie Betriebsdauer ist noch von Vorteil, dass die Aufnahmekapazität des Fliehkraftabscheiders mit der axialen Länge des Fliehkraftabscheiders steigt. Der Fliehkraftabscheider kann eine Aufnahmekapazität für Schmutzpartikel von 10 g und mehr, in bevorzugten Ausführungen von wenigstens 20 g und durchaus auch Aufnahmekapazitäten von 50 g und mehr erreichen.

Im Hohlraum kann ein Verdrängerkörper vorgesehen sein, so dass das Schmieröl im Bereich des Verdrängerkörpers innerhalb des Hohlraums nur ein Ringvolumen durchströmt, das innen vom Verdrängerkörper und außen von der Umfangswand des den Hohlraum bildenden Körpers begrenzt wird. Auf diese Weise wird das im Hohlraum befindliche Totvolumen reduziert. Der Verdrängerkörper kann im Hohlraum angeordnet sein, was auch Ausführungen umfasst, in denen der Verdrängerkörper nicht an dem den Hohlraum bildenden Körper selbst, sondern an einem anderen Körper befestigt ist. Der Verdrängerkörper kann sich über die gesamte Länge oder nur über einen Teil der Länge des Hohlraums erstrecken. Ein Verdrängerkörper kann beispielsweise zylindrisch, insbesondere kreiszylindrisch sein. Der Verdrängerkörper kann an dem den Hohlraum bildenden Körper selbst zentriert sein, beispielsweise an seinem äußeren Umfang Abragungen aufweisen, beispielsweise in Form von Zentriernasen, die im eingebauten Zustand die Umfangswand des Körpers berühren. Solch ein Verdrängerkörper kann axial in den Hohlraum eingeschoben werden und zentriert sich mittels der Abragungen unmittelbar selbst an dem den Hohlraum bildenden Körper. Ein Verdrängerkörper kann insbesondere in einem von der Nockenwelle gebildeten Hohlraum vorgesehen sein.

Ein Fliehkraftabscheider kann stattdessen oder zusätzlich auch in einem nicht drehenden Körper, gebildet sein, insbesondere in einem stromauf des Phasenverstellers angeordneten Druckspeicher. Der Fliehkraftabscheider kann in derartigen Ausführungen insbesondere als Zyklonabscheider mit tangentialer Einströmung des Schmieröls verwirklicht sein. Anstelle oder vorzugsweise zusätzlich zu einer tangentialen Einströmrichtung kann eine oder können mehrere Strömungsleiteinrichtungen im Hohlraum verwirklicht sein, die dem Schmieröl beim Durchströmen des Hohlraums einen Drehimpuls verleihen, vorteilhafterweise einen bereits vorhandenen Drehimpuls verstärken. Ein Einlass für eine Einströmung des Schmieröls mit tangentialer Richtungskomponente und/oder eine im jeweiligen Hohlraum verwirklichte andere Strömungsleiteinrichtung für eine Umlenkung mit tangentialer Richtungskomponente kann mit Vorteil auch in Kombination mit einer Ausbildung des Fliehkraftabscheiders in einem drehantreibbaren Rotationskörper verwirklicht sein. Der Fliehkraftabscheider ist in derartigen Ausführungen zugleich auch Zentrifugalabscheider.

Eine Drehströmung des Schmieröls im Hohlraum relativ zu einer Umfangswand des Hohlraums ist auch grundsätzlich von Vorteil, wenn sich im Hohlraum eine Filterstruktur mit einem vom Schmieröl durchströmbaren Filtermedium erstreckt. Eine derartige Filterstruktur kann mit ihrem Filtermedium in den Hohlraum hineinragen, den Hohlraum durchragen oder im Hohlraum befestigt sein. Wenn von einer Anordnung der Filterstruktur im Hohlraum die Rede ist, sollen zumindest diese drei Arten der Erstreckung im Hohlraum umfasst sein. Das Filtermedium kann sich um eine Filterachse der Filterstruktur erstrecken, so dass es einen längs der Filterachse erstreckten Filterinnenraum umgibt. Die Filterstruktur kann im Hohlraum so angeordnet sein, dass das Schmieröl das Filtermedium von außen nach innen durchströmt und durch den Filterinnenraum und einen Filterauslass abströmt. Auch für eine derartige Filtrierung ist es von Vorteil, wenn das Schmieröl das Filtermedium nicht genau radial durchströmt, sondern das Filtermedium am äußeren Umfang auch in axialer Richtung und/oder tangentialer Richtung umströmt, so dass eine Querfiltrierung erzielt wird. Die Erzeugung einer Drehströmung relativ zur Umfangswand des Hohlraums ist somit auch vorteilhaft für die Filtrierung mittels des durchströmbaren Filtermediums und nicht nur in Verbindung mit einem Fliehkraftabscheider. Ein Fliehkraftabscheider kann jedoch das Filtermedium oder zumindest einen axialen Teilabschnitt des Filtermediums umgeben, um Schmutzpartikel auch noch axial auf der Höhe des Filtermediums auszentrifugieren zu können. In bevorzugten Ausführungen ist ein Fliehkraftabscheider jedoch stromauf oder zumindest auch stromauf der Filterstruktur, d. h. stromauf des Filtermediums der Filterstruktur, vorgesehen, um die Belastung des Filtermediums zu reduzieren.

Im Hohlraum können ein Fliehkraftabscheider und auch eine Filterstruktur angeordnet sein. Ein Fliehkraftabscheider und eine Filterstruktur können auch in zwei voneinander separaten, allerdings durch eine oder mehrere Verbindungsleitungen bzw. Verbindungskanäle verbundenen Hohlräumen angeordnet sein.

Soweit der Partikelabscheider eine Filterstruktur mit einem Filtermedium aufweist, das zur Reinigung vom Schmieröl durchströmt wird, und ist solch eine Filterstruktur die einzige oder die stromabwärtigste Abscheidestufe des Partikelabscheiders, kann insbesondere diese Filterstruktur den oder die in Anspruch 1 für den Partikelabscheider spezifizierten Abscheidegrade aufweisen. In vorteilhaften Ausführungen weist die Filterstruktur unter den genannten Voraussetzungen auch einen oder mehrere der in den Unteransprüchen für den Partikelabscheider spezifizierten oder sich für den Partikelabscheider ergebenden Abscheidegrade auf. Die Filterstruktur kann somit isoliert der Überprüfung der Abscheidegrade unterzogen werden. Eine oder mehrere stromaufwärts der Filterstruktur angeordnete Abscheidestufen leisten eine Vorreinigung, um einen vorzeitigen Verbrauch des Filtermediums der Filterstruktur zu verhindern. Andererseits kann in vorteilhaften Ausführungen auch ein Fliehkraftabscheider einen, mehrere oder alle der für den Partikelabscheider spezifizierten Abscheidegrade erreichen.

Ein stromab des Hauptölabscheiders angeordneter Fliehkraftabscheider oder Zyklonabscheider ist an sich bereits von Vorteil. Die Anmelderin behält es daher vor, eine Anmeldung auf ein Partikelabscheidesystem zu richten, das den erläuterten Hauptölabscheider und einen zusätzlichen Partikelabscheider mit einem Fliehkraftabscheider und/oder Zyklonabscheider umfasst, der als solcher dem Merkmal 1.3 des Anspruchs 1 zwar entsprechen kann, aber nicht entsprechen muss.

Ebenso bietet ein Partikelabscheider, der eine Filterstruktur mit einem vom Schmieröl durchströmbaren Filtermedium umfasst und stromab des Hauptölabscheiders und stromauf eines Druckanschlusses des Steuerventils des Phasenverstellers angeordnet ist, einen selbstständigen Gegenstand. Solch eine Filterstruktur, d. h. deren Filtermedium, kann insbesondere einen Abscheidegrad nach Merkmal 1.3 des Anspruchs 1 und optional einen oder mehrere der in den Unteransprüchen spezifizierten Abscheidegrade aufweisen.

Wenn davon die Rede ist, dass der Partikelabscheider einen Fliehkraftabscheider und/oder eine Filterstruktur mit einem vom Schmieröl durchströmbaren Filtermedium umfasst, bedeutet dies, dass der jeweilige Partikelabscheider über den Fliehkraftabscheider und/oder die Filterstruktur hinaus einen oder mehrere weitere(n) Abscheider aufweisen oder aber nur aus dem Fliehkraftabscheider oder nur aus der Filterstruktur oder nur aus dem Fliehkraftabscheider und der Filterstruktur bestehen kann. Das Wort "umfassen" schließt die Bedeutung von "besteht aus" stets ein.

Ein selbstständiger Anspruchsgegenstand kann auch ein Partikelabscheider sein, der mehrere Abscheidestufen umfasst, von denen wenigstens eine stromauf des Phasenverstellers oder eines Systems mehrerer Phasenversteller, die gemeinsam über den Partikelabscheider mit dem Schmieröl als Druckmedium versorgt werden, angeordnet ist. Noch ein selbstständiger Anspruchsgegenstand ist ein Partikelabscheidesystem mit einem dem Anspruch 1 entsprechenden Hauptölabscheider und einem mehrstufigen Partikelabscheider, der dem Merkmal 1.3 des Anspruchs 1 zwar vorteilhafterweise entsprechen kann, aber dem Merkmal 1.3. nicht entsprechen muss. Die Ausbildung des Partikelabscheiders als mehrstufiger Partikelabscheider ist der Abstimmung auf die Abscheideeigenschaften eines Hauptölabscheiders grundsätzlich förderlich.

Vorteilhafte Merkmale eines Partikelabscheidesystems und des Partikelabscheiders an sich werden auch in den Unteransprüchen und den Kombinationen der Unteransprüche offenbart.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich auf nachfolgend in Figuren illustrierte Ausführungsbeispiele der Erfindung. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf. Aus den Aspekten ergeben sich insbesondere auch Gegenstände für Ansprüche weiterer Anmeldungen.
Aspekt 1. Partikelabscheidesystem zur Versorgung eines hydraulischen Nockenwellenphasenverstellers mit gereinigtem Motorschmieröl als Druckmedium, wobei der Nockenwellenphasenversteller (10) einen drehantreibbaren Stator (11), einen mit einer Nockenwelle (6) verbundenen oder verbindbaren Rotor (12) und ein Steuerventil (13-19) zur hydraulischen Verstellung der Drehwinkelposition des Rotors (12) relativ zum Stator (11) aufweist, das Partikelabscheidesystem umfassend:
   1.1 einen Hauptölabscheider (3), der im Strom des Motorschmieröls stromauf einer Schmierölgalerie (5) eines mit dem Motorschmieröl zu versorgenden Verbrennungsmotors angeordnet ist,
   1.2 und einen Partikelabscheider (20; 30; 40; 50; 80), der stromab des Hauptölabscheiders (3) und stromauf des Nockenwellenphasenverstellers (10) oder des Steuerventils (13-19) angeordnet ist, um das Motorschmieröl für den Nockenwellenphasenversteller (10) zu reinigen.

### Abstimmung der Abscheider

Aspekt 2. Partikelabscheidesystem nach dem vorhergehenden Aspekt, wobei
   2.1 der Hauptölabscheider (3) für Partikel einer Partikelgröße P1 einen Abscheidegrad von wenigstens 50% und bei einer Partikelgröße P2 > P1 einen Abscheidegrad von wenigstens 90% aufweist
   2.2 und der Partikelabscheider (20; 30; 40; 50; 80) bei einer Partikelgröße P3, mit P1 < P3 < 100 µm, einen Abscheidegrad von 50% aufweist.
Aspekt 3. Partikelabscheidesystem nach dem vorhergehenden Aspekt, wobei der Partikelabscheider (20; 30; 40; 50; 80) bei einer Partikelgröße P4, mit P2 < P4 < 100 µm, einen Abscheidegrad von wenigstens 90% aufweist.
Aspekt 4. Partikelabscheidesystem nach einem der vorhergehenden Aspekte in Kombination mit Aspekt 2, wobei der Abscheidegrad des Partikelabscheiders (20; 30; 40; 50; 80) bei der Partikelgröße P2 höchstens 30%, vorzugsweise höchstens 10%, ist.
Aspekt 5. Partikelabscheidesystem nach einem der vorhergehenden Aspekte in Kombination mit Aspekt 2, wobei P2 < P3.
Aspekt 6. Partikelabscheidesystem nach einem der vorhergehenden Aspekte in Kombination mit Aspekt 2, wobei P3 > 40 µm und/oder P3 < 80 µm.
Aspekt 7. Partikelabscheidesystem nach einem der vorhergehenden Aspekte in Kombination mit Aspekt 2, wobei die Partikelgröße P3 höchstens 70 µm oder höchstens 60 µm ist.
Aspekt 8. Partikelabscheidesystem nach einem der vorhergehenden Aspekte in Kombination mit Aspekt 2, wobei P4 < 90 µm oder P4 < 80 µm.
Aspekt 9. Partikelabscheidesystem nach einem der vorhergehenden Aspekte in Kombination mit Aspekt 2, wobei P2 > 30 µm und/oder P2 < 50 µm.
Aspekt 10. Partikelabscheidesystem nach einem der vorhergehenden Aspekte in Kombination mit Aspekt 2, wobei P1 > 10 µm und/oder P1 < 20 µm.
Aspekt 11. Partikelabscheidesystem nach einem der vorhergehenden Aspekte in Kombination mit Aspekt 2, wobei die Abscheidegrade Anfangsabscheidegrade sind.
Aspekt 12. Partikelabscheidesystem nach einem der vorhergehenden Aspekte in Kombination mit Aspekt 2, wobei als die jeweilige Partikelgröße der Durchmesser eines Kugelvolumens, das dem Volumen oder der Masse des jeweiligen Partikels äquivalent ist, verwendet wird, so dass es sich bei den Abscheidegraden um η_{3,50}- und η_{3,90}-Abscheidegrade handelt.
Aspekt 13. Partikelabscheidesystem nach einem der vorhergehenden Aspekte in Kombination mit Aspekt 2, wobei die Abscheidegrade unter Verwendung eines Teststaubs aus Partikeln der jeweiligen Partikelgröße (P1, P2, P3, P4) in einem Singlepass- oder Multipass-Prüfverfahren mittels optischer Auswertung mit Partikelzählung oder gravimetrischer Auswertung mittels Gewichtsanalyse ermittelte Abscheidegrade sind.
Aspekt 14. Partikelabscheidesystem nach einem der vorhergehenden Aspekte in Kombination mit Aspekt 2, wobei die Abscheidegrade in einem Multipass-Prüfverfahren nach ISO 4548-12 ermittelte Abscheidegrade sind.
Aspekt 15. Partikelabscheidesystem nach einem der vorhergehenden Aspekte in Kombination mit Aspekt 2, wobei die Abscheidegrade zumindest für Partikel aus einem Material aus der Gruppe von Materialien bestehend aus Sand, Korund, Metall und Metalllegierungen gelten, wobei das Metall und die Metalllegierungen insbesondere Eisen, Eisenbasislegierungen, Aluminium und Aluminiumbasislegierungen sein können.
Aspekt 16. Partikelabscheidesystem nach einem der vorhergehenden Aspekte in Kombination mit Aspekt 2, wobei die Abscheidegrade zumindest für Korundpartikel und/oder Sandpartikel gelten.

### Ein- oder mehrstufiger Partikelabscheider stromauf des Steuerventils oder des Phasenverstellers insgesamt

Aspekt 17. Partikelabscheidesystem nach einem der vorhergehenden Aspekte, wobei der Partikelabscheider (20; 30; 40; 50; 80) wenigstens eine Abscheidestufe (21, 22; 28, 22; 31, 32; 40, 32; 51, 62; 81) zur Abscheidung von Partikeln umfasst, die stromauf des Nockenwellenphasenverstellers (10) oder stromauf des Steuerventils (13-19) angeordnet ist.
Aspekt 18. Partikelabscheidesystem nach einem der vorhergehenden Aspekte, wobei der Nockenwellenphasenversteller (10) als Baueinheit montierbar ist und der Partikelabscheider (20; 30; 40; 50) wenigstens eine Abscheidestufe (21, 22; 28, 22; 31, 32; 40; 51, 62) zur Abscheidung von Partikeln umfasst, die stromauf des Nockenwellenphasenverstellers (10) und separat vom Nockenwellenphasenversteller (10) angeordnet ist.
Aspekt 19. Partikelabscheidesystem nach einem der vorhergehenden Aspekte, wobei der Partikelabscheider (20; 30; 40; 50) eine erste Abscheidestufe (21; 28; 31; 40; 51) zur Abscheidung von Partikeln und stromab der ersten Abscheidestufe eine zweite Abscheidestufe (22; 32; 62) zur Abscheidung von Partikeln umfasst und wenigstens die erste Abscheidestufe (21; 28; 31; 40; 51), optional auch die zweite Abscheidestufe (22; 32; 62), in Strömungsrichtung des Motorschmieröls stromauf des Nockenwellenphasenverstellers (10) oder stromauf des Steuerventils (13-19) angeordnet ist.
Aspekt 20. Partikelabscheidesystem nach dem vorhergehenden Aspekt, wobei die erste Abscheidestufe (21; 28; 31; 40; 51) ein Fliehkraftabscheider und/oder Zentrifugalabscheider (21, 28; 31; 51) oder ein Zyklonabscheider (40) ist.
Aspekt 21. Partikelabscheidesystem nach einem der zwei unmittelbar vorhergehenden Aspekte, wobei die zweite Abscheidestufe (22; 32; 62) eine Filterstruktur (22; 32; 62) mit einem vom Motorschmieröl durchströmbaren Filtermedium (23; 33; 63) ist.
Aspekt 22. Partikelabscheidesystem nach dem vorhergehenden Aspekt, wobei die Filterstruktur (22; 32; 62) eine Filterpatrone ist.
Aspekt 23. Partikelabscheidesystem nach einem der vier unmittelbar vorhergehenden Aspekte, wobei die zweite Abscheidestufe (22; 32; 62) dafür eingerichtet ist, kleinere Partikel als die erste Abscheidestufe (21; 28; 31; 40; 51) abzuscheiden.
Aspekt 24. Partikelabscheidesystem nach einem der fünf unmittelbar vorhergehenden Aspekte, wobei die zweite Abscheidestufe (22; 32; 62) einen für den Partikelabscheider (20; 30; 40; 50) spezifizierten Abscheidegrad nach wenigstens einem der Aspekte 1 bis 16 aufweist.
Aspekt 25. Partikelabscheidesystem nach dem vorhergehenden Aspekt, wobei die erste Abscheidestufe (21; 28; 31; 40; 51) bei der Partikelgröße P3 einen Abscheidegrad von weniger als 50% aufweist.
Aspekt 26. Partikelabscheidesystem nach einem der vorhergehenden Aspekte, wobei
   - der Nockenwellenphasenversteller (10) eine Druckkammer zur hydraulischen Verstellung der Drehwinkelposition des Rotors (12) relativ zum Stator (11) durch Druckbeaufschlagung des Rotors (12) mit dem Motorschmieröl
   - und das Steuerventil (13-19) einen Druckanschluss (P; 84) zur Zuführung des Motorschmieröls, einen mit der Druckkammer verbundenen Arbeitsanschluss (A, B) für das Motorschmieröl, einen Tankanschluss (T) zur Abführung des Motorschmieröls und einen zwischen einer ersten Steuerposition und einer zweiten Steuerposition hin und her beweglichen Ventilkolben (14) umfassen,
   - der Arbeitsanschluss (A, B) in der ersten Steuerposition mit dem Druckanschluss (P; 84) verbunden und in der zweiten Steuerposition vom Druckanschluss (P; 84) getrennt und mit dem Tankanschluss (T) verbunden ist
   - und der Partikelabscheider (20; 30; 40; 50; 80) wenigstens eine Abscheidestufe (21, 22; 28, 22; 31, 32; 40; 51, 62; 81) zur Abscheidung von Partikeln umfasst, die stromauf des Druckanschlusses (P; 84) angeordnet ist.
Aspekt 27. Partikelabscheidesystem nach dem vorhergehenden Aspekt, wobei die wenigstens eine Abscheidestufe (21, 22; 28, 22; 31, 32; 40; 51, 62; 81) unmittelbar stromauf des Druckanschlusses (P; 84) angeordnet ist.
Aspekt 28. Partikelabscheidesystem nach einem der vorhergehenden Aspekte, wobei ein Auslass (25; 35; 65) der wenigstens einen Abscheidestufe (21, 22; 28, 22; 31, 32; 40; 51, 62) nach einem der zwei unmittelbar vorhergehenden Aspekte in einen Druckanschluss (P) des Steuerventils (13-19) mündet, vorzugsweise in axialer Flucht zum axial ausgerichteten Druckanschluss (P), und wobei der Auslass (25; 35; 65) vorzugsweise den Auslass des Partikelabscheiders (20; 30; 40; 50) insgesamt bildet.

### Filterstruktur mit durchströmbarem Filtermedium

Aspekt 29. Partikelabscheidesystem nach einem der vorhergehenden Aspekte, wobei der Partikelabscheider (20; 30; 50), beispielsweise die zweite Abscheidestufe nach Aspekt 19, eine Filterstruktur (22; 32; 62) und die Filterstruktur (22; 32; 62) ein vom Motorschmieröl durchströmbares Filtermedium (23; 33; 63) zur Rückhaltung von im Motorschmieröl enthaltenen Partikeln umfasst.
Aspekt 30. Partikelabscheidesystem nach dem vorhergehenden Aspekt, wobei das Filtermedium (23; 33; 63) eine Längsachse (R) der Filterstruktur (22; 32; 62) umgibt, beispielsweise über einen Winkel von 360° umlaufend, und in Filterlängsrichtung zylindrisch ist oder sich aufweitet, beispielsweise konisch.
Aspekt 31. Partikelabscheidesystem nach dem vorhergehenden Aspekt, wobei sich das Filtermedium (23; 33; 63) in Richtung auf den Nockenwellenphasenversteller (10) aufweitet.
Aspekt 32. Partikelabscheidesystem nach einem der drei unmittelbar vorhergehenden Aspekte, wobei das Filtermedium (23; 33; 63) plissiert ist.
Aspekt 33. Partikelabscheidesystem nach einem der vier unmittelbar vorhergehenden Aspekte, wobei
   - die Filterstruktur (22; 32; 62) in einem Hohlraum (7; 37, 39; 67) angeordnet ist,
   - der Hohlraum (7; 37, 39; 67) einen Einlass (8; 38; 68) und die Filterstruktur (22; 32; 62) einen Filterauslass (25; 35; 65) für das Motorschmieröl aufweisen,
   - das Filtermedium (23; 33; 63) einen Filterinnenraum umgibt und um einen äußeren Umfang des Filtermediums (23; 33; 63) ein ringförmiges Hohlraumvolumen (9; 39) verbleibt, in dem das Motorschmieröl den äußeren Umfang des Filtermediums (23; 33; 63) umströmen kann,
   - und wobei der Einlass (8; 38; 68) des Hohlraums (7; 37, 39; 67) und der Filterauslass (25; 35; 65) relativ zur Filterstruktur (22; 32; 62) so angeordnet sind, dass durch den Einlass (8; 38; 68) in den Hohlraum (7; 37, 39; 67) strömendes Motorschmieröl die Filterstruktur (22; 32; 62) mit einer radialen Richtungskomponente durchströmt.
Aspekt 34. Partikelabscheidesystem nach dem vorhergehenden Aspekt, wobei der Einlass (8; 38; 68) des Hohlraums (7; 37, 39; 67) und der Filterauslass (25; 35; 65) relativ zur Filterstruktur (22; 32; 62) so angeordnet sind, dass durch den Einlass (8; 38; 68) in den Hohlraum (7; 37, 39; 67) strömendes Motorschmieröl die Filterstruktur (22; 32; 62) von außen nach innen durchströmt.
Aspekt 35. Partikelabscheidesystem nach einem der sechs unmittelbar vorhergehenden Aspekte, wobei die Filterstruktur (22; 32; 62) in einem Hohlraum (7; 37, 39; 67) der Nockenwelle (6) oder eines anderen Rotationskörpers (36) angeordnet ist.
Aspekt 36. Partikelabscheidesystem nach einem der sieben unmittelbar vorhergehenden Aspekte, wobei das Filtermedium (23; 33; 63) eine Anströmseite und eine Abströmseite für das Motorschmieröl aufweist und als Gradientenmedium ausgeführt ist, so dass das Filtermedium (23; 33; 63) an der Anströmseite offener als an der Abströmseite ist.
Aspekt 37. Partikelabscheidesystem nach einem der acht unmittelbar vorhergehenden Aspekte, wobei die Filterstruktur (22; 32; 62) den Partikelabscheider bildet.
Aspekt 38. Partikelabscheidesystem nach einem der neun unmittelbar vorhergehenden Aspekte, wobei die Filterstruktur (22; 32; 62) nur eine einzige Lage des Filtermediums (23; 33; 63) aufweist.
Aspekt 39. Partikelabscheidesystem nach einem der Aspekte 29 bis 37, wobei die Filterstruktur (22; 32; 62) mehrere in Durchströmrichtung aufeinanderfolgende Lagen von Filtermedien (23; 33; 63) umfasst, die Filtermedien (23; 33; 63) sich in Bezug auf die Porosität voneinander unterscheiden und die Porosität der Lagen in Durchströmrichtung abnimmt, vorzugsweise von einer Lage zur in Durchströmrichtung jeweils folgenden Lage.
Aspekt 40. Partikelabscheidesystem nach einem der Aspekte 29 bis 39, wobei das Filtermedium (23; 33; 63) als Tiefenfilter ausgeführt ist.
Aspekt 41. Partikelabscheidesystem nach einem der Aspekte 29 bis 40, wobei das Filtermedium (23; 33; 63) Fasermaterial, beispielsweise Vliesmaterial, und/oder Gewebematerial und/oder eine Maschenware und/oder offenporiges Schaummaterial enthält und/oder eine Loch- oder Gitterstruktur umfasst.
Aspekt 42. Partikelabscheidesystem nach einem der Aspekte 29 bis 41, wobei das Filtermedium (23; 33; 63) gesintertes, metallenes Fasermaterial und/oder metallenes Gewebematerial und/oder metallene Maschenware und/oder ein offenporiges Metallschaummaterial enthält und/oder eine metallene Loch- oder Gitterstruktur umfasst.
Aspekt 43. Partikelabscheidesystem nach einem der Aspekte 29 bis 42, wobei sich die Filterstruktur (22; 32; 62) stromauf eines Arbeitsanschlusses (A) oder eines Druckanschlusses (P) des Steuerventils (13-19), vorzugsweise insgesamt stromauf des Steuerventils (13-19), erstreckt.
Aspekt 44. Partikelabscheidesystem nach einem der Aspekte 29 bis 43, wobei
   - die Filterstruktur (62) einen rohrförmigen Abströmabschnitt (69) für vom Phasenversteller (10) abströmendes Motorschmieröl umfasst,
   - sich das Filtermedium (63) um den Abströmabschnitt (69) erstreckt und
   - zwischen dem Abströmabschnitt (69) und dem Filtermedium (63) ein Filterinnenraum mit einem Filterauslass (65) für zum Steuerventil (13-19) strömendes Motorschmieröl gebildet ist.
Aspekt 45. Partikelabscheidesystem nach einem der Aspekte 29 bis 44, wobei die Filterstruktur (22; 32; 62) einen oder mehrere der für den Partikelabscheider (20; 30; 40; 50) spezifizierten Abscheidegrad(e) nach wenigstens einem der Aspekte 1 bis 16 aufweist.

### Fliehkraftabscheider

Aspekt 46. Partikelabscheidesystem nach einem der vorhergehenden Aspekte, wobei
   - das Motorschmieröl dem Nockenwellenphasenversteller (10) durch einen Hohlraum (7; 37, 39; 47; 57, 67; 87), der von einem oder mehreren Körpern (6; 6, 36; 41, 42; 6, 56; 11) begrenzt wird, zuführbar ist
   - und wobei
   - eine Strömungsleiteinrichtung (8, 26; 38; 48; 54, 58, 68; 83a, 83b) vorgesehen ist, die dem Motorschmieröl beim Einströmen in den Hohlraum und/oder beim Durchströmen des Hohlraums einen Drehimpuls um eine in Bezug auf den Hohlraum (7; 37, 39; 47; 57, 67; 87) zentrale Längsachse (R) verleiht,
      und/oder
   - ein den Hohlraum (7; 37, 39; 57, 67; 87) begrenzender Körper (6; 6, 36; 11) ein Rotationskörper ist, der im Betrieb des Nockenwellenphasenverstellers (10) um eine in Bezug auf den Hohlraum (7; 37, 39; 47; 57, 67; 87) zentrale Längsachse (R) dreht.
Aspekt 47. Partikelabscheidesystem nach dem vorhergehenden Aspekt, wobei der Partikelabscheider (20; 30; 40; 50; 80), beispielsweise die erste Abscheidestufe nach Aspekt 19, einen im Hohlraum (7; 37, 39; 47; 57, 67; 87) um die zentrale Längsachse (R) erstreckten Fliehkraftabscheider (21; 28; 31; 46; 51; 81) zur Aufnahme und Rückhaltung von unter Fliehkraft in den Fliehkraftabscheider (21; 28; 31; 46; 51; 81) gelangenden Partikeln umfasst.
Aspekt 48. Partikelabscheidesystem nach dem vorhergehenden Aspekt, wobei der Fliehkraftabscheider (21; 28; 31; 46; 51; 81) ein Aufnahmemedium umfasst, das eine den Hohlraum (7; 37, 39; 47; 57; 87) radial außen umgebende Umfangswand auskleidet, und/oder mit der Umfangswand Aufnahmetaschen (29) für Partikel bildet und/oder die Umfangswand eine Oberflächenstrukturierung (81) zur Rückhaltung von Partikeln aufweist.
Aspekt 49. Partikelabscheidesystem nach einem der zwei unmittelbar vorhergehenden Aspekte, wobei der Fliehkraftabscheider (21; 28; 31; 51) eine axiale Länge von wenigstens 20 cm oder wenigstens 30 cm oder wenigstens 40 cm aufweist.
Aspekt 50. Partikelabscheidesystem nach einem der drei unmittelbar vorhergehenden Aspekte, wobei die Strömungsleiteinrichtung (8, 26; 38; 48; 54, 58, 68; 83a, 83b) einen Einlass (8; 38; 48; 58, 68; 83a, 83b) des Hohlraums (7; 37, 39; 47; 57, 67; 87) umfasst und der Einlass (8; 38; 48; 58, 68; 83a, 83b) so gestaltet ist, dass das Motorschmieröl mit einer in Bezug auf die zentrale Längsachse (R) tangentialen Richtungskomponente in den Hohlraum (7; 37, 39; 47; 57, 67; 87) strömt.
Aspekt 51. Partikelabscheidesystem nach einem der vier unmittelbar vorhergehenden Aspekte, wobei die Strömungsleiteinrichtung (8, 26; 54, 58, 68) eine oder mehrere im Hohlraum (7; 57) befindliche Umlenkstrukturen (26; 54) umfasst, die das Motorschmieröl im Hohlraum (7; 57) in eine bezüglich der zentralen Längsachse (R) tangentiale Richtung umlenkt oder umlenken.
Aspekt 52. Partikelabscheidesystem nach einem der sechs unmittelbar vorhergehenden Aspekte, wobei die Nockenwelle (6) oder ein relativ zum Stator (11) oder dem Rotor (12) drehunbeweglicher anderer Rotationskörper (36; 11) den Hohlraum (7; 37, 39; 57, 67; 87) radial außen und/oder radial innen begrenzt.
Aspekt 53. Partikelabscheidesystem nach einem der sieben unmittelbar vorhergehenden Aspekte, wobei sich der Hohlraum (87) im Stator (11) nahe einem äußeren Umfang des Stators (11) erstreckt und die Drehachse (R) des Stators (11) die in Bezug auf den Hohlraum (87) zentrale Längsachse (R) bildet.
Aspekt 54. Partikelabscheidesystem nach dem vorhergehenden Aspekt, wobei sich im Stator (11) nahe dem äußeren Umfang des Stators (11) in Umfangsrichtung hintereinander mehrere Hohlräume (87) in Form von Hohlraumringsegmenten erstrecken.
Aspekt 55. Partikelabscheidesystem nach einem der zwei unmittelbar vorhergehenden Aspekte, wobei sich im Stator (11) ein oder mehrere Zuführkanäle (82a) nach radial außen erstrecken, durch den oder die dem einen oder den mehreren Hohlräumen (87) Schmieröl zuführbar ist, und sich im Stator (11) ein oder mehrere weiterführende Abführkanäle (82b) nach radial innen erstrecken, durch den oder die aus dem einen oder den mehreren Hohlräumen (87) Schmieröl abführbar ist.
Aspekt 56. Partikelabscheidesystem nach einem der drei unmittelbar vorhergehenden Aspekte, wobei sich im Stator (11) nahe dem äußeren Umfang des Stators (11) in Umfangsrichtung hintereinander mehrere voneinander separate Hohlräume (87) in Form von Hohlraumringsegmenten erstrecken und den Hohlräumen (87) jeweils ein Zuführkanal (82a) für die Zuführung des Schmieröls zum jeweiligen Hohlraum (87) und ein weiterführender Abführkanal (82b) für die Abführung des Schmieröls aus dem jeweiligen Hohlraum (87) zugeordnet sind.
Aspekt 57. Partikelabscheidesystem nach einem der vier unmittelbar vorhergehenden Aspekte, wobei eine äußere Umfangswand des jeweiligen Hohlraums (87) zur Rückhaltung von im Schmieröl enthaltenen Partikeln eine Oberflächenstrukturierung (81) aufweist und/oder im jeweiligen Hohlraum (87) Aufnahmematerial für die Partikel angeordnet ist.
Aspekt 58. Partikelabscheidesystem nach einem Aspekte 46 bis 52, wobei der Rotor (12) des Nockenwellenphasenverstellers (10) mittels eines Hohlkörpers (36) drehunbeweglich mit der Nockenwelle (6) verbunden ist, der Hohlkörper (36) mit einem axialen Endabschnitt der Nockenwelle (6) drehunbeweglich verbunden ist und den Endabschnitt umgibt, im Hohlkörper (36) in axialer Verlängerung zur Nockenwelle (6) ein Hohlraum (39) gebildet ist, der einen Querschnitt aufweist, der wenigstens so groß wie ein Außenquerschnitt des Endabschnitts der Nockenwelle (6) ist, und wobei eine Abscheidestufe (32) des Partikelabscheiders (30) im Hohlraum (39) des Hohlkörpers (36) angeordnet ist.
Aspekt 59. Partikelabscheidesystem nach einem der vorhergehenden Aspekte in Kombination mit Aspekt 47, wobei der Fliehkraftabscheider (21; 31; 51; 81) ein offenporiges Aufnahmemedium für Partikel umfasst.
Aspekt 60. Partikelabscheidesystem nach dem vorhergehenden Aspekt, wobei das Aufnahmemedium Fasermaterial, beispielsweise Vliesmaterial, und/oder Gewebematerial und/oder Maschenware und/oder ein offenporiges Schaummaterial enthält und/oder eine Loch- oder Gitterstruktur umfasst.
Aspekt 61. Partikelabscheidesystem nach einem der zwei unmittelbar vorhergehenden Aspekte, wobei das Aufnahmemedium gesintertes, metallenes Fasermaterial und/oder metallenes Gewebematerial und/oder metallene Maschenware und/oder offenporiges Metallschaummaterial enthält und/oder eine metallene Loch- oder Gitterstruktur umfasst.

### Filterstruktur im Hohlraum

Aspekt 62. Partikelabscheidesystem nach einem der Aspekte 46 bis 52 und 59 bis 61, wobei der Partikelabscheider (20; 30; 50) eine in dem Hohlraum (7; 37, 39; 67) angeordnete Filterstruktur (22; 32; 62) umfasst und die Filterstruktur (22; 32; 62) ein um die Drehachse (R) des Hohlraums (7; 37, 39; 67) erstrecktes, vom Motorschmieröl durchströmbares Filtermedium (23; 33; 63) aufweist, das einen Filterinnenraum zumindest teilweise umgibt und von einem Hohlraumvolumen (9; 37, 39; 67) umgeben wird, wobei die Filterstruktur (22; 32; 62) so angeordnet und gestaltet ist, dass in das Hohlraumvolumen (9; 37, 39; 67) strömendes Motorschmieröl das Filtermedium (23; 33; 63) durchströmt und durch den Filterinnenraum abströmt.
Aspekt 63. Partikelabscheidesystem nach dem vorhergehenden Aspekt, wobei die Filterstruktur (22; 32) einem der Aspekte 21, 22 und 29 bis 45 entspricht.
Aspekt 64. Partikelabscheidesystem nach einem der zwei unmittelbar vorhergehenden Aspekte in Kombination mit Aspekt 20 oder 47, wobei der Fliehkraftabscheider (21; 28; 31; 51) stromauf der Filterstruktur (22; 32; 62) angeordnet ist.
Aspekt 65. Partikelabscheidesystem nach einem der drei unmittelbar vorhergehenden Aspekte in Kombination mit Aspekt 20 oder 47, wobei die Filterstruktur (22) axial in oder durch den Fliehkraftabscheider (21; 28) ragt und radial zwischen der Filterstruktur (22) und dem Fliehkraftabscheider (21; 28) ein Hohlvolumen (9) verbleibt, in dem das Motorschmieröl einen äußeren Umfang des Filtermediums (23; 33) umströmen kann.
Aspekt 66. Partikelabscheidesystem nach einem der vier unmittelbar vorhergehenden Aspekte in Kombination mit Aspekt 20 oder 47, wobei die Filterstruktur (32; 62) mit wenigstens einem überwiegenden Teil ihrer axialen Länge außerhalb des Fliehkraftabscheiders (31; 51) angeordnet ist.

### Aufnahmetaschen

Aspekt 67. Partikelabscheidesystem nach einem der vorhergehenden Aspekte in Kombination mit Aspekt 20 oder 47, wobei der Fliehkraftabscheider (28) an einer äußeren Umfangswand des Hohlraums (7) Aufnahmetaschen (29) für Partikel aufweist.
Aspekt 68. Partikelabscheidesystem nach dem vorhergehenden Aspekt, wobei die Aufnahmetaschen zur Rückhaltung der Partikel hinterschnitten sind und sich in eine tangentiale Richtung öffnen.

### Verdrängerkörper

Aspekt 69. Partikelabscheidesystem nach einem der vorhergehenden Aspekte in Kombination mit Aspekt 46, wobei im Hohlraum ein Verdrängerkörper vorgesehen ist, so dass im Hohlraum ein vom Schmieröl durchströmbares Ringvolumen erhalten wird, das radial innen vom Verdrängerkörper und radial außen von einer den Verdrängerkörper umgebenden Umfangswand des den Hohlraum bildenden Körpers umgeben wird.
Aspekt 70. Partikelabscheidersystem nach dem vorhergehenden Aspekt in Kombination mit Aspekt 20 oder 47, wobei der Fliehkraftabscheider oder zumindest ein axialer Teilabschnitt des Fliehkraftabscheiders den Verdrängerkörper oder zumindest einen axialen Teilabschnitt des Verdrängerkörpers umgibt.

### Zyklonabscheider

Aspekt 71. Partikelabscheidesystem nach einem der vorhergehenden Aspekte, wobei der Partikelabscheider einen Zyklonabscheider (40) umfasst und der Zyklonabscheider (40) einen Wirbelabschnitt (47a) mit einer Zyklonachse (Z) und einem Einlass (48) für ein Einströmen des Motorschmieröls mit tangentialer Richtungskomponente zur Zyklonachse (Z), einen mit dem Wirbelabschnitt (47a) verbundenen axialen Abscheideabschnitt (47c) zur Aufnahme von im Wirbelabschnitt (47a) axial in Richtung auf den Abscheideabschnitt (47c) strömenden Partikeln und einen Auslass (49) für das Schmieröl umfasst.
Aspekt 72. Partikelabscheidesystem nach dem vorhergehenden Aspekt, wobei sich die Zyklonachse (Z) durch den Abscheideabschnitt (47c) erstreckt und der Abscheideabschnitt (47c) an einem um die Zyklonachse (Z) erstreckten Umfang mit einem offenporigen Aufnahmemedium (46) für die Partikel, beispielsweise einem Vliesmaterial und/oder einem Gewebematerial, ausgekleidet ist.
Aspekt 73. Partikelabscheidesystem nach dem vorhergehenden Aspekt, wobei das Aufnahmemedium (46) ein Fasermaterial, beispielsweise ein Vliesmaterial, und/oder metallenes Gewebematerial und/oder metallene Maschenware und/oder ein offenporiges Schaummaterial enthält und/oder eine Loch- oder Gitterstruktur umfasst.
Aspekt 74. Partikelabscheidesystem nach dem vorhergehenden Aspekt, wobei das Aufnahmemedium (46) gesintertes, metallenes Fasermaterial und/oder metallenes Gewebematerial und/oder metallene Maschenware und/oder ein offenporiges Metallschaummaterial enthält und/oder eine metallene Loch- oder Gitterstruktur umfasst.
Aspekt 75. Partikelabscheidesystem nach einem der vier unmittelbar vorhergehenden Aspekte, wobei ein stromauf des Nockenwellenphasenverstellers (10) angeordneter Druckspeicher für das Schmieröl den Zyklonabscheider (40) bildet.
Aspekt 76. Partikelabscheidesystem nach dem vorhergehenden Aspekt, wobei der Druckspeicher einen im Wirbelabschnitt (47a) gegen eine elastische Rückstellkraft beweglichen Kolben (43) umfasst, der den Wirbelabschnitt (47a) begrenzt und den Abscheideabschnitt (47c) bildet.
Aspekt 77. Partikelabscheidesystem nach einem der sechs unmittelbar vorhergehenden Aspekte, wobei der Wirbelabschnitt (47a) über einen Trichterabschnitt (47b) mit dem Abscheideabschnitt (47c) verbunden ist und sich der Trichterabschnitt (47b) in Richtung auf den Abscheideabschnitt (47c) verjüngt.

### Fliehkraftabscheider mit Ringspalt

Aspekt 78. Partikelabscheidesystem nach einem der vorhergehenden Aspekte, wobei
   - das Motorschmieröl dem Nockenwellenphasenversteller (10) durch einen um eine Drehachse (R) erstreckten, von einem ersten Körper (6) radial innen und einen den ersten Körper (6) umgebenden zweiten Körper (56) radial außen begrenzten Hohlraum (57) zuführbar ist,
   - wenigstens einer der Körper (6, 56) um die Drehachse (R) absolut und relativ zum anderen Körper (56, 6) drehantreibbar ist,
   - der Hohlraum (57) einen Fliehkraftabscheider (51) zur Aufnahme von unter Fliehkraft in den Fliehkraftabscheider (51) gelangenden Partikeln bildet und/oder enthält
   - und zwischen dem ersten Körper (6) und dem zweiten Körper (56) stromab des Fliehkraftabscheiders (51) ein um die Drehachse (R) erstreckter Ringspalt (55) verbleibt, der den Hohlraum (57) begrenzt und den das Schmieröl auf dem Weg zum Nockenwellenphasenversteller (10) durchströmen muss.
Aspekt 79. Partikelabscheidesystem nach dem vorhergehenden Aspekt, wobei die Nockenwelle (6) den ersten Körper bildet.
Aspekt 80. Partikelabscheidesystem nach dem vorhergehenden Aspekt, wobei ein Lagerkörper (56) zur Drehlagerung der Nockenwelle (6) den zweiten Körper bildet.

### Magnetabscheider

Aspekt 81. Partikelabscheidesystem nach einem der vorhergehenden Aspekte, wobei der Partikelabscheider (20; 30; 40; 50; 80) magnetisches Material zur Rückhaltung ferritischer Partikel umfasst.
Aspekt 82. Partikelabscheidesystem nach dem vorhergehenden Aspekt, wobei das Filtermedium (23; 33; 63) der Filterstruktur (22; 32; 62) nach einem der Aspekte 21, 22, 29 bis 44 und 55 bis 59 magnetisches Material zur Rückhaltung ferritischer Partikel enthält.
Aspekt 83. Partikelabscheidesystem nach einem der zwei unmittelbar vorhergehenden Aspekte, wobei das Aufnahmemedium oder eine Aufnahmestruktur (28, 29) des Fliehkraft- oder Zyklonabscheiders (21; 28; 31; 40; 51; 81) nach einem der Aspekte 20 und 44 bis 74 magnetisches Material zur Rückhaltung ferritischer Partikel enthält.
Aspekt 84. Partikelabscheidesystem nach einem der vorhergehenden Aspekte in Kombination mit einem der Aspekte 17 bis 28, wobei der Partikelabscheider (20; 30; 40; 50; 80) einen Ferritabscheider mit magnetischem Material zur Rückhaltung ferritischer Partikel umfasst und der Ferritabscheider eine weitere Abscheidestufe bildet, die in Strömungsrichtung des Schmieröls stromauf einer anderen Abscheidestufe (21, 22; 22, 28; 31, 32; 40; 51; 62; 81) des Partikelabscheiders angeordnet ist.

### Phasenversteller mit interner Schmierölabführung

Aspekt 85. Phasenversteller zur Verstellung der Drehwinkelposition einer Nockenwelle (6) relativ zu einer Kurbelwelle eines Verbrennungsmotors, wobei der Phasenversteller Folgendes umfasst:
   (a) einen drehantreibbaren Stator (11),
   (b) einen mit der Nockenwelle (6) verbundenen oder verbindbaren Rotor (12),
   (c) eine Druckkammer zur hydraulischen Verstellung der Drehwinkelposition des Rotors (12) relativ zum Stator (11) durch Druckbeaufschlagung des Rotors (12) mit Motorschmieröl als Druckmedium und
   (d) ein Steuerventil (13-19) zur hydraulischen Verstellung der Drehwinkelposition des Rotors (12) relativ zum Stator (11),
   (e) wobei das Steuerventil (13-19) Folgendes umfasst:
      (e1) ein Ventilgehäuse (13) mit einem Druckanschluss (84) zur Zuführung des Motorschmieröls, einem mit der Druckkammer verbundenen Arbeitsanschluss (A, B) und einem Tankanschluss (T) zur Abführung des Motorschmieröls
      (e2) und einen Ventilkolben (14), der in einem Hohlraum des Ventilgehäuses (13) zwischen einer ersten Steuerposition und einer zweiten Steuerposition hin und her beweglich ist,
   (f) wobei der Arbeitsanschluss (A, B) in der ersten Steuerposition mit dem Druckanschluss (84) verbunden und in der zweiten Steuerposition vom Druckanschluss (84) getrennt und mit dem Tankanschluss (T) verbunden ist,
   (g) und wobei der Arbeitsanschluss (A, B) in der zweiten Steuerposition durch einen Hohlraum des Ventilkolbens (14) mit dem Tankanschluss (T) verbunden ist.
Aspekt 86. Phasenversteller nach dem vorhergehenden Aspekt, wobei der Tankanschluss (T) dem Ventilkolben (14) axial gegenüberliegend in den Hohlraum des Ventilgehäuses (13) mündet.
Aspekt 87. Phasenversteller zur Verstellung der Drehwinkelposition einer Nockenwelle (6) relativ zu einer Kurbelwelle eines Verbrennungsmotors, wobei der Phasenversteller Folgendes umfasst:
   (a) einen drehantreibbaren Stator (11),
   (b) einen mit der Nockenwelle (6) verbundenen oder verbindbaren Rotor (12),
   (c) eine Druckkammer zur hydraulischen Verstellung der Drehwinkelposition des Rotors (12) relativ zum Stator (11) durch Druckbeaufschlagung des Rotors (12) mit Motorschmieröl als Druckmedium und
   (d) ein Steuerventil (13-19) zur hydraulischen Verstellung der Drehwinkelposition des Rotors (12) relativ zum Stator (11),
   (e) wobei das Steuerventil (13-19) Folgendes umfasst:
      (e1) ein Ventilgehäuse (13) mit einem Druckanschluss (84) zur Zuführung des Motorschmieröls, einem mit der Druckkammer verbundenen Arbeitsanschluss (A, B) und einem Tankanschluss (T) zur Abführung des Motorschmieröls
      (e2) und einen Ventilkolben (14), der in einem Hohlraum des Ventilgehäuses (13) zwischen einer ersten Steuerposition und einer zweiten Steuerposition hin und her beweglich ist,
   (f) wobei der Arbeitsanschluss (A, B) in der ersten Steuerposition mit dem Druckanschluss (84) verbunden und in der zweiten Steuerposition vom Druckanschluss (84) getrennt und mit dem Tankanschluss (T) verbunden ist,
   (g) und wobei der Tankanschluss (T) dem Ventilkolben (14) axial gegenüberliegend in den Hohlraum des Ventilgehäuses (13) mündet.
Aspekt 88. Phasenversteller nach dem vorhergehenden Aspekt, wobei der Arbeitsanschluss (A, B) in der zweiten Steuerposition durch einen Hohlraum des Ventilkolbens (14) mit dem Tankanschluss (T) verbunden ist.
Aspekt 89. Phasenversteller nach einem der vier unmittelbar vorhergehenden Aspekte, wobei der Tankanschluss (T) mit dem Hohlraum des Ventilkolbens (14) permanent verbunden ist.
Aspekt 90. Phasenversteller nach einem der fünf unmittelbar vorhergehenden Aspekte, wobei sich der Tankanschluss (T) von einer axialen Stirnseite des Ventilgehäuses (13) bis in den Hohlraum des Ventilgehäuses (13) erstreckt.
Aspekt 91. Phasenversteller nach einem der sechs unmittelbar vorhergehenden Aspekte, wobei der Tankanschluss (T) dem Hohlraum des Ventilkolbens (14) axial zugewandt in den Hohlraum des Ventilgehäuses (13) mündet.
Aspekt 92. Phasenversteller nach einem der sieben unmittelbar vorhergehenden Aspekte, wobei
   - die Druckkammer eine Voreilkammer bildet, bei deren Druckbeaufschlagung der Rotor (12) relativ zum Stator (11) in eine Voreilrichtung verstellt wird,
   - der Phasenversteller (10) eine weitere Druckkammer aufweist, die eine Nacheilkammer bildet, bei deren Druckbeaufschlagung der Rotor (12) relativ zum Stator (11) der Voreilrichtung entgegen in eine Nacheilrichtung verstellt wird,
   - der Arbeitsanschluss (A) mit der Voreilkammer verbunden ist,
   - das Ventilgehäuse (13) einen weiteren Arbeitsanschluss (B) aufweist, der mit der Nacheilkammer verbunden ist,
   - der weitere Arbeitsanschluss (B) in der zweiten Steuerposition mit dem Druckanschluss (84) verbunden und in der ersten Steuerposition vom Druckanschluss (84) getrennt und mit dem gleichen Tankanschluss (T) verbunden ist.
Aspekt 93. Phasenversteller nach einem der acht unmittelbar vorhergehenden Aspekte, wobei der Tankanschluss (T) zur Abführung des Motorschmieröls mit einem Hohlraum (7) der Nockenwelle (6) verbunden ist.
Aspekt 94. Phasenversteller nach einem der neun unmittelbar vorhergehenden Aspekte, wobei der Tankanschluss (T) mit einem Abströmabschnitt (69) einer Filterstruktur (62) verbunden ist, die ein um den Abströmabschnitt (69) erstrecktes Filtermedium (63) umfasst, das vom Motorschmieröl durchströmt wird, wenn das Motorschmieröl zum Druckanschluss (84) des Steuerventils (13-19) strömt.
Aspekt 95. Phasenversteller nach einem der zehn unmittelbar vorhergehenden Aspekte, der einen frei von Motorschmieröl trocken laufenden Riemenantrieb zum Drehantreiben des Stators (11) umfasst.
Aspekt 96. Phasenversteller nach einem der elf unmittelbar vorhergehenden Aspekte, der ein relativ zum Stator (11) drehunbewegliches Antriebsrad, das der Stator (11) bilden kann, und einen das Antriebsrad umschlingenden Riemen umfasst, wobei der Phasenversteller (10) beidseits des Stators (11) mittels Wellendichtringen (75, 76; 89) gegen Austritt von Motorschmieröl abgedichtet ist, so dass der Riemen frei von Motorschmieröl trocken umläuft.
Aspekt 97. Phasenversteller nach einem der zwölf unmittelbar vorhergehenden Aspekte, wobei der Phasenversteller (10) den in den Aspekten 1 bis 84 genannten Phasenversteller (10) bildet.

Die Erfindung wird nachfolgend anhand von Ausführungsbeispielen erläutert. An den Ausführungsbeispielen offenbarte Merkmale bilden die Gegenstände der Ansprüche, der Aspekte und auch die vorstehenden erläuterten Ausgestaltungen vorteilhaft weiter. Es zeigen:
- Figur 1: einen Schmierölkreis mit einem erfindungsgemäßen Partikelabscheidesystem,
- Figur 2: ein Partikelabscheidesystem mit mehreren Partikelabscheidern für ein System von mehreren Phasenverstellern,
- Figur 3: ein Partikelabscheidesystem mit einem Partikelabscheider für mehrere Phasenversteller,
- Figur 4: Abscheidekurven eines Hauptölabscheiders und eines zusätzlichen Partikelabscheiders des Partikelabscheidesystems,
- Figur 5: einen Phasenversteller mit einem Partikelabscheider eines ersten Ausführungsbeispiels,
- Figur 6: den Partikelabscheider der Figur 5 in vergrößerter Darstellung,
- Figur 7: den Querschnitt A-A der Figur 5,
- Figur 8: den Querschnitt B-B der Figur 5,
- Figur 9: einen alternativen Fliehkraftabscheider,
- Figur 10: eine Stützstruktur eines Rückschlagventils des Phasenverstellers der Figur 5,
- Figur 11: einen Partikelabscheider eines zweiten Ausführungsbeispiels,
- Figur 12: den Querschnitt A-A der Figur 11,
- Figur 13: den Querschnitt B-B der Figur 11,
- Figur 14: einen Partikelabscheider eines dritten Ausführungsbeispiels,
- Figur 15: den Querschnitt A-A der Figur 14,
- Figur 16: einen Partikelabscheider eines vierten Ausführungsbeispiels,
- Figur 17: einen Partikelabscheider eines fünften Ausführungsbeispiels,
- Figur 18: den Partikelabscheider des fünften Ausführungsbeispiels in einem Querschnitt, und
- Figur 19: eine Anordnung von Strukturen zur Zuführung von Schmieröl zum Partikelabscheider des fünften Ausführungsbeispiels.

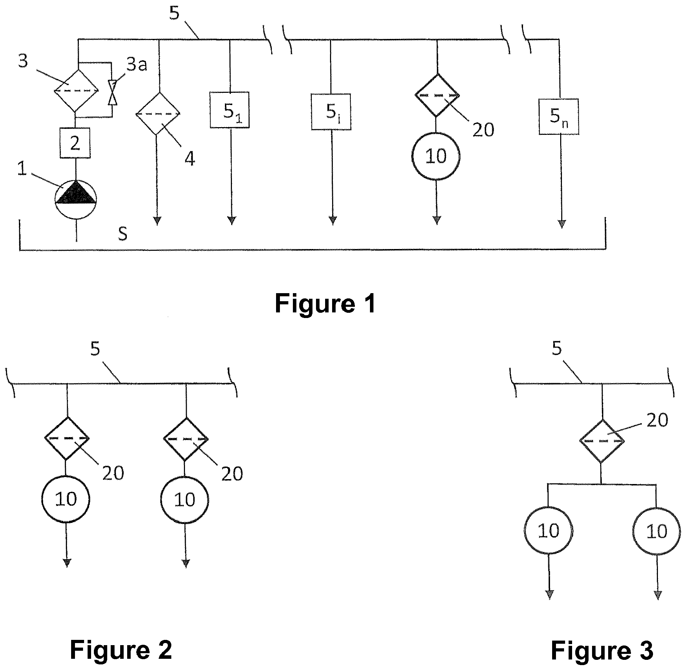

Figur 1 zeigt einen Schmierölkreis zur Versorgung eines Verbrennungsmotors mit Motorschmieröl. Der Schmierölkreis umfasst ein Schmierölreservoir S und eine Schmierölpumpe 1, die Motorschmieröl aus dem Schmierölreservoir S über eine Schmierölgalerie 5 zu Verbrauchsstellen 5ᵢ fördert, um beispielsweise eine Verbrauchsstelle 5₁ zu schmieren und eine Verbrauchsstelle 5ₙ zu kühlen, beispielsweise mittels Sprühkühlung, und gegebenenfalls ebenfalls zu schmieren. Das Schmieröl fließt nach dem Schmieren und/oder Kühlen der betreffenden Verbrauchsstelle 5ᵢ zurück in das Schmierölreservoir S.

An den Schmierölkreis ist als weiterer Schmierölverbraucher ein Nockenwellenphasenversteller 10, im Folgenden Phasenversteller 10, oder ein System von mehreren Phasenverstellern 10 angeschlossen. Das Motorschmieröl dient für den jeweiligen Phasenversteller 10 als Druckmedium zur Verstellung der Phasenlage einer dem jeweiligen Phasenversteller zugeordneten Nockenwelle relativ zu einer Kurbelwelle des Verbrennungsmotors. Die Pumpe 1 fördert das Schmieröl, wie bei Kraftfahrzeugen üblich, über einen Kühler 2 und einen Hauptölabscheider 3 zu den Verbrauchsstellen 5ᵢ und dem/den Phasenversteller(n) 10. Mit 4 ist ein Nebenstromölabscheider bezeichnet, der insbesondere für die Abscheidung von Rußpartikeln ausgelegt sein kann.

In den Schmierölkreis des Verbrennungsmotors ist ein Partikelabscheidesystem integriert, das mit hoher Sicherheit gewährleistet, dass dem Phasenversteller 10 weitestgehend von schädigenden oder akut gefährdenden Schmutzpartikeln befreites Schmieröl als Druckmedium zugeführt wird. Durch den Hauptölabscheider 3 wird der gesamte Förderstrom der Schmierölpumpe 1 gefördert, bevor das Schmieröl über die Schmierölgalerie 5 zu den einzelnen Verbrauchsstellen 5ᵢ und dem Phasenversteller 10 gelangt. Im Hauptölabscheider 3 werden Schmutzpartikel bis hinunter zu Partikelgrößen von 50 µm und kleiner abgeschieden. Das im Hauptölabscheider 3 gereinigte Schmieröl weist am Auslass des Hauptölabscheiders 3 daher zumindest im Wesentlichen nur noch Schmutzpartikel auf, die kleiner als 50 µm sind. In Kraftfahrzeugen übliche Hauptölabscheider 3 erreichen einen Abscheidegrad von 90 % und höher bei Partikelgrößen aus dem Bereich von 30 µm bis 40 µm. Der Hauptölabscheider 3 weist daher eine oder mehrere entsprechend feine Abscheideeinrichtungen auf.

Wegen des mit der Reinigung einhergehenden Druckabfalls, ist ein Bypass-Ventil 3a vorgesehen, um das Schmieröl bei noch kaltem Motor, im Kaltstart, am Hauptölabscheider 3 vorbei und somit ungereinigt zu den Verbrauchsstellen 5ᵢ zu fördern. Das Bypass-Ventil 3a schützt den Hauptölabscheider 3 vor Zerstörung durch den im kalten Zustand besonders hohen Druck am Auslass der Schmierölpumpe 1. Hat sich das Schmieröl im Betrieb des Verbrennungsmotors ausreichend erwärmt, schließt das Bypass-Ventil 3a und das Schmieröl strömt durch den Hauptölabscheider 3 zu den Verbrauchsstellen 5ᵢ und dem Phasenversteller 10.

In Figur 1 sind die Verbrauchsstellen 5ᵢ und der Phasenversteller 10 in Bezug auf den Schmierölstrom parallel angeordnet, so dass das Schmieröl vom Hauptölabscheider 3 bis zur jeweiligen Verbrauchsstelle 5ᵢ und dem Phasenversteller 10 jeweils nur die unerlässlichen Zuführleitungen durchströmt. Grundsätzlich kann eine Verbrauchsstelle 5ᵢ aber auch stromauf des Phasenverstellers 10 angeordnet sein. Ebenso ist es möglich, dass eine Verbrauchsstelle 5ᵢ stromab des Phasenverstellers 10 angeordnet ist, so dass das Schmieröl dem Phasenversteller 10 über die stromaufwärtige Verbrauchsstelle 5ᵢ zugeführt und/oder vom Phasenversteller 10 über die stromabwärtige Verbrauchsstelle 5ᵢ ins Schmierölreservoir S zurückgeführt wird.

Um mit einer im Vergleich zu bekannten Abscheidesystemen erhöhten Wahrscheinlichkeit zu gewährleisten, dass durch Schmutzpartikel bedingte Funktionsstörungen und grundsätzlich auch Reibverschleiß des Phasenverstellers 10 nicht mehr auftritt, ist in der Schmierölzuführung zum Phasenversteller 10 über den Hauptölabscheider 3 hinaus ein Partikelabscheider 20 vorgesehen. Der Partikelabscheider 20 ist somit stromab des Hauptölabscheiders 3 und stromauf des Phasenverstellers 10 angeordnet. Der Partikelabscheider 20 kann insbesondere unmittelbar stromauf des Phasenverstellers 10 angeordnet sein, so dass das vom Partikelabscheider 20 von potentiell schädigenden Schmutzpartikeln weitgehend befreite Schmieröl direkt dem Phasenversteller zur Verfügung steht und nicht erst über längere Zuführleitungen oder gar eine zwischengeschaltete Verbrauchsstelle zum Phasenversteller 10 strömt.

Der Partikelabscheider 20 ist zumindest teilweise stromauf des Phasenverstellers 10 angeordnet. Dies bedeutet, dass zumindest ein Teil des Partikelabscheiders 20 stromauf eines Druckanschlusses des Phasenverstellers 10 angeordnet ist. Umfasst der Partikelabscheider 20 mehrere in Bezug auf die Strömungsrichtung des Schmieröls hintereinander geschaltete Abscheidestufen, ist wenigstens eine der Abscheidestufen stromauf des Druckanschlusses des Phasenverstellers 10 angeordnet. Grundsätzlich kann zwar eine Abscheidestufe oder ein Teil einer Abscheidestufe eines mehrstufigen Partikelabscheiders 20 im Phasenversteller 10 angeordnet sein, beispielsweise durch den Druckanschluss des Phasenverstellers 10 in ein Steuerventil des Phasenverstellers 10 ragen, zweckmäßigerweise ist der Partikelabscheider 20 jedoch gänzlich außerhalb des Phasenverstellers 10 angeordnet. Durch die Anordnung zumindest teilweise, vorzugsweise gänzlich außerhalb des Phasenverstellers 10 kann der Partikelabscheider 20 frei von Beschränkungen ausgelegt werden, denen die herkömmlicherweise in Phasenverstellern angeordneten Filtersiebe aufgrund der nur sehr begrenzt in Phasenverstellen zur Verfügung stehenden Einbauräume unterliegen. Dies eröffnet bislang nicht genutzte Spielräume für die Auslegung des Partikelabscheiders 20 in Abstimmung auf die Abscheideeigenschaften des Hauptölabscheiders 3, der ebenfalls zum Partikelabscheidesystem gehört.

Figur 2 zeigt ein System von mehreren Phasenverstellern 10, denen jeweils ein eigener Partikelabscheider 20 zugeordnet ist. Für jedes Paar aus Phasenversteller 10 und zugeordnetem Partikelabscheider 20 gilt das vorstehend zur Figur 1 Gesagte. Die Phasenversteller 10 und Partikelabscheider 20 der Figur 2 können den Phasenversteller 10 und den Partikelabscheider 20 in Figur 1 ersetzen. In Figur 2 sind beispielhaft zwei Phasenversteller 10 und dementsprechend zwei Partikelabscheider 20 dargestellt. Weist der Verbrennungsmotor mehr als zwei in der Drehwinkelposition verstellbare Nockenwellen und dementsprechend mehr als zwei Phasenversteller 10 auf, so kann bei einem derart erweiterten System von Phasenverstellern 10 jedem der Phasenversteller 10 des Systems ein eigener Partikelabscheider 20 zugeordnet sein, wie dies in Figur 2 für nur zwei Phasenversteller 10 dargestellt ist.

Figur 3 zeigt ein System von mehreren Phasenverstellern 10, denen im Unterschied zum System der Figur 2 nur ein einziger, gemeinsamer Partikelabscheider 20 zugeordnet ist. Dargestellt ist ein System mit nur zwei Phasenverstellern 10. Umfasst das System mehr als zwei Phasenversteller 10, können die dann drei oder mehr Phasenversteller 10 mit dem vom gemeinsamen Partikelabscheider 20 gereinigten Schmieröl versorgt werden. Das System der Phasenversteller 10 mit dem gemeinsamen Partikelabscheider 20 kann den Phasenversteller 10 und den Partikelabscheider 20 im Schmierölkreis der Figur 1 ersetzen.

Umfasst ein System von Phasenverstellern 10 drei oder mehr Phasenversteller 10, sind hinsichtlich der Versorgung mit gereinigtem Schmieröl auch Mischformen der in den Figuren 2 und 3 dargestellten Zuordnungen möglich. So können bei drei Phasenverstellern 10 beispielsweise zwei Phasenversteller 10 über einen gemeinsamen Partikelabscheider 20, wie in Figur 3, und der dritte Phasenversteller 10 über einen eigenen, nur ihm zugeordneten Partikelabscheider 20, wie in Figur 2, versorgt werden. Bei vier Phasenverstellern 10 können beispielsweise jeweils zwei dieser Phasenversteller 10 zu einer Gruppe, wie in Figur 3, zusammengefasst und jeweils über einen gemeinsamen Partikelabscheider 20 mit dem gereinigten Schmieröl versorgt werden.

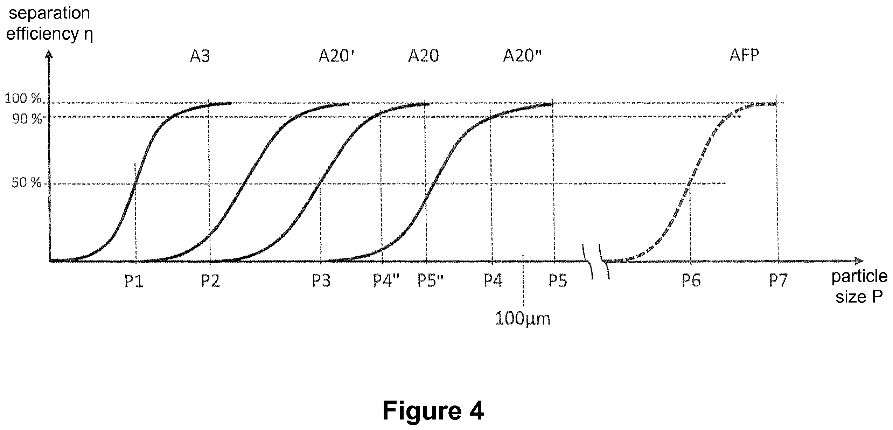

In Figur 4 sind die Abscheidekurve A3 des Hauptölabscheiders 3, Abscheidekurven A20, A20' und A20" für jeweils einen Partikelabscheider 20 und zum Vergleich die Abscheidekurve AFP eines Filtersiebs, wie es im Stand der Technik typischerweise im Phasenversteller angeordnet ist, dargestellt. Die Abscheidekurven zeigen den Abscheidegrad in Prozent in Abhängigkeit von der Partikelgröße P, bei der der jeweilige Abscheidegrad erreicht wird, das heißt als Funktion von P. Bezogen auf die Abscheidekurve A3 bedeutet dies, dass der Hauptölabscheider 3 für Schmutzpartikel der Partikelgröße P1 einen Abscheidegrad von 50 % und für Schmutzpartikel der Größe P2 einen Abscheidegrad von nahezu 100 % aufweist. Durchströmt das Schmieröl bei betriebswarmem Verbrennungsmotor den Hauptölabscheider 3, werden 50 % der in dem Schmieröl enthaltenen Partikel der Partikelgröße P1 und nahezu 100 % der Partikel der Partikelgröße P2 im Hauptölabscheider 3 zurückgehalten, während 50 % der Partikel der Partikelgröße P1 und ein höherer Prozentsatz noch kleinerer Partikel den Hauptölabscheider 3 durchströmen und in die Schmierölgalerie 5 (Figur 1) gelangen. Die Partikelgröße P1 kann beispielsweise im Bereich von 10 µm bis 20 µm und insbesondere im Bereich von 12 bis 15 µm liegen. Die Partikelgröße P2 kann beispielsweise im Bereich von 30 µm bis 50 µm und insbesondere im Bereich von 30 µm bis 40 µm liegen. Dies entspricht den Abscheidegraden der im Kraftfahrzeugbau üblichen Hauptölabscheider 3.

Die Abscheidekurven A20, A20' und A20" zeigen Möglichkeiten der Abstimmung des Partikelabscheiders 20 auf die Abscheideeigenschaften des Hauptölabscheiders 3.

Die Abscheidekurve A20' überlappt mit der Abscheidekurve A3. Weist der Partikelabscheider 20 die Abscheidekurve A20' auf, werden im Partikelabscheider 20 daher auch sehr kleine Schmutzpartikel, die den Hauptölabscheider 3 durchströmen, in einem messbaren Ausmaß abgeschieden. Eine nennenswerte Abscheidung setzt bereits für Partikel mit einer Partikelgröße ein, die zwischen P1 und P2 liegt.

Die Abscheidekurve A20" ist von der Abscheidekurve A3 ein Stück weit abgesetzt. Dies bedeutet, dass ein die Abscheidekurve A20" aufweisender Partikelabscheider 20 Schmutzpartikel erst ab einer Partikelgröße, die über der Partikelgröße P2 liegt, in einem messbaren Ausmaß abscheidet. Die Abscheidung kann bei einem derartigen Partikelabscheider 20 beispielsweise erst ab einer Partikelgröße von 60 µm oder 70 µm einsetzen, während ein Abscheidegrad von 90 % bei einer Partikelgröße von P4", mit P4" < 100 µm, beispielsweise bei P4" = 90 µm, erreicht wird.

Unter der Zielsetzung eines möglichst wirksamen Schutzes des zugeordneten Phasenverstellers 10 oder des zugeordneten Systems von Phasenverstellern 10 einerseits und eines wartungsfreien Betriebs sowie einer möglichst langen Lebensdauer andererseits ist eine Auslegung des Partikelabscheiders 20 entsprechend der Abscheidekurve A20 besonders günstig. Beim Partikelabscheider 20 mit der Abscheidekurve A20 setzt eine messbare Abscheidung von Schmutzpartikeln unmittelbar ab der Partikelgröße P2 ein. Die Abscheidekurve A20 überlappt nicht oder in Standard-Prüfversuchen nicht messbar mit der Abscheidekurve A3 des Hauptölabscheiders 3, setzt aber unmittelbar oder zumindest nahe bei der Partikelgröße P2, bei der der Hauptölabscheider 3 einen Abscheidegrad von wenigstens 90 % oder, bevorzugter, nahezu 100 % erreicht, an. Bei einer Partikelgröße P4 von weniger als 100 µm erreicht der Partikelabscheider 20 einen Abscheidegrad von 90 % und für Partikel einer mittleren Partikelgröße P5 > P4 einen Abscheidegrad von nahezu 100 %. Die Partikelgröße P4, bei der der Partikelabscheider 20 einen Abscheidegrad von 90 % aufweist, liegt vorteilhafterweise unter 90 µm und kann insbesondere unter 80 µm liegen. Mit der Abscheidekurve A20 erreicht der Partikelabscheider 20 einen Abscheidegrad von nahezu 100 %, wie etwa 97 %, bereits für Partikel der Partikelgröße P5, die kleiner ist als die mittlere Partikelgröße P4" eines entsprechend der Abscheidekurve A20" gröberen aber immer noch erfindungsgemäßen Partikelabscheiders 20. Ein Abscheidegrad von 50 % wird in allen drei Fällen erst bei einer Partikelgröße P3, mit P3 > P2, erreicht. Aus Platzgründen sind die Partikelgrößen der η_{3,50}-Abscheidegrade zu den Abscheidekurven A20' und A20" nicht eingetragen.

Der Partikelabscheider 20 ist im besonderen Maße dafür geeignet, im Schmierölkreis noch aus der Produktion des Verbrennungsmotors vorhandenen Urschmutz vom Phasenversteller 10 oder den mehreren Phasenverstellern 10 fernzuhalten. Urschmutz bilden beispielsweise Sand- und Korundpartikel, die noch vom Gießformen von Motorblockteilen und/oder aus einer Strahlbehandlung von Motorteilen im Bereich der schmierölführenden Leitungen verblieben sind. Urschmutz kann während der Einfahrzeit des Motors zu dem oder den mehreren Phasenversteller(n) 10 gelangen, würde der Urschmutz nicht wirksam durch den Partikelabscheider 20 oder die mehreren Partikelabscheider 20 abgeschieden werden. Urschmutz kann sich grundsätzlich auch noch nach längerem Betrieb lösen und, sollte ein Partikelabscheider 20 nicht vorgesehen sein, zu dem oder den Phasenversteller(n) 10 gelangen, bevor er im Hauptölabscheider 3 abgeschieden wird. Schmutzpartikel einer potentiell schädigenden Partikelgröße können vor allem auch in Kaltstartphasen des Verbrennungsmotors in den Schmierölkreis gelangen, wenn nämlich das Bypass-Ventil 3a geöffnet ist und die Schmierölpumpe 1 das Schmieröl daher unter Umgehung des Hauptölabscheiders 3 zur Schmierölgalerie 5 fördert. Weitere Ursachen für den Eintrag vergleichsweise großer Schmutzpartikel sind Reparaturarbeiten an Komponenten des Verbrennungsmotors, die mit dem Schmieröl in Berührung kommen, und auch Wechsel des Hauptölabscheiders 3, wie sie routinemäßig nach Erreichen der für den Hauptölabscheider 3 vorgesehenen Lebensdauer durchgeführt werden. Indem andererseits der oder die Partikelabscheider 20 einen Abscheidegrad von 50 % (η_{3,50}) erst bei einer mittleren Partikelgröße P3 erreichen, die größer als die Partikelgröße P1, bevorzugt größer als die Partikelgröße P2 für den 90%-Abscheidegrad (η_{3,90}) des Hauptölabscheiders 3 ist, wird der Gefahr eines Zusetzens des Partikelabscheiders 20 entgegengewirkt.

Wie die im Diagramm der Figur 4 zu Vergleichszwecken eingetragene Abscheidekurve AFP zeigt, erreichen die für Phasenversteller bislang verwendeten Filtersiebe, die jeweils im Phasenversteller angeordnet sind, Abscheidegrade von 50 %, 90 % und nahe 100 % erst für Schmutzpartikel mit Partikelgrößen zwischen P6 und P7, die deutlich oberhalb 100 µm, typischerweise auch noch oberhalb von 200 µm liegen. Das Partikelabscheidesystem der Erfindung kann einen Partikelabscheider im jeweiligen Phasenversteller 10 umfassen, erforderlich ist dies jedoch nicht, da der vorteilhafterweise nahe oder bevorzugt unmittelbar am Phasenversteller 10 angeordnete Partikelabscheider 20 eine wirksamere Partikelabscheidung gewährleistet.

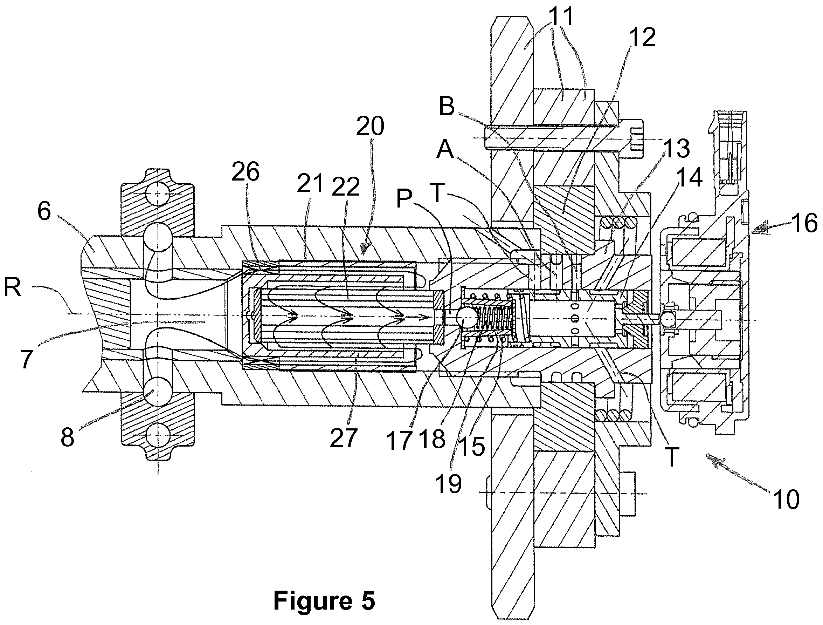

Figur 5 zeigt einen Phasenversteller 10 und einen nur diesem Phasenversteller 10 zugeordneten Partikelabscheider 20, wie sie in den Figuren 1 und 2 schematisch dargestellt sind. Der Phasenversteller 10 umfasst einen Stator 11, der von einer Kurbelwelle des Verbrennungsmotors in fester Drehzahlbeziehung zur Kurbelwelle angetrieben wird, und einen Rotor 12, der mit einer Nockenwelle 6 drehunbeweglich verbunden ist. Der Stator 11 umgibt den Rotor 12 über dessen äußeren Umfang. Der Stator 11 und der Rotor 12 sind um die Drehachse R der Nockenwelle 6 drehbar, wobei der Rotor 12 relativ zum Stator 11 innerhalb eines vorgegebenen Drehwinkelbereichs in eine Voreilrichtung und der Voreilrichtung entgegen in eine Nacheilrichtung hin und her beweglich ist, um die Drehwinkelposition der Nockenwelle 6 relativ zur Kurbelwelle verstellen zu können.

Der Phasenversteller 10 ist als Flügelmotor ausgebildet. Dementsprechend ragt ein oder ragen mehrere Flügel vom Innenumfang des Stators 11 radial nach innen vor, während vom äußeren Umfang des Rotors 12 ein oder mehrere Flügel radial nach außen abragen, so dass zwischen jeweils einem Flügel des Stators 11 und einem in Umfangsrichtung benachbarten Flügel des Rotors 12 eine Druckkammer gebildet wird, in die das Schmieröl als Druckmedium einführbar ist. Im Phasenversteller 10 sind wenigstens zwei derartige Druckkammern gebildet, eine Druckkammer zur Verstellung des Rotors in die eine Drehrichtung und die andere Druckkammer zur Verstellung in die andere Drehrichtung, so dass der Rotor 12 relativ zum Stator 11 wahlweise entweder auf Voreilung oder Nacheilung verstellt werden kann. Der Stator 11 und der Rotor 12 können insbesondere jeweils mehrere derart zusammenwirkende Flügel aufweisen, so dass zwischen dem Stator 11 und dem Rotor 12 um die Drehachse R verteilt mehrere Druckkammern für die Verstellung in Richtung auf Voreilung und mehrere Druckkammern für die Verstellung in Richtung auf Nacheilung, gebildet sind.

Der Phasenversteller 10 weist ein Steuerventil mit einem Ventilgehäuse 13 und einem im Ventilgehäuse 13 zwischen Steuerpositionen hin und her beweglichen Ventilkolben 14 auf. Der Ventilkolben 14 wird von einer Ventilfeder 15 in die eine Richtung seiner Bewegbarkeit mit einer Federkraft beaufschlagt und kann mittels einer Elektromagneteinrichtung 16 gegen die elastische Rückstellkraft der Ventilfeder 15 in die Gegenrichtung bewegt werden.

Das Steuerventil weist einen Druckanschluss P, einen Arbeitsanschluss A, einen Arbeitsanschluss B und wenigstens einen Tankanschluss T, im Ausführungsbeispiel zwei Tankanschlüsse T, auf. Das Steuerventil ist am Druckanschluss P an den Schmierölkreis angeschlossen, so dass unter Druck stehendes Schmieröl durch den Druckanschluss P in das Steuerventil und somit in den Phasenversteller 10 einströmen kann. Einer der Arbeitsanschlüsse A und B ist mit der oder den Druckkammern für die Verstellung des Rotors 12 in die Voreilrichtung und der andere der Arbeitsanschlüsse A und B ist mit der oder den Druckkammern für die Verstellung des Rotors 12 in die Nacheilrichtung verbunden. In Abhängigkeit von der Steuerposition des Ventilkolbens 14 ist der Druckanschluss P entweder mit dem Arbeitsanschluss A oder mit dem Arbeitsanschluss B verbunden, so dass das unter Druck stehende Schmieröl über den betreffenden Arbeitsanschluss A oder B in die zugeordnete(n) Druckkammer(n) strömt und der Rotor 12 relativ zum Stator 11 in die entsprechende Drehrichtung verstellt wird. Der andere der Arbeitsanschlüsse A und B ist zur gleichen Zeit mit einem der Tankanschlüsse T verbunden, so dass das Schmieröl über diesen anderen Arbeitsanschluss A oder B und den zugeordneten Tankanschluss T zum Schmierölreservoir S (Figur 1) abströmen kann und die zugeordnete(n) Druckkammer(n) im Druck entlastet wird oder werden.

Das Steuerventil ist als sogenanntes Zentralventil ausgeführt, ragt also zentral in axialer Richtung in den Rotor 12. Das Ventilgehäuse 13 dient gleichzeitig der drehunbeweglichen Verbindung des Rotors 12 mit der Nockenwelle 6. Zur Ausübung dieser Funktion durchragt es den Rotor 12 in Richtung auf ein Montageende der Nockenwelle 6 und ist im Bereich des Montageendes mit der Nockenwelle 6 fest verbunden, beispielsweise verschraubt oder verpresst.

Zwischen dem Druckanschluss P und den Arbeitsanschlüssen A und B ist ein Rückschlagventil im Ventilgehäuse 13 angeordnet. Das Rückschlagventil umfasst ein Sperrorgan 17, eine Sperrorganfeder 18 und eine Stützstruktur 19. Das Sperrorgan 17 kann insbesondere eine Kugel sein. Die Sperrorganfeder 18 beaufschlagt das Sperrorgan 17 in Richtung auf eine Sperrposition, in der es den Druckanschluss P verschließt, so dass eine Rückströmung von Schmieröl in Richtung auf den Partikelabscheider 20 verhindert wird. Bei Erreichen eines gewissen Mindestdrucks hebt das Sperrorgan 17 von seinem Sitz ab, so dass Schmieröl in das Steuerventil strömen und entsprechend der Steuerposition des Ventilkolbens 14 über entweder den Arbeitsanschluss A oder den Arbeitsanschluss B in die jeweils zugeordnete(n) Druckkammer(n) strömen kann. Die Sperrorganfeder 18 ist an ihrem dem Sperrorgan 17 gegenüberliegenden Ende an der Stützstruktur 19 abgestützt. Die Stützstruktur 19 ist im Ventilgehäuse 13 mittels Rastverbindung formschlüssig gehalten.

Weitere konstruktive Details und auch weitere Details zur Funktionsweise des Phasenverstellers 10 werden in der EP 2 578 818 B1 und auch in der US 9,021,997 B2 beschrieben. Hinsichtlich vorteilhafter Ausgestaltungen des Phasenverstellers 10 wird auf diese Druckschriften verwiesen.

Der Partikelabscheider 20 ist stromauf und vollständig außerhalb des Phasenverstellers 10, gleichwohl in unmittelbarer Nähe des Phasenverstellers 10, nämlich unmittelbar am Druckanschluss P des Phasenverstellers 10, angeordnet. Der Partikelabscheider 20 ist in einem Hohlraum 7 der Nockenwelle 6 angeordnet. Das Schmieröl wird dem Phasenversteller 10 dementsprechend durch die Nockenwelle 6, nämlich durch den Hohlraum 7, zugeführt. Der Hohlraum 7 ist genauer gesagt in dem Endabschnitt der Nockenwelle 6 gebildet, an dem der Phasenversteller 10 mittels des Ventilgehäuses 13 befestigt ist. Auf diese Weise kann der Partikelabscheider 20 in größtmöglicher Nähe zum Phasenversteller 10 angeordnet werden.

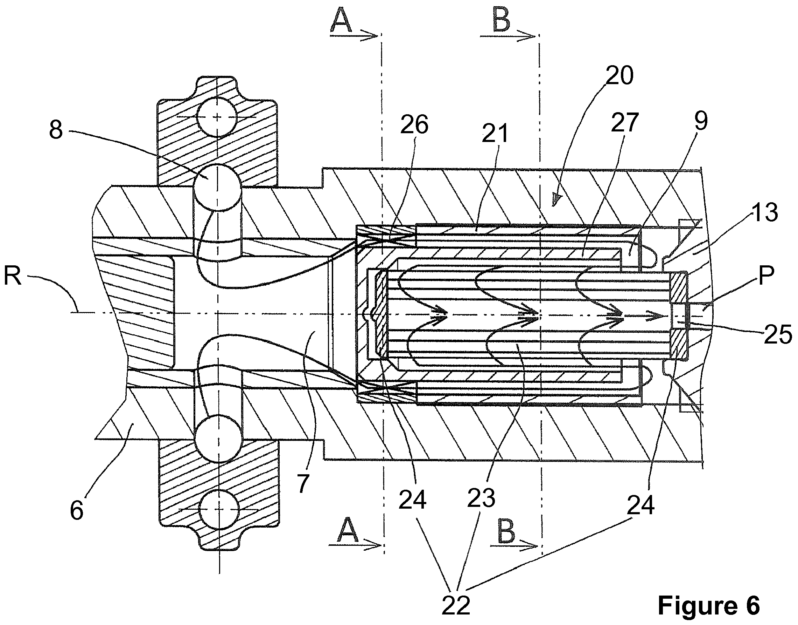

Figur 6 zeigt den der Montage des Phasenverstellers 10 dienenden Endabschnitt der Nockenwelle 6 mit dem darin angeordneten Partikelabscheider 20 in einer vergrößerten Darstellung.

Der Partikelabscheider 20 umfasst eine stromaufwärtige erste Abscheidestufe 21 und eine in Bezug auf die Strömungsrichtung des Schmieröls stromabwärtige zweite Abscheidestufe 22, die das Schmieröl nacheinander durchströmt, bevor es durch den Druckanschluss P in das Steuerventil und somit in den Phasenversteller 10 gelangen kann. Die erste Abscheidestufe 21 ist ein Fliehkraftabscheider, in dem im Schmieröl enthaltene Schmutzpartikel aufgrund Zentrifugalkraft abgeschieden werden. Die zweite Abscheidestufe 22 ist als Filterstruktur mit einem Filtermedium 23 für das Schmieröl gebildet. Das Schmieröl muss das Filtermedium 23 auf dem Weg zum Phasenversteller 10 durchströmen.

Das Schmieröl strömt über einen Einlass 8 in den Hohlraum 7. Im Betrieb des Verbrennungsmotors dreht die Nockenwelle 6 um die Drehachse R, die gleichzeitig auch eine zentrale Längsachse des Hohlraums 7 ist. Das Schmieröl wird aufgrund der Drehbewegung der Nockenwelle 6 im Hohlraum 7 in eine Drehbewegung um die Drehachse R versetzt. Um die Drehbewegung zu verstärken, ist der Einlass 8 so gestaltet, dass das Schmieröl mit einer zur Drehachse R tangentialen Richtungskomponente in den Hohlraum 7 strömt, wobei die Einströmrichtung in die Drehrichtung der Nockenwelle 6 weist. Zwischen der Nockenwelle 6 und einem die Nockenwelle 6 umgebenden Körper, beispielsweise einem Lagerkörper, kann ein Ringspalt gebildet sein, von dem ein oder mehrere Einlasskanäle mit tangentialer Richtungskomponente nach innen bis zu einer oder mehreren in den Hohlraum 7 mündende(n) Einlassöffnung(en) führt oder führen. Unmittelbar stromauf des Ringkanals kann ein nicht drehender Ölzuführkanal bereits tangential zur Drehachse R in den Ringkanal münden, wobei dieser stromaufwärtige Zuführkanal zweckmäßigerweise in Drehrichtung der Nockenwelle 6 in den Ringkanal mündet. Das Schmieröl erhält somit bereits beim Einströmen in den Ringkanal einen Drehimpuls, wird im Ringkanal von der drehenden Nockenwelle 6 mitgerissen und wird im Einlassbereich der Nockenwelle 6 zwischen dem Ringkanal und den Einlassöffnungen in den Hohlraum 7 ebenfalls mit tangentialer Richtungskomponente geführt.

Im Hohlraum 7 ist stromauf der ersten Abscheidestufe 21 eine Umlenkstruktur 26 angeordnet, die das Schmieröl noch einmal mit einer tangential zur Drehachse R weisenden Richtungskomponente gleichsinnig zur Drehrichtung der Nockenwelle 6 umlenkt, wodurch die Drehgeschwindigkeit der Schmierölströmung im Hohlraum 7 noch einmal erhöht wird. Vorteilhafterweise ist die Drehgeschwindigkeit der Schmierölströmung unmittelbar nach dem Einströmen in den Hohlraum 7 oder nach dem Durchströmen der Umlenkstruktur 26 größer als die Drehgeschwindigkeit der Nockenwelle 6, so dass die Schmierölströmung der Nockenwelle 6 in Drehrichtung voreilt.

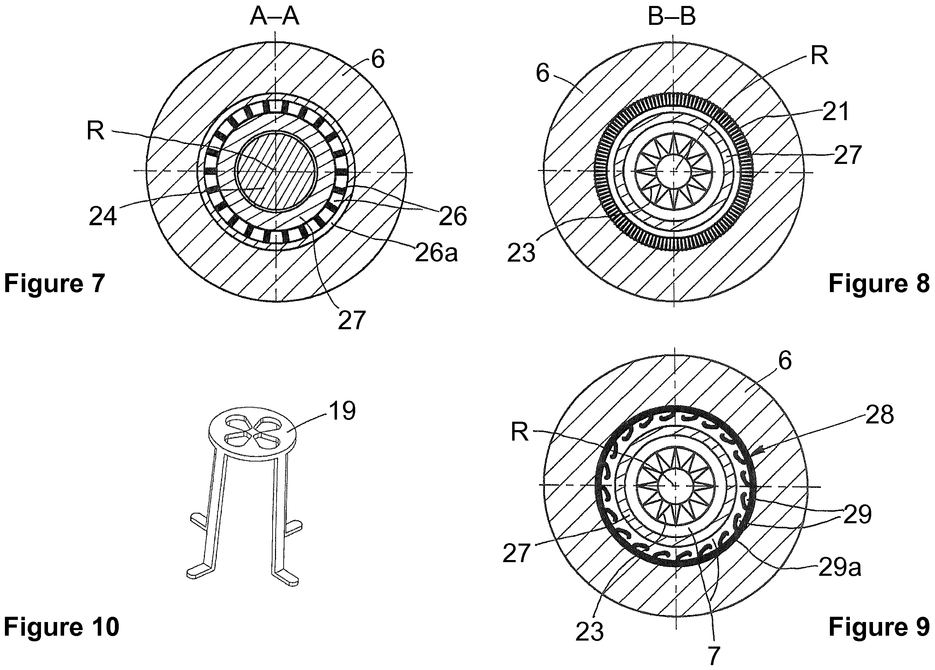

Figur 7 zeigt den Querschnitt A-A der Figur 6, zeigt also insbesondere die Umlenkstruktur 26. Die Umlenkstruktur 26 weist um die Drehachse R verteilt mehrere platten-, rippen- oder schalenförmige Umlenkelemente auf, zwischen denen das Schmieröl die Umlenkstruktur 26 in axialer Richtung durchströmen kann und hierbei in tangentialer Richtung umgelenkt wird. Die Umlenkelemente, die in Figur 7 ebenfalls mit 26 bezeichnet sind, sind an einem der Befestigung im Hohlraum 7 dienenden Montagering 26a nach radial innen ragend angeordnet.

Die erste Abscheidestufe 21 ist, wie bereits erwähnt, ein Fliehkraftabscheider. Sie umfasst ein hülsenförmiges Aufnahmemedium, das eine Innenumfangswand des Hohlraums stromab der Umlenkstruktur 26 auskleidet. Schmutzpartikel werden aufgrund der auf das Schmieröl wirkenden Zentrifugalkraft nach außen gegen und in das Aufnahmemedium des Fliehkraftabscheiders 21 gepresst. Das Aufnahmemedium ist so gebildet, dass es die aufgenommenen Schmutzpartikel ab einer gewissen Partikelgröße zurückhält.

Figur 8 zeigt unter anderem die stromab des Fliehkraftabscheiders 21 angeordnete Filterstruktur 22 im Querschnitt B-B der Figur 6. Die Filterstruktur 22 umfasst ein vom Schmieröl durchströmbares Filtermedium 23 und eine das Filtermedium 23 stützende Stützstruktur 24 (Figuren 6 und 7), die gleichzeitig auch der Montage der Filterstruktur 22 dient. Das Filtermedium 23 ist plissiert, d. h. es ist um die Drehachse R umlaufend in Falten gelegt, um eine möglichst große Filteroberfläche zu erhalten. Das Filtermedium 23 umgibt einen axial langgestreckten, von Filtermaterial freibleibenden Filterinnenraum, durch den das gereinigte Schmieröl in axialer Richtung unmittelbar zum Druckanschluss P abströmen kann. Die Stützstruktur 24 bildet einen dem Druckanschluss P axial zugewandten und einen vom Druckanschluss P axial abgewandten Endbereich der Filterstruktur 22. Der dem Druckanschluss P zugewandte Endbereich weist einen Filterauslass 25 als zentralen Durchlass für das Schmieröl auf. Der Filterauslass 25 fluchtet axial mit dem Druckanschluss P, so dass das gereinigte Schmieröl besonders widerstandsarm abströmen kann.

Wie in den Figuren 6 bis 8 erkennbar, sind die beiden Abscheidestufen 21 und 22, d. h. der Fliehkraftabscheider 21 und die Filterstruktur 22, konzentrisch zueinander und mit der Drehachse R als zentraler Filterachse angeordnet. Die Filterstruktur 22 ragt mit ihrem Filtermedium 23 axial in den Fliehkraftabscheider 21, im Ausführungsbeispiel durchragt das Filtermedium 23 den Fliehkraftabscheider 21. Um dennoch eine sequentielle Durchströmung der Abscheidestufen 21 und 22 zu erzielen, ist im Hohlraum 7 eine hülsenförmige Strömungsleitstruktur 27 angeordnet, die an einer dem Einlass 8 zugewandten Seite einen geschlossenen, d. h. vom Schmieröl nicht durchströmbaren Boden aufweist und von diesem Boden aus axial in ein zwischen dem Fliehkraftabscheider 21 und der Filterstruktur 22 gelegenes, ringförmiges Hohlraumvolumen 9 und wie bevorzugt, aber nur beispielhaft bis nahe zum stromabwärtigen Ende des Fliehkraftabscheiders 21 ragt.

Die Strömungsleitstruktur 27 begrenzt die Umlenkstruktur 26 nach radial innen. Das durch den Einlass 8 in den Hohlraum strömende Schmieröl wird im Ergebnis von der Strömungsleitstruktur 27 nach radial außen gedrängt, so dass es die Umlenkstruktur 26 durchströmen muss. Nach dem Durchströmen der Umlenkstruktur 26 strömt das Schmieröl axial und mit einer der Axialbewegung überlagerten Drehbewegung durch einen von dem Fliehkraftabscheider 21 radial außen und der Strömungsleitstruktur 27 radial innen begrenzten äußeren Ringraum, wird am Ende der Strömungsleitstruktur 27 nach radial innen in Richtung auf das Filtermedium 23 umgelenkt und verteilt sich aufgrund seines Förderdrucks in einem zwischen der Strömungsleitstruktur 27 und dem Filtermedium 23 freibleibenden inneren Ringraum gleichmäßig über die äußere Oberfläche des Filtermediums 23. Nimmt der Phasenversteller 10 Schmieröl ab, umströmt das mittels des Fliehkraftabscheiders 21 vorgereinigte Schmieröl das Filtermedium 23 in axialer und tangentialer Richtung, um schließlich durch das Filtermedium 23 in den hohlen Filterinnenraum und dort zum Filterauslass 25 und durch diesen in und durch den Druckanschluss P des Phasenverstellers 10 zu strömen.

Das Aufnahmemedium des Fliehkraftabscheiders 21 kann insbesondere Fasermaterial enthalten oder aus Fasermaterial bestehen. Besonders geeignet sind Vliesmaterialien. Das Aufnahmemedium kann stattdessen auch ein Gewebematerial oder eine Maschenware sein oder ein Gewebematerial und/oder Maschenware enthalten, beispielsweise zusätzlich zu Vliesmaterial. Offenporiges Schaummaterial ist ebenfalls ein geeignetes Aufnahmemedium und kann anstelle der genannten anderen Aufnahmemedien oder in Kombination mit einem oder mehreren dieser anderen Aufnahmemedien, das Aufnahmemedium des Fliehkraftabscheiders 21 bilden. Das Aufnahmemedium kann einlagig oder mehrlagig sein, beispielsweise eine oder mehrere Vlieslagen und eine oder mehrere Gewebelagen in radialer Schichtung umfassen. Es kann als Gradientenmedium gebildet sein, derart, dass es an seinem in Richtung auf die Filterstruktur 22 weisenden Innenumfang eine vergleichsweise große Porosität aufweist, die sich radial nach außen verkleinert. In weiteren Abwandlungen kann der Fliehkraftabscheider 21 eine hülsenförmige Lochblende umfassen. Eine perforierte Hülsenstruktur kann einen geringfügig kleineren Außendurchmesser als der Hohlraum 7 aufweisen, so dass von der Drehachse R aus gesehen radial hinter solch einer perforierten, siebartigen Struktur ein Aufnahmeraum für die im Fliehkraftabscheider 21 abgeschiedenen Schmutzpartikel verbleibt. In dem Aufnahmeraum kann Vliesmaterial und/oder Gewebematerial und/oder Maschenmaterial und/oder ein offenporiges Schaummaterial angeordnet sein, um die abgeschiedenen Schmutzpartikel noch sicherer zurückzuhalten.

Das Aufnahmemedium kann aus Kunststoff, Glas oder Papier bestehen oder solches Material enthalten, beispielsweise Kunstsoff- und/oder Glasfasern und/oder ein Kunststoffgewebe und/oder offenporigen Schwamm aus Kunststoff. Stattdessen oder zusätzlich kann das Aufnahmemedium ein Metallmaterial enthalten, beispielsweise Metallfasern und/oder Metallpartikel und/oder ein Metallgewebematerial und/oder Metallvlies und/oder offenporigen Metallschaum. Auch Kombinationen aus Kunststoffmaterial und Metallmaterial sind möglich. Bei Verwendung eines magnetischen Metallmaterials kann das Aufnahmemedium ferritische Partikel auch ungeachtet der Partikelgröße abscheiden.

Das zum Material des Aufnahmemediums Gesagte gilt in gleicher Weise auch für das Material des Filtermediums 23.

Figur 9 zeigt eine alternative Ausführung für den Fliehkraftabscheider 21 in einem Querschnitt durch die Nockenwelle 6. Dabei kann es sich um die gleiche Querschnittsebene wie in Figur 8 handeln. Der Fliehkraftabscheider 28 der Figur 9 kann den Fliehkraftabscheider der Figur 8 ersetzen. Der Fliehkraftabscheider 28 weist um die Drehachse R verteilt eine Vielzahl von Schaufeln auf, die von einer Umfangswand des Hohlraums 7 nach radial innen und im Wesentlichen in tangentialer Richtung ragen, so dass zwischen der Umfangswand und den Schaufeln Taschen 29 zur Aufnahme von durch die Zentrifugalkraft nach außen gezwungenen Schmutzpartikeln gebildet werden. Die Aufnahmetaschen 29 öffnen sich in Drehrichtung der Nockenwelle 6. Über die Aufnahme der Schmutzpartikel hinaus erfüllen die Schaufeln auch eine Drehmitnahmefunktion für das Schmieröl. Die Drehmitnahme wird aber auch durch das Aufnahmemedium des Fliehkraftabscheiders 21 gegenüber einer glatten Hohlraumumfangswand verbessert. Der Fliehkraftabscheider 28 der Figur 9 umfasst ferner einen der Montage dienenden Montagering 29a, von dem die Schaufeln nach radial innen und in tangentialer Richtung vorragen.

Figur 10 zeigt die Stützstruktur 19 des im Steuerventil angeordneten Rückschlagventils (Figur 5). Die Stützstruktur 19 weist an einem axialen Ende eine vom Schmieröl durchströmbare Stützscheibe und von der Stützscheibe axial und nach radial außen abragende Haltearme auf. Die Stützstruktur 19 ist so gebildet, dass sie dem durch den Druckanschluss P in das Steuerventil strömenden Schmieröl möglichst wenig Widerstand entgegensetzt. An den von der Stützscheibe axial abgewandten Enden weisen die Haltearme nach außen abragende Halteelemente auf, mit denen die Stützstruktur 19 eine im Ventilgehäuse 13 vorhandene Schulter hintergreift, um die Kraft der Sperrorganfeder 18 aufnehmen zu können.

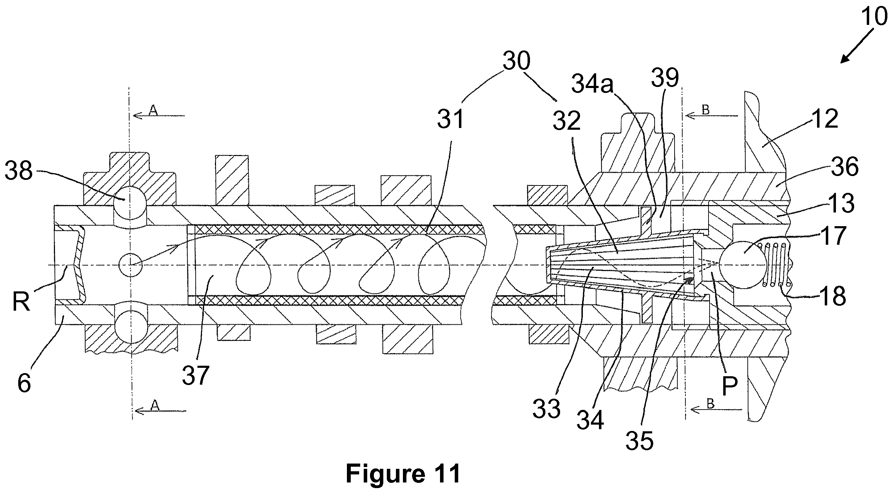

Figur 11 zeigt einen Partikelabscheider 30 in einem zweiten Ausführungsbeispiel. Der Partikelabscheider 30 ist ebenfalls unmittelbar stromauf des Phasenverstellers 10 angeordnet. Der Phasenversteller 10 kann dem Phasenversteller 10 des ersten Ausführungsbeispiels vollkommen entsprechen oder, wie in Figur 11 erkennbar und nachfolgend erläutert, in Details von diesem abweichen. Soweit der dem Partikelabscheider 30 zugeordnete Phasenversteller 10 nicht näher beschrieben wird, entspricht er jedenfalls dem Phasenversteller 10 des ersten Ausführungsbeispiels.

Der Partikelabscheider 30 weist ebenfalls eine erste Abscheidestufe 31 und eine zweite Abscheidestufe 32 auf, die vom Schmieröl auf dem Weg zum Phasenversteller 10 nacheinander, also sequentiell, durchströmt werden. Die stromaufwärtige erste Abscheidestufe ist wie im ersten Ausführungsbeispiel als Fliehkraftabscheider 31 gebildet. Die stromabwärtige zweite Abscheidestufe ist ebenfalls wie im ersten Ausführungsbeispiel als Filterstruktur 32 gebildet. Allerdings sind die Abscheidestufen 31 und 32 nicht nur in Bezug auf die Strömungsrichtung des Schmieröls, sondern auch in axialer Richtung hintereinander oder zumindest im Wesentlichen hintereinander angeordnet. Der Fliehkraftabscheider 31 ist gänzlich im Hohlraum 37 der Nockenwelle 6 angeordnet und weist ein am Innenumfang der Nockenwelle 6 angeordnetes Aufnahmemedium auf. Hinsichtlich des Aufnahmemediums des Fliehkraftabscheiders 31 gelten die zum ersten Ausführungsbeispiel gemachten Ausführungen gleichermaßen. Das Aufnahmemedium kann insbesondere ein Fasermaterial sein, das einen Axialabschnitt der Umfangswand des Hohlraums 37 auskleidet. Auch die erläuterten alternativen Aufnahmemedien können stattdessen oder zusätzlich verwirklicht sein.

Die Filterstruktur 32 umfasst, wie ebenfalls im ersten Ausführungsbeispiel, ein vom Schmieröl zu durchströmendes Filtermedium 33 und eine Stützstruktur 34, die das Filtermedium 33 stützt und der Montage der Filterstruktur 32 unmittelbar am Druckanschluss P dient. Das Filtermedium 33 ist wie im ersten Ausführungsbeispiel plissiert, indem es um die Drehachse R umlaufend in Falten gelegt ist. Das Schmieröl gelangt nach Durchströmen des Fliehkraftabscheiders 31 zur Filterstruktur 32, umströmt deren äußeren Umfang axial mit überlagerter Drehbewegung, also spiralförmig, durchströmt das Filtermedium 33 und strömt im zentralen, freibleibenden Filterinnenraum in axialer Richtung zum Druckanschluss P, der mit dem Filterinnenraum wie im ersten Ausführungsbeispiel axial fluchtet.

Solange der Phasenversteller 10 kein Schmieröl abnimmt, ist zumindest der Fliehkraftabscheider 31 wirksam, wobei mit zunehmender Verweildauer ein höherer Anteil der im Schmieröl enthaltenen Schmutzpartikel in das Aufnahmemedium des Fliehkraftabscheiders 31 zentrifugiert wird. Die Anordnung des Fliehkraftabscheiders 31 in einem Rohrabschnitt der Nockenwelle 6 ermöglicht die Verwirklichung des Fliehkraftabscheiders 31 mit einer für das Auszentrifugieren von Schmutzteilchen vorteilhaft großen axialen Länge des Aufnahmemediums. Je größer die axiale Länge des Fliehkraftabscheiders 31, desto höher ist bei sonst gleichen Einbaubedingungen die Aufnahmekapazität für Schmutzpartikel und auch die Verweildauer des Schmieröls in dem vom Fliehkraftabscheider 31 umgebenen Abschnitt des Hohlraums 37. Dies gilt ebenso für den Fliehkraftabscheider 21 des ersten Ausführungsbeispiels und grundsätzlich auch für die Anordnung eines Fliehkraftabscheiders an einem anderen Rotationskörper als der Nockenwelle 6. Die Anordnung in der Nockenwelle 6 hat jedoch den Vorteil, dass der Fliehkraftabscheider 31, wie auch der Fliehkraftabscheider 21 des ersten Ausführungsbeispiels, auf dem Strömungsweg des Schmieröls nahe beim Phasenversteller 10 verwirklicht werden kann, wodurch einem nachträglichen Eintrag von Schmutzpartikeln in das gereinigte Schmieröl entgegengewirkt wird.

Die Filterstruktur 32 ist im Unterschied zum ersten Ausführungsbeispiel nicht im Wesentlichen innerhalb des Fliehkraftabscheiders 31 gebildet. Es kann zwar, wie in Figur 11 erkennbar, eine geringe axiale Überlappung von Fliehkraftabscheider 31 und Filterstruktur 32 vorhanden sein, die Filterstruktur 32 ragt jedoch über einen überwiegenden Teil ihrer axialen Länge über den Fliehkraftabscheider 31 in Richtung Phasenversteller 10 hinaus. Der Nachteil der im Vergleich zum ersten Ausführungsbeispiel größeren axialen Länge geht mit dem Vorteil einher, dass für die Filterstruktur 32 und somit das Filtermedium 33 in radialer Richtung Bauraum gewonnen wird und das Filtermedium 33 eine größere radiale Weite als das Filtermedium 23 des ersten Ausführungsbeispiels haben kann, wenn der Durchmesser des in der Nockenwelle 6 gebildeten Hohlraums 37 dem Durchmesser des Hohlraums 7 des ersten Ausführungsbeispiels entspricht.

Im zweiten Ausführungsbeispiel wird in radialer Richtung nochmals Bauraum dadurch gewonnen, dass die Filterstruktur 32 zu einem Teil axial aus der Nockenwelle 6 herausragt und in einen radial erweiterten Hohlraum eines Hohlkörpers 36 hineinragt. Der Hohlkörper 36 dient der Montage des Phasenverstellers 10 am Endabschnitt der Nockenwelle 6. Er ist zum Erhalt eines radial aufgeweiteten Endabschnitts 39 des Hohlraums 37 auf den äußeren Umfang der Nockenwelle 6 aufgepresst oder aufgeschraubt oder mit der Nockenwelle 6 andersartig drehunbeweglich verbunden. Der Hohlkörper 36 verlängert den hohlen Endabschnitt der Nockenwelle 6 und weitet deren Hohlraum 37 zum radial weiteren Hohlraum 39 auf, so dass dem größeren Durchmesser des Hohlraums 39 entsprechend Bauraum für das Steuerventil, von dem das Ventilgehäuse 13, das Sperrorgan 17 und die Sperrorganfeder 18 erkennbar sind, und die Filterstruktur 32 geschaffen wird. Der Rotor 12 des Phasenverstellers 10 ist mittels des Ventilgehäuses 13 drehunbeweglich mit dem Hohlkörper 36 und über diesen drehunbeweglich mit der Nockenwelle 6 verbunden.

Unter bestmöglicher Ausnutzung des Bauraums weist die Filterstruktur 32 und insbesondere deren Filtermedium 33 die Form eines Konusstumpfes auf, wobei das verjüngte Ende in den Hohlraum 37 der Nockenwelle 6 und das radial weitere Ende in den Hohlraum 39 des Hohlkörpers 36 ragen. Unterstützend kann die Nockenwelle 6, wie in Figur 11 erkennbar, an ihrem axial äußeren Ende aufgeweitet sein, um bereits dort den Hohlraum 37 aufzuweiten. Die Filterstruktur 32 ist am Ventilgehäuse 13 mittels Rastverbindung gehalten, wobei die Rastverbindung zwischen der Stützstruktur 34 und einem am Druckanschluss P geformten radialen Fortsatz des Ventilgehäuses 13 besteht. Der Filterauslass 35 und der Druckanschluss P fluchten wie im ersten Ausführungsbeispiel axial miteinander. Die Stützstruktur 34 weist dünne, radial abragende Arme 34a zur Zentrierung im Hohlraum 37, 39 auf. Die Arme 34a können auch einer axialen Abstützung der Filterstruktur 32 dienen, um die Filterstruktur 32 auch bei einem Lösen der mit dem Ventilgehäuse 13 bestehenden Rastverbindung axial in Position zu halten.

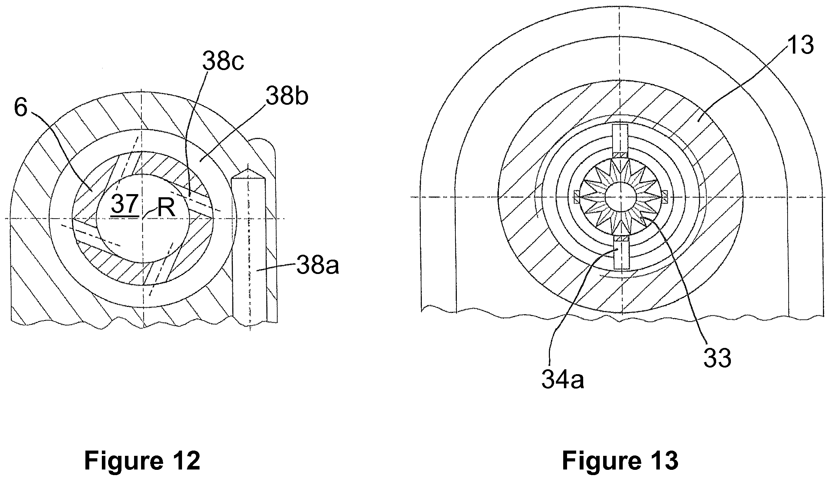

Figur 12 zeigt den Einlass in den Hohlraum 37 der Nockenwelle 6 im Querschnitt A-A der Figur 11. Erkennbar ist, wie bereits am ersten Ausführungsbeispiel erläutert, die tangentiale Zuführung 38a, die in einem im Motorbetrieb stillstehenden Körper, beispielsweise einem Lagerkörper für die Nockenwelle 6, gebildet ist. Die Zuführung 38a mündet in einen zwischen der Nockenwelle 6 und dem besagten Körper gebildeten Ringspalt 38b und strömt von diesem über durch die Nockenwelle 6 führende Einlasskanäle 38c in den Hohlraum 37. Die Einlasskanäle 38c weisen ebenfalls mit einer tangentialen Richtungskomponente zur Drehachse R. Somit nimmt auch im zweiten Ausführungsbeispiel der Drehimpuls der Schmierölströmung nicht nur aufgrund der Drehbewegung der Nockenwelle 6, sondern auch aufgrund der zweifach tangentialen Zuführung zu. Die Zuführung 38a und die Einlasskanäle 38c weisen zweckmäßigerweise in Drehrichtung der Nockenwelle 6.

Figur 13 zeigt den Querschnitt B-B der Figur 11. Erkennbar sind insbesondere das plissierte Filtermedium 33 und der zentrale Filterinnenraum sowie die Arme 34a der Stützstruktur 34.

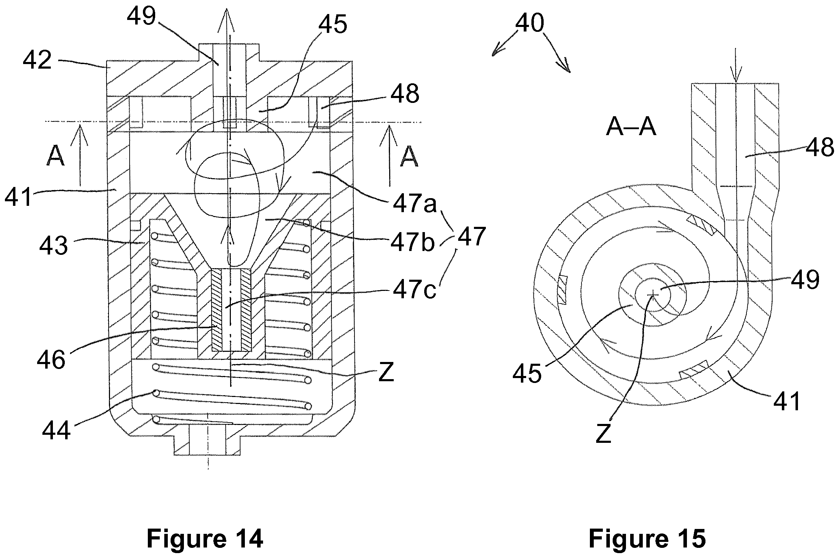

Die Figuren 14 und 15 zeigen einen Partikelabscheider 40 eines dritten Ausführungsbeispiels, Figur 14 in einem zentralen Längsschnitt und Figur 15 im Querschnitt A-A der Figur 14. Der Partikelabscheider 40 ist ein Zyklonabscheider. Er ist in einem Druckspeicher gebildet, über den der Phasenversteller 10 mit dem Schmieröl als Druckmedium versorgt wird. Nockenwellenphasenversteller mit Druckspeicher werden in der US 8,061,317 B2 und der US 9,200,546 B2 beschrieben, um nur Beispiele zu nennen.

Der Druckspeicher bzw. Zyklonabscheider 40 weist ein Gehäuse mit einem Gehäuseteil 41 und einem Deckel 42 auf, der das Gehäuseteil 41 axial einem Boden des Gehäuseteils 41 gegenüberliegend abschließt. Im Gehäuse 41, 42 ist ein Kolben 43 axial hin und her beweglich aufgenommen. Der Kolben 43 wird in Richtung auf den Deckel 42 von einer Feder 44 mit Federkraft beaufschlagt. Der Zyklonabscheider 40 ist stromauf des Phasenverstellers 10 in der Schmierölzuführung zum Phasenversteller 10 angeordnet, so dass Schmieröl nur durch den Zyklonabscheider 40 zum Phasenversteller 10 gelangen kann.

Das Schmieröl strömt durch einen Einlass 48 in einen im Zyklonabscheider 40 vom Gehäuseteil 41, dem Deckel 42 und dem Kolben 43 begrenzten Zyklonraum 47. Der Einlass 48 ist so gestaltet, dass das Schmieröl im Zyklonraum 47 eine Drehbewegung um eine zentrale Zyklonachse ausführt. Mit zunehmendem Druck am Einlass 48 verstärkt sich die Drehbewegung. Der Einlass 48 umfasst, wie in Figur 15 erkennbar, einen zur zentralen Längsachse des Zyklonabscheiders 40, der zentralen Zyklonachse Z, tangential weisenden Zuführkanal, der auch tangential in den Zyklonraum 47 mündet, so dass im Zyklonraum 47 besagte Wirbelströmung entsteht. Im Zyklonraum 47 wirkt das Schmieröl auf den Kolben 43 und bewegt diesen entgegen der Federkraft der Feder 44 in Richtung auf eine Vergrößerung des Zyklonraums 47.

Der Zyklonraum 47 weist einen axialen zylindrischen Wirbelabschnitt 47a, der axial vom Deckel 42 und der dem Deckel 42 zugewandten Vorderseite des Kolbens 43 begrenzt wird. An den Wirbelabschnitt 47a schließt sich ein axial orientierter Trichterabschnitt 47b an, in dem sich der Zyklonraum 47 allmählich verengt. Der Trichterabschnitt 47b mündet an seinem verengten Ende in einen Abscheideabschnitt 47c. Im Abscheideabschnitt 47c ist ein Aufnahmemedium 46 für abzuscheidende Schmutzpartikel angeordnet. Der Abscheideabschnitt 47c kann insbesondere, wie in Figur 14 erkennbar, axial zylindrisch sein. Das Aufnahmemedium 46 kleidet den Abscheideabschnitt 47c an dessen Umfangswand aus, so dass Schmutzpartikel aufgrund Fliehkraft in das Aufnahmemedium 46 gepresst und darin zurückgehalten werden. Das von den abgeschiedenen Schmutzpartikeln befreite Schmieröl strömt über einen Auslass 49 in Richtung auf den Druckanschluss P des Phasenverstellers 10 ab.

Das Aufnahmemedium 46 kann insbesondere dem Aufnahmemedium des ersten Aufführungsbeispiels entsprechend gebildet sein, also beispielsweise eine oder mehrere Lagen eines Fasermaterials und/oder eine oder mehrere Gewebelagen aufweisen und/oder ein Gradientenmedium sein.

Der Auslass 49 erstreckt sich durch den Deckel 42. Damit das seitlich einströmende Schmieröl nicht unmittelbar über den Auslass 49 abströmen kann, ist der parallel zur Zyklonachse Z aus dem Deckel 42 führende Auslass 49 in den Zyklonraum 47 hinein verlängert. Die Verlängerung wird durch einen Tauchstutzen 45 in der Art von bei Zyklonabscheidern bekannten Tauchrohren gebildet. Allerdings ragt der Tauchstutzen 45 nur über ein axial kurzes Stück in den Zyklonraum 47 hinein. Die Länge, mit der der Tauchstutzen 45 in den Zyklonraum 47 ragen kann, wird durch den Kolben 43 begrenzt.

Der Einlass 48 ist an einer Umfangswand des Zyklonraums 47, im Ausführungsbeispiel an einer Umfangswand des Gehäuseteils 41 gebildet. Der Auslass 49 erstreckt sich hingegen axial zentral längs der Zyklonachse Z durch den Deckel 42. Der Tauchstutzen 45 erstreckt sich axial in den Zyklonraum 47 und überlappt den Einlass 48 zweckmäßigerweise über dessen gesamte parallel zur Zyklonachse Z gemessene Höhe, um den Auslass 49 gegenüber dem Einlass 48 abzuschirmen.

Damit der Druckspeicher bzw. Zyklonabscheider 40 axial kurz bauen kann, bildet der Kolben 43 den Trichterabschnitt 47b und auch den Abscheideabschnitt 47c. Fällt der Förderdruck des Schmieröls unter einen durch die Feder 44 bestimmten Wert, schiebt die Feder 44 den Kolben 43 axial in Richtung auf den Deckel 42 bis gegen einen Anschlag. In der Anschlagposition ist die axiale Länge des Wirbelabschnitts 47a minimal. Der Tauchstutzen 45 kann in den Trichterabschnitt 47b hineinragen, wenn der Kolben 43 seine Anschlagposition einnimmt. Allerdings darf der Kolben 43 in der Anschlagposition nicht den Einlass 48 verschließen.

Der Zyklonabscheider 40 kann den Partikelabscheider 20 oder, bevorzugter, nur den Fliehkraftabscheider 21 des ersten Ausführungsbeispiels ersetzen. Der Zyklonabscheider 40 kann in anderen Ausführungen aber auch zusätzlich zum Partikelabscheider 20 des ersten Ausführungsbeispiels vorgesehen und in derartigen Ausführungen stromauf des Partikelabscheiders 20 angeordnet sein. Ersetzt der Zyklonabscheider 40 nur den Fliehkraftabscheider 21, ist dem Zyklonabscheider 40 nach wie vor eine Filterstruktur mit einem Filtermedium, vorzugsweise einem plissierten Filtermedium, wie beispielsweise im ersten Ausführungsbeispiel oder im zweiten Ausführungsbeispiel, nachgeordnet. Der Zyklonabscheider 40 kann auch stromauf des Partikelabscheiders 30 des zweiten Ausführungsbeispiels angeordnet sein, um dem Fliehkraftabscheider 31 bereits vorgereinigtes Schmieröl zuzuführen. In noch einer Abwandlung kann er den Fliehkraftabscheider 31 ersetzen.

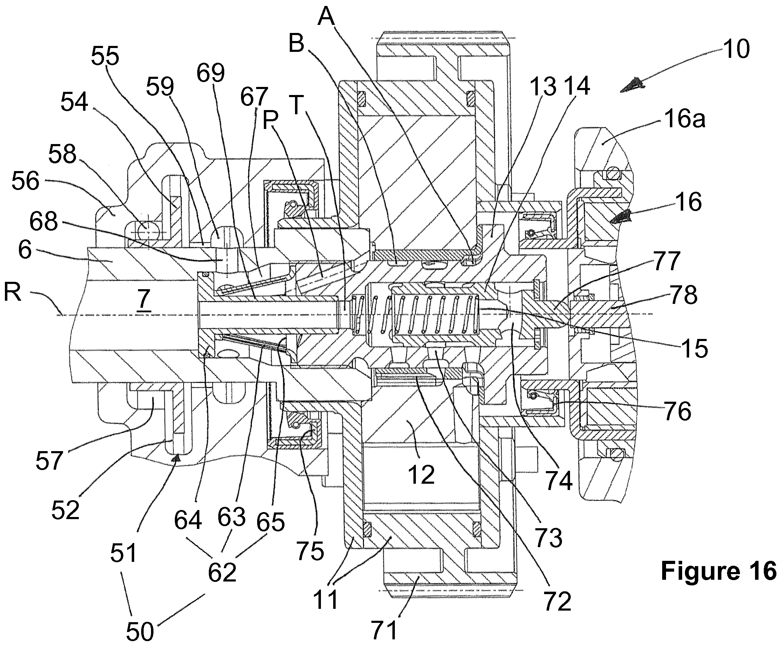

Figur 16 zeigt einen Partikelabscheider 50 eines vierten Ausführungsbeispiels. Der Partikelabscheider 50 wird im Zusammenwirken der Nockenwelle 6 mit einem nicht drehbaren Körper 56 gebildet. Die Nockenwelle 6 erstreckt sich axial durch den Körper 56. Der Körper 56 kann insbesondere ein Lagerkörper für die Nockenwelle 6 sein.

Die Nockenwelle 6 und der Körper 56 bilden miteinander einen Hohlraum 57, den die Nockenwelle 6 radial innen und der Körper 56 radial außen begrenzen. In den Hohlraum 57 mündet ein Einlass 58, durch den Schmieröl in den Hohlraum 57 einströmt. Der Einlass 58 kann wie zum ersten Ausführungsbeispiel erläutert oder wie die Zuführung 38a des zweiten Ausführungsbeispiels (Fig. 12) gestaltet sein, um dem Schmieröl unmittelbar beim Einströmen bereits einen Drehimpuls in die Drehrichtung der Nockenwelle 6 zu verleihen. Im Hohlraum 57 wird dem Schmieröl durch die drehende Nockenwelle 6 ein weiterer Drehimpuls verliehen. Der Drehimpuls kann noch dadurch verstärkt werden, dass eine Mitnahmestruktur 54 drehunbeweglich mit der Nockenwelle 6 verbunden ist. Die Mitnahmestruktur 54 kann Abragungen aufweisen, beispielsweise ein Flügelrad bilden, um dem Schmieröl bei der Umströmung oder Durchströmung eine Tangentialbeschleunigung und/oder Radialbeschleunigung aufzuprägen. Die Mitnahmestruktur 54 ist in einem Axialabschnitt des Hohlraums 57 angeordnet, in dem der Hohlraum 57 radial aufgeweitet ist, um einen Fliehkraftabscheider 51 zu bilden. Die Aufweitung ist mit 52 bezeichnet. Stromab der Mitnahmestruktur 54 und der Aufweitung 52 verengt sich der Hohlraum 57 zu einem Ringspalt 55, den das Schmieröl in axialer Richtung durchströmt. Der Ringspalt 55 verbindet den Hohlraum 57 mit einem Auslass 59 des Partikelabscheiders 50. Das Schmieröl strömt nach dem Durchströmen des Partikelabscheiders 50 durch dessen Auslass 59 in einen Hohlraum 7, der wie im ersten und im zweiten Ausführungsbeispiel in einem Endabschnitt der Nockenwelle 6 gebildet ist, an dem der Phasenversteller 10 montiert ist. Das Schmieröl gelangt somit durch den Auslass 59 und den Hohlraum 7 zum Druckanschluss P des Phasenverstellers 10.

Der Partikelabscheider 50 ist in der Art eines Dosierlagers gebildet. Der Ringspalt 55 stromab des Fliehkraftabscheiders 51 verhindert, dass mit Schmutzpartikeln beladenes Schmieröl den Hohlraum 57 einfach durchströmt. Die Mitnahmestruktur 54 wirkt ebenfalls in diesem Sinne. Die zurückgehaltenen Schmutzpartikel werden aufgrund Fliehkraft vor allem in die radiale Aufweitung 52 geschleudert und dort zurückgehalten. Aufgrund der Drehbewegung der Nockenwelle 6 relativ zum Körper 56 wird ein Zusetzen des Ringspalts 55 verhindert.

In der Aufweitung 52 kann ein Aufnahmemedium zur Aufnahme und Rückhaltung von Schmutzpartikeln angeordnet sein. Hinsichtlich des optionalen Aufnahmemediums gilt das bereits zum ersten Ausführungsbeispiel für den Fliehkraftabscheider 21 Gesagte. Das Aufnahmemedium kann insbesondere Fasermaterial enthalten oder aus Fasermaterial bestehen oder ein Gewebematerial enthalten oder aus Gewebematerial bestehen, um nur Beispiele zu nennen. In der Aufweitung 52 können stattdessen aber auch Aufnahmetaschen, beispielsweise entsprechend den Aufnahmetaschen 29 der Figur 9, gebildet sein.

Die Mitnahmestruktur 54 ist im Ausführungsbeispiel drehunbeweglich mit der Nockenwelle 6 verbunden. In einer Abwandlung kann anstelle der Mitnahmestruktur 54 eine fest mit dem Körper 56 verbundene Umlenkstruktur vorgesehen sein und um die Drehachse R verteilt Umlenkelemente entsprechend der Umlenkstruktur 26 des ersten Ausführungsbeispiels (Figuren 6 und 7) aufweisen, um das Schmieröl mit tangentialer Richtungskomponente zur Drehachse R umzulenken und dadurch die Drehbewegung und den Fliehkrafteffekt zu verstärken.

Der Partikelabscheider 50 erfüllt seine Abscheidefunktion wie in den anderen Ausführungsbeispielen in mehreren Abscheidestufen. Der Fliehkraftabscheider 51 bildet die erste Abscheidestufe. Stromab des Fliehkraftabscheiders 51 umfasst der Partikelabscheider 50 eine zweite Abscheidestufe 62, die wie im ersten und im zweiten Ausführungsbeispiel eine Filterstruktur 62 mit einem Filtermedium 63 und einer Stützstruktur 64 für das Filtermedium 63 ist. Das im Fliehkraftabscheider 51 vorgereinigte Schmieröl muss das Filtermedium 63 durchströmen, um zum Druckanschluss P des Phasenverstellers 10 zu gelangen.

Die Filterstruktur 62 entspricht in Bezug auf ihre Filtereigenschaften den Filterstrukturen 22 und 32 der vorherigen Ausführungsbeispiele. Das Filtermedium 63 ist wie im ersten und im zweiten Ausführungsbeispiel plissiert, ist also um die Filterachse, die mit der Drehachse R zusammenfällt, in Falten gelegt. Das Filtermedium 63 kann als solches den Filtermedien 23 und 33 des ersten und des zweiten Ausführungsbeispiels entsprechen.

Der Hohlraum 7 weitet sich in seinem dem Phasenversteller 10 zugewandten Endabschnitt radial auf, wodurch ein aufgeweiteter Hohlraum 67 und somit Bauraum für das Ventilgehäuse 13 des Steuerventils und auch für die Filterstruktur 62 gewonnen wird. Die Filterstruktur 62 ist in dem radial aufgeweiteten Endabschnitt des Hohlraums 7 aufgenommen. Sie stützt sich axial in die eine Richtung an einer zugewandten Stirnseite des Ventilgehäuses 13 und in die Gegenrichtung an einer Schulter der Nockenwelle 6 ab.

Der Hohlraum 67, in dem die Filterstruktur 62 angeordnet ist, weist einen Einlass 68 auf, der in Bezug auf die Drehachse R, die auch die zentrale Längsachse des Hohlraums 67 und eine zentrale Filterachse bildet, eine tangentiale Richtungskomponente aufweist. Das vom Auslass 59 des Hohlraums 57 in den Einlass 68 strömende Schmieröl erhält somit beim Durchströmen des Einlasses 68 eine tangentiale Richtungskomponente bezüglich der Drehachse R. Nimmt der Phasenversteller 10 Schmieröl ab, durchströmt das Schmieröl den Hohlraum 67 daher mit einer tangentialen Richtungskomponente. Entsprechend umströmt das Schmieröl auch die Filterstruktur 62. Das Schmieröl durchströmt das Filtermedium 63 daher nicht nur in die radiale Richtung, sondern umströmt das Filtermedium 63 auch in Umfangsrichtung sowie in Axialrichtung. Hierdurch wird eine Querstromfiltrierung bewirkt.

Eine Besonderheit des Phasenverstellers 10 besteht darin, dass im Fall einer Verstellung des Rotors 12 relativ zum Stator 11 die eine oder die mehreren Druckkammern, die bei der Verstellung im Druck entlastet werden, durch das Steuerventil hindurch nicht in die äußere Umgebung des Phasenverstellers 10 entlastet werden. Das Schmieröl der im Druck entlasteten Druckkammer(n) wird vom jeweiligen Arbeitsanschluss A oder B in den Hohlraum des Ventilgehäuses 13 oder einen im Ventilkolben 14 gebildeten Hohlraum und aus dem betreffenden Hohlraum durch den Tankanschluss T des Ventilgehäuses 13 abgeführt. Im Ausführungsbeispiel strömt das Schmieröl durch den Tankanschluss T in die hohle Nockenwelle 6, nämlich in deren Hohlraum 7, und strömt von dort in Richtung auf den Schmierölsumpf S (Figur 1) ab.

Der Druckanschluss P und der Tankanschluss T sind am gleichen axialen Ende des Ventilgehäuses 13 vorgesehen und erstrecken sich jeweils bis zu einer axialen Stirnseite des Ventilgehäuses 13. Der Tankanschluss T erstreckt sich bis in den Hohlraum des Ventilgehäuses 13. Der Hohlraum des Ventilkolbens 14 ist dem Tankanschluss T axial zugewandt. In Abhängigkeit von der Position, die der Ventilkolben 14 im Ventilgehäuse 13 einnimmt, ist somit entweder der Arbeitsanschluss B unter Umgehung des Ventilkolbens 14 durch den Hohlraum des Ventilgehäuses 13 hindurch mit dem Tankanschluss T oder stattdessen der Arbeitsanschluss A durch den zentralen Hohlraum des Ventilkolbens 14 mit dem Tankanschluss T verbunden. Der Hohlraum des Ventilkolbens 14 öffnet sich dem Tankanschluss T axial zugewandt in den Hohlraum des Ventilgehäuses 13.

Das Schmieröl wird bei Druckentlastung sowohl vom Arbeitsanschluss A als auch vom Arbeitsanschluss B durch den Tankanschluss T abgeführt.

Der Tankanschluss T ist als axialer Durchgang im Ventilgehäuse 13 gebildet. Der Tankanschluss T verbindet den Hohlraum des Ventilgehäuses 13, in dem der Ventilkolben 14 hin und her beweglich angeordnet ist, und auch den Hohlraum des Ventilkolbens 14 mit dem Hohlraum 7 der Nockenwelle 6.

Im Unterschied zum ersten und zum zweiten Ausführungsbeispiel weist die Filterstruktur 62 einen zentralen, rohrförmigen Abströmabschnitt 69 auf, durch den das Schmieröl vom Phasenversteller 10 abströmt. Der Abströmabschnitt 69 ist am Tankanschluss T des Steuerventils in axialer Flucht zu diesem angeordnet. Das Schmieröl kann somit widerstandsarm durch den im Ventilgehäuse 13 axial erstreckten Tankanschluss T und den sich hieran in axialer Flucht anschließenden Abströmabschnitt 69 abströmen. Vom Abströmabschnitt 69 gelangt das abströmende Schmieröl in den Hohlraum 7 der Nockenwelle 6 und strömt durch diesen in Richtung auf den Schmierölsumpf S (Figur 1) ab.

Der Phasenversteller 10 des fünften Ausführungsbeispiels wird über einen Riemenantrieb in fester Drehzahlbeziehung zur Kurbelwelle angetrieben. Der Stator 11 ist drehunbeweglich mit einem Riemenabtriebsrad 71 des Riemenantriebs verbunden. Im Ausführungsbeispiel ist das Riemenabtriebsrad 71 in einem Verfahren der Urformung in einem Stück mit einem Mittelteil des aus mehreren Teilen gefügten Stators 11 geformt. Das Riemenabtriebsrad 71 umgibt den eigentlichen Stator 11 über dessen äußeren Umfang.

Der Riemenantrieb ist als trockenlaufender Riemenantrieb verwirklicht. Das vom Phasenversteller 10 abströmende Schmieröl wird daher nicht wie im ersten und zweiten Ausführungsbeispiel über einen mit der äußeren Umgebung des Phasenverstellers 10 verbundenen Tankanschluss T (Figur 5), sondern innerhalb des Phasenverstellers 10 durch das hohle Ventilgehäuse 13 über den bereits erwähnten axialen Tankanschluss T und in axialer Verlängerung des Tankanschlusses T durch den Abströmabschnitt 69 abgeführt. Der Phasenversteller 10, d. h. dessen mit dem Schmieröl in Berührung kommenden Komponenten, ist daher zur Umgebung und somit zum Riemenantrieb abgedichtet. Die Abdichtung erfolgt axial beidseits der Anordnung aus Stator 11 und Rotor 12 mittels eines Wellendichtrings 75 auf der der Nockenwelle 6 zugewandten Seite und eines Wellendichtrings 76 auf der der Elektromagneteinrichtung 16 zugewandten Seite. Als Dichtring 75 und 76 dient jeweils ein Radial-Wellendichtring.

Mittels des Wellendichtrings 75 ist der hydraulische Bereich des Phasenverstellers 10 gegen den Körper 56 abgedichtet. Mittels des Wellendichtrings 76 ist der hydraulische Teil des Phasenverstellers 10 gegen ein Gehäuse 16a der Elektromagneteinrichtung 16 abgedichtet. Das Gehäuse 16a und der Körper 56 sind relativ zueinander nicht beweglich. Sie sind in nicht dargestellter Weise fest mit einem Maschinengehäuse des Verbrennungsmotors verbunden. Der Körper 56 kann insbesondere ein Gussbereich des Maschinengehäuses sein. Das Gehäuse 16a kann am Maschinengehäuse oder einer damit verbundenen anderen Struktur relativ zum Maschinengehäuse ortsfest montiert sein. Der Riemen kann somit in einem Hohlraum des Maschinengehäuses trocken, d. h. frei von Schmieröl, das vom Phasenversteller 10 abströmt, umlaufen.

Die Filterstruktur 62 weist dem Ventilgehäuse 13 axial zugewandt einen Filterauslass 65 auf, der sich um den Abströmabschnitt 69 erstreckt. Der Phasenversteller 10 weist einen Druckanschluss P mit mehreren um die Drehachse R verteilt angeordneten Druckanschlusskanälen auf, die dem Filterauslass 65 axial gegenüberliegend an der Stirnseite des Ventilgehäuses 13 münden und sich jeweils von der stirnseitigen Mündung zur Drehachse R schräg nach außen weisend durch das Ventilgehäuse 13 erstrecken. Durch den Filterauslass 65 zum Druckanschluss P und durch die Druckanschlusskanäle schräg nach außen strömendes Schmieröl wird am Außenumfang des Ventilgehäuses 13 in einem oder mehreren Verbindungskanälen 72 in einen oder mehrere Druckkanäle 73 geleitet, der oder die sich jeweils radial durch das Ventilgehäuse 13 in Richtung auf den Ventilkolben 14 erstreckt oder erstrecken. In Abhängigkeit von der Steuerposition, die der Ventilkolben 14 einnimmt, ist der Druckanschluss P über 72 und 73 mit entweder dem Arbeitsanschluss A oder dem Arbeitsanschluss B verbunden.

In Figur 16 nimmt der Ventilkolben 14 eine Steuerposition ein, in der der Druckanschluss P mit dem Arbeitsanschluss A verbunden ist. Der Arbeitsanschluss B ist in dieser Steuerposition mit dem im Ventilgehäuse 13 gebildeten Hohlraum und über diesen mit dem Tankanschluss T und dem Abströmabschnitt 69 der Filterstruktur 62 verbunden. Das mittels des Partikelabscheiders 50 gereinigte Schmieröl strömt somit durch den Druckanschluss P und den Arbeitsanschluss A in die dem Arbeitsanschluss A zugeordnete(n) Druckkammer(n), während das Schmieröl aus der oder den dem Arbeitsanschluss B zugeordneten Druckkammer(n) über den Tankanschluss T und den Abströmabschnitt 69 abströmt. Wird der Ventilkolben 14 mittels der Elektromagneteinrichtung 16 umgesteuert, nämlich gegen die Kraft der Ventilfeder 15 in die andere Steuerposition bewegt, wird die Verbindung zwischen dem oder den Druckkanälen 73 und dem Arbeitsanschluss A unterbrochen, und stattdessen wird der oder werden die Druckkanäle 73 mit dem Arbeitsanschluss B verbunden. Gleichzeitig wird der Arbeitsanschluss A über einen oder mehrere im Ventilkolben 14 gebildete(n) Durchgang oder Durchgänge 74 mit dem Hohlraum des Ventilgehäuses 13 verbunden, so dass das Schmieröl vom Arbeitsanschluss A durch den Tankanschluss T und den Abströmabschnitt 69 abströmen kann.

Die Filterstruktur 62 erfüllt daher eine Doppelfunktion. In ihrer Primärfunktion dient sie der Reinigung des dem Phasenversteller 10 zuzuführenden Schmieröls. In ihrer Sekundärfunktion dient sie der Abführung des vom Phasenversteller 10 in Ausübung seiner Stellfunktion verbrauchten Schmieröls.

Zur Geometrie der Filterstruktur 62 sei noch angeführt, dass sich das Filtermedium 63 um den rohrförmigen Abströmabschnitt 69 erstreckt. Zwischen dem Filtermedium 63 und dem Abströmabschnitt 69 verbleibt ein ringförmiger Filterinnenraum, der an einem dem Steuerventil, insbesondere dem Druckanschluss P axial zugewandten Ende, den Filterauslass 65 aufweist. Das Filtermedium 63 weitet sich in Richtung auf den Druckanschluss P auf.

Die Elektromagneteinrichtung 16 ist mit einer Motorsteuerung für den Verbrennungsmotor verbunden und erhält von der Motorsteuerung Steuersignale, auf deren Basis sie im Zusammenwirken mit der Ventilfeder 15 die Steuerposition des Ventilkolbens 14 bestimmt. Die Elektromagneteinrichtung 16 weist einen elektromagnetisch betätigbaren Aktuator 78 auf, der mit dem Ventilkolben 14 in einem axialen Druckkontakt ist und bei Bestromung einer Spule der Elektromagneteinrichtung 16 den Ventilkolben 14 gegen die Kraft der Ventilfeder 15 in die andere Steuerposition bewegt. Der Anschlag- bzw. Druckkontakt von Ventilkolben 14 und Aktuator 78 ist punktförmig. Zu diesem Zweck kann der Aktuator 78, wie für das erste Ausführungsbeispiel in Figur 5 gezeigt, an seinem dem Ventilkolben 14 zugewandten Ende kugelförmig oder andersartig bauchig in Richtung auf den Ventilkolben 14 gewölbt sein. Im fünften Ausführungsbeispiel weist der Ventilkolben 14 dem Aktuator 78 axial zugewandt ein kugelförmiges oder andersartig bauchig in Richtung auf den Aktuator 78 gewölbtes Ende 77 auf, während das dem Ventilkolben 14 zugewandte Ende des Aktuators 78 im Wesentlichen plan ist. Die Ausbauchung auf Seiten des Ventilkolbens 14 hat den Vorteil, dass die Kontaktstelle von Ventilkolben 14 und Aktuator 78 nicht wandert, wenn der Ventilkolben 14 und der Aktuator 78 im eingebauten Zustand nicht exakt axial miteinander fluchten.

Die Filtermedien 23, 33 und 63 der Ausführungsbeispiele und das Filtermedium einer Filterstruktur des erfindungsgemäßen Partikelabscheiders generell können einlagig oder mehrlagig sein. Sie können insbesondere eine oder mehrere Lagen eines Fasermaterials und/oder eine oder mehrere Lagen eines Gewebematerials und/oder eine oder mehrere Lagen einer Maschenware aufweisen. Sie können als Gradientenmedien gebildet sein. Als Gradientenmedien sind sie an der jeweiligen Anströmseite gröber als an der Abströmseite. Die Anströmseite kann wie in den Ausführungsbeispielen insbesondere vom Außenumfang des jeweiligen Filtermediums gebildet werden.

Die Aufnahmemedien der Fliehkraftabscheider und/oder die Filtermedien der Filterstrukturen des erfindungsgemäßen Partikelabscheiders können magnetisiertes Metallmaterial enthalten oder hieraus bestehen, um ferritische Partikel ungeachtet ihrer Partikelgröße zurückzuhalten. Ferritische Partikel sind insbesondere für elektromagnetische Aktuatoren von Phasenverstellern schädlich. Magnetisiertes Metallmaterial kann beispielsweise auch in der Aufweitung 52 des Fliehkraftabscheiders 51 des vierten Ausführungsbeispiels angeordnet sein. Der Partikelabscheider kann zusätzlich zu den erläuterten Abscheidestufen und insbesondere stromauf der ersten Abscheidestufe einen Ferritabscheider mit magnetisiertem Metallmaterial, das heißt eine Abscheidestufe für ferritische Partikel, umfassen. Zusätzlich oder stattdessen kann eine Abscheidestufe für ferritische Partikel in Strömungsrichtung des Schmieröls zwischen der ersten Abscheidestufe und der zweiten Abscheidestufe vorgesehen sein.

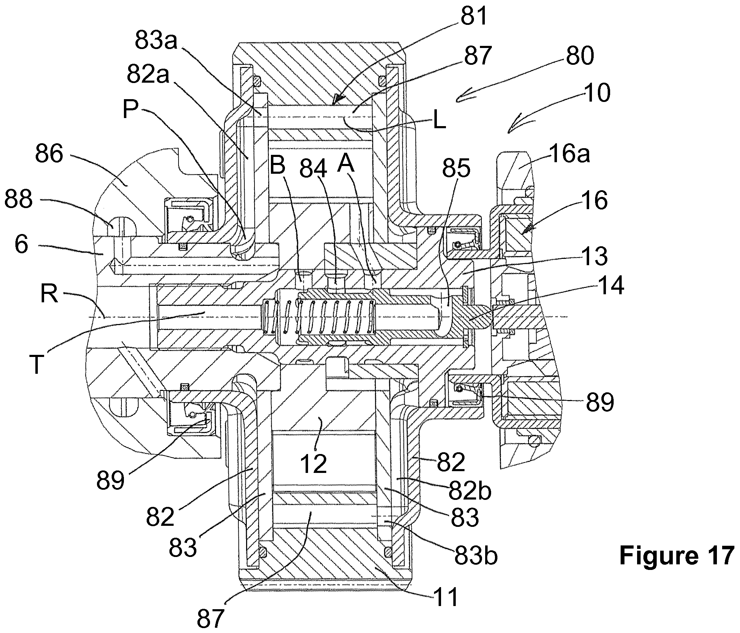

Figur 17 zeigt einen Phasenversteller 10 mit einem Partikelabscheider 80 eines fünften Ausführungsbeispiels. Der Partikelabscheider 80 besteht aus einem Fliehkraftabscheider 81, der in Hohlräumen 87 des Stators 11 gebildet ist. In Weiterentwicklungen kann der Partikelabscheider 80 eine oder mehrere weitere Abscheidestufen umfassen, beispielsweise eine stromauf des Fliehkraftabscheiders 81 angeordnete und/oder eine stromab des Fliehkraftabscheiders 81 angeordnete Abscheidestufe. So kann dem Fliehkraftabscheider 81 beispielsweise der Fliehkraftabscheider 51 mit Ringspalt 55 des vierten Ausführungsbeispiels vorgeschaltet und/oder eine Filterstruktur mit einem durchströmbaren Filtermedium nachgeschaltet sein.

Dem Phasenversteller 10 wird das Schmieröl durch ein oder mehrere Zuführkanäle 88 und einen oder mehrere hiermit verbundene Einlasskanäle 8 bei einem Druckanschluss P des Phasenverstellers 10 zugeführt. Der oder die Zuführkanäle 88 sind in einem Lagerkörper 86, der die Nockenwelle 6 lagert, geformt. An den oder die Zuführkanäle 88 schließt sich der oder schließen sich die mehreren im Endabschnitt der Nockenwelle 6 erstreckten Einlasskanäle 8 an, der oder die in den Druckanschluss P münden. Vom Druckanschluss P erstrecken sich um die Drehachse R verteilt mehrere Zuführkanäle 82a nach radial außen. Die Zuführkanäle 82a sind über jeweils einen Einlass 83a mit dem Partikelabscheider 80 verbunden.

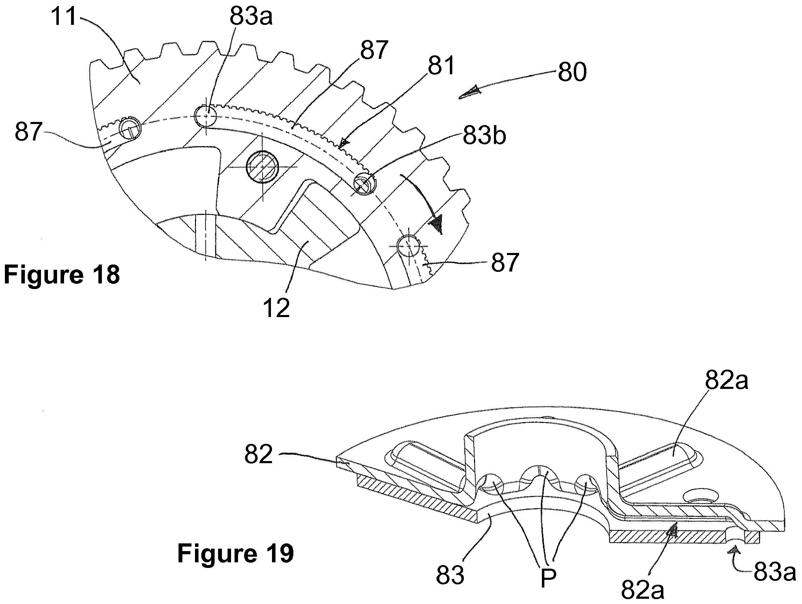

Figur 18 zeigt den Phasenversteller 10 des fünften Ausführungsbeispiels in einem Querschnitt. Dargestellt ist nur ein äußerer Umfangsbereich des Phasenverstellers 10, in dem sich der Partikelabscheider 80 befindet. Im Querschnitt ist auch die Ausbildung des Phasenverstellers 10 als Flügelmotor erkennbar.

Der Partikelabscheider 80 umfasst mehrere Hohlräume 87, die sich dem äußeren Umfang des Stators 11 nahe um die Drehachse R erstrecken. Die Hohlräume 87 erstrecken sich jeweils nur über ein Winkelsegment, sind also Hohlraumringsegmente. Die Hohlräume 87 unterteilen den Stator 11 in einen äußeren Statorring und einen Statorinnenbereich mit radial nach innen ragenden Flügeln. Statorring und Statorinnenbereich sind über Stützstrukturen verbunden, die sich in radialer Richtung zwischen benachbarten Hohlräumen 87 erstrecken.

Im Ausführungsbeispiel sind die Hohlräume 87 voneinander getrennt. Sie liegen in Umfangsrichtung auf gleicher Höhe nebeneinander, wobei sich zwischen zwei benachbarten Hohlräumen 87 jeweils eine der Stützstrukturen erstreckt. Der äußere Statorring, der Statorinnenbereich und die verbindenden Stützstrukturen können in einem Verfahren der Urformung, insbesondere durch Gießformen oder Pressen und Sintern, in einem Stück geformt werden. In Abwandlungen können die Hohlräume 87 jedoch auch in Umfangsrichtung miteinander verbunden sein und einen über 360° um die Drehachse R umlaufenden, zusammenhängenden Hohlraum 87 bilden. Stützstrukturen würden sich in derartigen Ausbildungen nicht mehr über die gesamte axiale Länge der im Ausführungsbeispiel voneinander separaten Hohlräume 87 erstrecken, sondern nur noch über einen Teil der axialen Länge. In noch einer Abwandlung können mittige Stützstrukturen wegfallen, wenn der äußere Statorring und der Statorinnenbereich jeweils an den Stirnseiten fest und dicht miteinander verbunden sind. In derartigen Abwandlungen würden der äußere Statorring, der Statorinnenbereich und die stirnseitigen Verbindungsstrukturen separat voneinander gefertigt und zum Stator miteinander gefügt werden.

Das Schmieröl durchströmt die Hohlräume 87 in axialer Richtung. Es wird dem jeweiligen Hohlraum 87 an einer Stirnseite, durch jeweils einen zugeordneten Einlass 83a zugeführt und strömt an der axial gegenüberliegenden anderen Stirnseite, durch einen zugeordneten Auslass 83b und einen hieran sich anschließenden, weiterführenden Abführkanal 82b ab. In den Abführkanälen 82b strömt das Schmieröl zurück in Richtung auf die Drehachse R und gelangt über ein oder mehrere Druckkanäle 84 in den Hohlraum des Ventilgehäuses 13. Der oder die Druckkanäle 84 bilden den Druckanschluss des Steuerventils.

Der Ventilkolben 14 nimmt in Figur 17 eine Steuerposition ein, in der der Druckanschluss P über den Fliehkraftabscheider 81 und den oder die Druckkanäle 84 mit dem Arbeitsanschluss A verbunden ist. Der Arbeitsanschluss B ist durch den Hohlraum des Ventilgehäuses 13 mit dem Tankanschluss T des Steuerventils verbunden und wird über den Tankanschluss T und weiterführende Kanäle im Druck entlastet. Wird der Ventilkolben 14 mittels der Elektromagneteinrichtung 16 in die andere Steuerposition umgesteuert, wird der Arbeitsanschluss B mit dem oder den Druckkanälen 84 verbunden, während der Arbeitsanschluss A über einen oder mehrere im Ventilkolben 14 gebildete Durchgänge 85 mit dem Tankanschluss T verbunden wird, so dass die dem Arbeitsanschluss A zugeordneten Druckkammern im Druck entlastet werden.

In jeden der Hohlräume 87 münden ein Einlass 83a und ein Auslass 83b, so dass das Schmieröl vom jeweiligen Einlass 83a in Drehrichtung des Stators 11 zum jeweiligen Auslass 83b strömt. Nimmt der Phasenversteller 10 Schmieröl ab, dreht sich das in den Hohlräumen 87 befindliche Schmieröl daher nicht nur mit der Drehgeschwindigkeit des Stators 11, sondern weist darüber hinaus auch eine in die Drehrichtung weisende Zusatzgeschwindigkeit auf.

In den Hohlräumen 87 kann die äußere Umfangswand an ihrer Oberfläche strukturiert sein, wie in Figur 18 beispielhaft erkennbar, um durch die Zentrifugalkraft nach außen geschleuderte Partikel sicherer als mit einer glatten Umfangswand im jeweiligen Hohlraum 87 zurückzuhalten. Grundsätzlich können die äußeren Umfangswände der Hohlräume 87 aber auch glatt sein, da die Schmutzpartikel durch das Auszentrifugieren aneinander haften und sich auch an einer vergleichsweise glatten Umfangswand allmählich eine Art Schmutzpartikelschlamm oder -kuchen bildet. Der Stator 11 kann in dem oder den Hohlräumen 87 beispielsweise unmittelbar beim Urformen mit einer Oberflächenstrukturierung versehen werden.

In einer vorteilhaften Weiterbildung kann an der äußeren Umfangswand des jeweiligen Hohlraums 87 ein Aufnahmemedium der erläuterten Art angeordnet sein, beispielsweise Fasermaterial, um die Rückhalteeigenschaften des Fliehkraftabscheiders 81 zu verbessern.

In Figur 19 sind eine Außenstruktur 82 und eine Innenstruktur 83 dargestellt, die gemeinsam den Druckanschluss P, die vom Druckanschluss P nach radial außen zum Fliehkraftabscheider 81 führenden Zuführkanäle 82a und die Einlässe 83a bilden. Die Strukturen 82 und 83 sind Flächenstrukturen, die im zusammengebauten Zustand des Phasenverstellers 10 axial aneinander liegend drehunbeweglich mit einem Mittelteil des Stators 11 gefügt sind und die zwischen dem Stator 11 und dem Rotor 12 gebildeten Druckkammern an einer Stirnseite abschließen. Eine ebensolche Anordnung aus einer Außenstruktur 82 und einer Innenstruktur 83 ist an der anderen Stirnseite des Stators 11 vorgesehen und mit dem Mittelteil in gleicher Weise drehunbeweglich verbunden, um die Druckkammern an der anderen Stirnseite abzuschließen und die Auslässe 83b und die weiterführenden Abführkanäle 82b zu bilden (Figur 17). Die Zuführkanäle 82a werden durch Ausbuchtungen der Außenstruktur 82 gebildet. Die Innenstruktur 83 kann wie im Ausführungsbeispiel einfach als plane Scheibe gebildet sein, um auf konstruktiv einfache Weise die Abführkanäle 82b nach innen, zu den Druckkammern hin, zu verschließen. Die weiterführenden Abführkanäle 82b und Auslässe 83b aus den Hohlraumringsegmenten 87 werden an der anderen Stirnseite in gleicher Weise durch die dortigen Strukturen 82 und 83 gebildet.

Der Phasenversteller 10 wird wie im vierten Ausführungsbeispiel mittels eines Riemenantriebs angetrieben. Der Stator 11 ist an seinem Außenumfang mit einer Verzahnung für den Zahneingriff mit dem Antriebsriemen versehen. Es handelt sich wie im vierten Ausführungsbeispiel um einen trockenlaufenden Riemen. Entsprechend ist der Phasenversteller 10 sowohl an seiner der Nockenwelle 6 zugewandten Stirnseite als auch an seiner gegenüberliegenden Stirnseite, an der die Elektromagneteinrichtung 16 angeordnet ist, mittels jeweils eines Radial-Wellendichtrings 89 abgedichtet.

### Bezugszeichen

- 1: Schmierölpumpe
- 2: Kühler
- 3: Hauptölabscheider
- 3a: Bypass-Ventil
- 4: Nebenstromölabscheider
- 5: Schmierölgalerie
- 5ᵢ: Schmierölverbrauchsstellen
- 6: Nockenwelle
- 7: Hohlraum
- 8: Einlass, Einlasskanal
- 9: Hohlraumvolumen
- 10: Nockenwellenphasenversteller
- 11: Stator
- 12: Rotor
- 13: Ventilgehäuse
- 14: Ventilkolben
- 15: Ventilfeder
- 16: Elektromagneteinrichtung
- 16a: Gehäuse
- 17: Sperrorgan
- 18: Sperrorganfeder
- 19: Stützstruktur
- 20: Partikelabscheider
- 21: Fliehkraftabscheider, Aufnahmemedium
- 22: Filterstruktur
- 23: Filtermedium
- 24: Stützstruktur
- 25: Filterauslass
- 26: Umlenkstruktur
- 26a: Montagering
- 27: Strömungsleitstruktur
- 28: Fliehkraftabscheider
- 29: Aufnahmetaschen
- 29a: Montagering
- 30: Partikelabscheider
- 31: Fliehkraftabscheider, Aufnahmemedium
- 32: Filterstruktur
- 33: Filtermedium
- 34: Stützstruktur
- 34a: Arm
- 35: Filterauslass
- 36: Hohlkörper
- 37: Hohlraum
- 38: Einlass
- 38a: Zuführung
- 38b: Ringkanal
- 38c: Einlasskanal
- 39: Hohlraum
- 40: Partikelabscheider, Zyklonabscheider
- 41: Gehäuseteil
- 42: Deckel
- 43: Kolben
- 44: Feder
- 45: Tauchstutzen
- 46: Aufnahmemedium
- 47: Zyklonraum
- 47a: Wirbelabschnitt
- 47b: Trichterabschnitt
- 47c: Abscheideabschnitt
- 48: Einlass
- 49: Auslass
- 50: Partikelabscheider
- 51: Fliehkraftabscheider
- 52: Aufweitung
- 53: -
- 54: Umlenk- oder Mitnahmestruktur
- 55: Ringspalt
- 56: Körper
- 57: Hohlraum
- 58: Einlass
- 59: Auslass
- 60: -
- 61: -
- 62: Filterstruktur
- 63: Filtermedium
- 64: Stützstruktur
- 65: Filterauslass
- 66: -
- 67: Hohlraum
- 68: Einlass
- 69: Abströmabschnitt
- 70: -
- 71: Riemenabtriebsrad
- 72: Verbindungskanal
- 73: Druckkanal
- 74: Durchgang
- 75: Wellendichtring
- 76: Wellendichtring
- 77: Ventilkolbenende
- 78: Aktuator
- 79: -
- 80: Partikelabscheider
- 81: Fliehkraftabscheider
- 82: Außenstruktur
- 82a: Zuführkanal
- 82b: Abführkanal
- 83: Innenstruktur
- 83a: Einlass
- 83b: Auslass
- 84: Druckkanal, Druckanschluss
- 85: Durchgang
- 86: Körper
- 87: Hohlraum
- 88: Zuführkanal
- 89: Wellendichtung

- A: Arbeitsanschluss
- B: Arbeitsanschluss
- P: Druckanschluss
- R: Drehachse, Längsachse
- S: Schmierölreservoir
- T: Tankanschluss
- Z: Zyklonachse

## Patentansprüche

1. Partikelabscheidesystem zur Versorgung eines hydraulischen
Nockenwellenphasenverstellers mit gereinigtem Motorschmieröl als Druckmedium, wobei der Nockenwellenphasenversteller (10) einen drehantreibbaren Stator (11), einen mit einer Nockenwelle (6) verbundenen oder verbindbaren Rotor (12) und ein Steuerventil (13-19) zur hydraulischen Verstellung der Drehwinkelposition des Rotors (12) relativ zum Stator (11) aufweist, das Partikelabscheidesystem umfassend:
1.1 einen Hauptölabscheider (3), der im Strom des Motorschmieröls stromauf einer Schmierölgalerie (5) eines mit dem Motorschmieröl zu versorgenden Verbrennungsmotors angeordnet ist und für Partikel mit einer Partikelgröße P1 einen Abscheidegrad von wenigstens 50% und bei einer Partikelgröße P2 > P1 einen Abscheidegrad von wenigstens 90% aufweist,
1.2 und einen Partikelabscheider (20; 30; 40; 50; 80), der stromab des Hauptölabscheiders (3) und stromauf des Nockenwellenphasenverstellers (10) oder des Steuerventils (13-19) angeordnet ist, um das Motorschmieröl für den Nockenwellenphasenversteller (10) zu reinigen,
1.3 wobei der Partikelabscheider (20; 30; 40; 50; 80) bei einer Partikelgröße P3, mit P1 < P3 < 100 µm, einen Abscheidegrad von 50% aufweist.

2. Partikelabscheidesystem nach dem vorhergehenden Anspruch, wobei der Partikelabscheider (20; 30; 40; 50; 80) bei einer Partikelgröße P4, mit P2 < P4 < 100 µm, einen Abscheidegrad von wenigstens 90% aufweist.

3. Partikelabscheidesystem nach einem der vorhergehenden Ansprüche, wobei der Abscheidegrad des Partikelabscheiders (20; 30; 40; 50; 80) bei der Partikelgröße P2 höchstens 30%, vorzugsweise höchstens 10%, ist.

4. Partikelabscheidesystem nach einem der vorhergehenden Ansprüche, wobei die Abscheidegrade zumindest für Partikel aus einem Material aus der Gruppe von Materialien bestehend aus Sand, Korund, Metall und Metalllegierungen gelten, wobei das Metall und die Metalllegierungen insbesondere Eisen, Eisenbasislegierungen, Aluminium und Aluminiumbasislegierungen sein können.

5. Partikelabscheidesystem nach einem der vorhergehenden Ansprüche, wobei der Partikelabscheider (20; 30; 40; 50) eine erste Abscheidestufe (21; 28; 31; 40; 51) zur Abscheidung von Partikeln und stromab der ersten Abscheidestufe eine zweite Abscheidestufe (22; 32; 62) zur Abscheidung von Partikeln umfasst und wenigstens die erste Abscheidestufe (21; 28; 31; 40; 51), optional auch die zweite Abscheidestufe (22; 32; 62), in Strömungsrichtung des Motorschmieröls stromauf des
Nockenwellenphasenverstellers (10) oder stromauf des Steuerventils (13-19) angeordnet ist.

6. Partikelabscheidesystem nach dem vorhergehenden Anspruch, wobei die zweite Abscheidestufe (22; 32; 62) dafür eingerichtet ist, kleinere Partikel als die erste Abscheidestufe (21; 28; 31; 40; 51) abzuscheiden.

7. Partikelabscheidesystem nach einem der vorhergehenden Ansprüche, wobei der Partikelabscheider (20; 30; 50), beispielsweise die zweite Abscheidestufe nach Anspruch 5, eine Filterstruktur (22; 32; 62) und die Filterstruktur (22; 32; 62) ein vom Motorschmieröl durchströmbares Filtermedium (23; 33; 63) zur Rückhaltung von im Motorschmieröl enthaltenen Partikeln umfasst, wobei das Filtermedium (23; 33; 63) insbesondere plissiert sein kann.

8. Partikelabscheidesystem nach dem vorhergehenden Anspruch, wobei das Filtermedium (23; 33; 63) eine Längsachse (R) der Filterstruktur (22; 32; 62) umgibt, beispielsweise über einen Winkel von 360° umlaufend, und in Filterlängsrichtung zylindrisch ist oder sich aufweitet, beispielsweise konisch.

9. Partikelabscheidesystem nach einem der vorhergehenden Ansprüche, wobei
- das Motorschmieröl dem Nockenwellenphasenversteller (10) durch einen Hohlraum (7; 37, 39; 47; 57, 67; 87), der von einem oder mehreren Körpern (6; 6, 36; 41, 42; 6, 56; 11) begrenzt wird, zuführbar ist
- und wobei
- eine Strömungsleiteinrichtung (8, 26; 38; 48; 54, 58, 68; 83a, 83b) vorgesehen ist, die dem Motorschmieröl beim Einströmen in den Hohlraum und/oder beim Durchströmen des Hohlraums einen Drehimpuls um eine in Bezug auf den Hohlraum (7; 37, 39; 47; 57, 67; 87) zentrale Längsachse (R) verleiht,
und/oder
- ein den Hohlraum (7; 37, 39; 57, 67; 87) begrenzender Körper (6; 6, 36; 11) ein Rotationskörper ist, der im Betrieb des Nockenwellenphasenverstellers (10) um eine in Bezug auf den Hohlraum (7; 37, 39; 57, 67; 87) zentrale Längsachse (R) dreht.

10. Partikelabscheidesystem nach dem vorhergehenden Anspruch in Kombination mit Anspruch 7, wobei die Filterstruktur (22; 32; 62) im Hohlraum (7; 37, 39; 67) angeordnet ist.

11. Partikelabscheidesystem nach einem der zwei unmittelbar vorhergehenden Ansprüche, wobei der Partikelabscheider (20; 30; 40; 50; 80), beispielsweise die erste Abscheidestufe nach Anspruch 5, einen im Hohlraum (7; 37, 39; 47; 57, 67; 87) um die zentrale Längsachse (R) erstreckten Fliehkraftabscheider (21; 28; 31; 46; 51; 81) zur Aufnahme und Rückhaltung von unter Fliehkraft in den Fliehkraftabscheider (21; 28; 31; 46; 51; 81) gelangenden Partikeln umfasst.

12. Partikelabscheidesystem nach dem vorhergehenden Anspruch, wobei der Fliehkraftabscheider (21; 28; 31; 46; 51; 81) eine den Hohlraum (7; 37, 39; 47; 57; 87) radial außen umgebende Umfangswand auskleidet und/oder mit der Umfangswand Aufnahmetaschen (29) für Partikel bildet und/oder die Umfangswand eine Oberflächenstrukturierung (81) zur Rückhaltung von Partikeln aufweist.

13. Partikelabscheidesystem nach einem der zwei unmittelbar vorhergehenden Ansprüche, wobei der Fliehkraftabscheider (21; 28; 31; 51) eine axiale Länge von wenigstens 20 cm oder wenigstens 30 cm oder wenigstens 40 cm aufweist.

14. Partikelabscheidesystem nach einem der fünf unmittelbar vorhergehenden Ansprüche, wobei die Strömungsleiteinrichtung (8, 26; 38; 48; 54, 58, 68; 83a, 83b) einen Einlass (8; 38; 48; 58, 68; 83a, 83b) des Hohlraums (7; 37, 39; 47; 57, 67; 87) umfasst und der Einlass (8; 38; 48; 58, 68; 83a, 83b) so gestaltet ist, dass das Motorschmieröl mit einer in Bezug auf die zentrale Längsachse (R) tangentialen Richtungskomponente in den Hohlraum (7; 37, 39; 47; 57, 67; 87) strömt.

15. Partikelabscheidesystem nach einem der sechs unmittelbar vorhergehenden Ansprüche, wobei die Strömungsleiteinrichtung (8, 26; 54, 58, 68) eine oder mehrere im Hohlraum (7; 57) befindliche Umlenkstrukturen (26; 54) umfasst, die das Motorschmieröl im Hohlraum (7; 57) in eine bezüglich der zentralen Längsachse (R) tangentiale Richtung umlenkt oder umlenken.

16. Partikelabscheidesystem nach einem der sieben unmittelbar vorhergehenden Ansprüche, wobei sich der Hohlraum (87) im Stator (11) einem äußeren Umfang des Stators (11) nahe erstreckt und die Drehachse (R) des Stators (11) die in Bezug auf den Hohlraum (87) zentrale Längsachse (R) bildet.

17. Partikelabscheidesystem nach einem der vorhergehenden Ansprüche, wobei der Partikelabscheider einen Zyklonabscheider (40) umfasst und der Zyklonabscheider (40) einen Wirbelabschnitt (47a) mit einer Zyklonachse (Z) und einem Einlass (48) für ein Einströmen des Motorschmieröls mit tangentialer Richtungskomponente zur Zyklonachse (Z), einen mit dem Wirbelabschnitt (47a) verbundenen axialen Abscheideabschnitt (47c) zur Aufnahme von im Wirbelabschnitt (47a) axial in Richtung auf den Abscheideabschnitt (47c) strömenden Partikeln und einen Auslass (49) für das Schmieröl umfasst.

18. Partikelabscheidesystem nach dem vorhergehenden Anspruch, wobei ein stromauf des Nockenwellenphasenverstellers (10) angeordneter Druckspeicher für das Schmieröl den Zyklonabscheider (40) bildet.

19. Partikelabscheidesystem nach einem der vorhergehenden Ansprüche, wobei
- das Motorschmieröl dem Nockenwellenphasenversteller (10) durch einen um eine Drehachse (R) erstreckten, von einem ersten Körper (6) radial innen und einen den ersten Körper (6) umgebenden zweiten Körper (56) radial außen begrenzten Hohlraum (57) zuführbar ist,
- wenigstens einer der Körper (6, 56) um die Drehachse (R) absolut und relativ zum anderen Körper (56, 6) drehantreibbar ist,
- der Hohlraum (57) einen Fliehkraftabscheider (51) zur Aufnahme von unter Fliehkraft in den Fliehkraftabscheider (51) gelangenden Partikeln bildet und/oder enthält
- und zwischen dem ersten Körper (6) und dem zweiten Körper (56) stromab des Fliehkraftabscheiders (51) ein um die Drehachse (R) erstreckter Ringspalt (55) verbleibt, der den Hohlraum (57) begrenzt und den das Schmieröl auf dem Weg zum Nockenwellenphasenversteller (10) durchströmen muss.

20. Partikelabscheidesystem nach einem der vorhergehenden Ansprüche, wobei der Partikelabscheider (20; 30; 40; 50; 80) magnetisches Material zur Rückhaltung ferritischer Partikel umfasst.
